(19) Europäisches Patentamt
European Patent Office
Office européen des brevets

(11) EP 2 853 568 A1

(12) **EUROPEAN PATENT APPLICATION**

(43) Date of publication:
**01.04.2015 Bulletin 2015/14**

(21) Application number: **14182413.6**

(22) Date of filing: **27.08.2014**

(51) Int Cl.:
***C09D 11/037*** (2014.01) ***C09D 11/10*** (2014.01)
***C09D 11/324*** (2014.01) ***C09D 11/54*** (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 JP 2013205477**

(71) Applicant: **Fujifilm Corporation**
**Minato-ku**
**Tokyo (JP)**

(72) Inventors:
- **Ikoshi, Masao**
  **Ashigarakami-gun, Kanagawa 258-8577 (JP)**
- **Kawai, Masaharu**
  **Ashigarakami-gun, Kanagawa 258-8577 (JP)**

(74) Representative: **Morpeth, Fraser Forrest**
**Fujifilm Imaging Colorants Limited**
**Intellectual Property Group**
**P.O. Box 42**
**Hexagon Tower**
**Blackley, Manchester M9 8ZS (GB)**

(54) **Ink for inkjet recording, ink set, image forming method and maintenance method**

(57) An ink for inkjet recording is provided, the ink including water, a coated carbon black that includes a carbon black pigment having a TEA adsorption capacity of 0.5 meq/g or more and a resin that coats the carbon black, resin particles, and a water-soluble organic solvent having an SP value of less than 28 at a content of 2% by mass or more with respect to the total mass of the ink for inkjet recording, wherein a product of a glass transition temperature of the resin particles and the TEA adsorption capacity of the carbon black pigment is 40 °C·meq/g or more. An ink set, an image forming method, and a maintenance method are also provided.

FIG.1

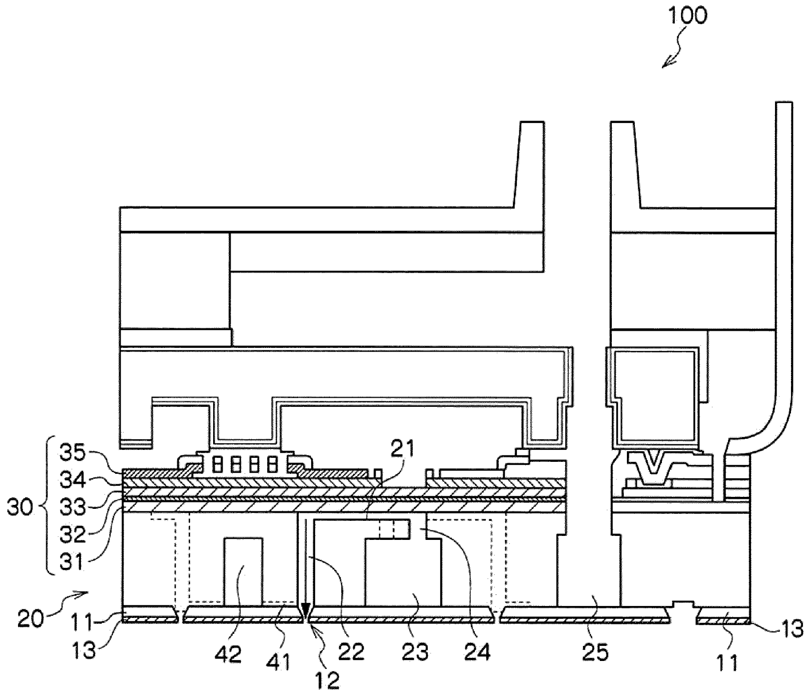




Printed by Jouve, 75001 PARIS (FR)

## Description

BACKGROUND OF THE INVENTION

Technical Field

The present invention relates to an ink for inkjet recording, an ink set, an image forming method, and a maintenance method.

Description of the Related Art

Inkjet technology is one of the known image recording methods for recording color images. Although inkjet technology has been applied in the fields of office printers, domestic printers and the like, in recent years, there is an increasing trend of applications in the field of commercial printing.

Regarding the ink (ink composition) used in inkjet technology, inks containing pigments (pigment inks) are widely used.

In connection with pigment inks, attempts have been made to modify the surface of pigments by various methods, or to control the properties of pigments. For example, in regard to a water-based pigment ink containing carbon black, a polymeric dispersant, a water-soluble solvent and water as main components, it has been disclosed that adjusting the volatile portion of carbon black from 9% by mass to 25% by mass improves long-term storage stability at high temperatures, and also that print quality is improved by preventing feathering in the case of using the water-based pigment ink as an ink for inkjet recording (see, for example, Japanese Patent Application Laid-Open (JP-A) No. H10-60328).

Furthermore, various image forming methods have been investigated in order to stabilize the ejectability of an inkjet ink when the ink is discharged from an inkjet head. For example, in order to make ink ejectability more favorable, providing a water-repellent film on the surface of the inkjet head is known. However, there have been occasions in which, depending on the circumstances of the use of ink, the water-repellant film deteriorates, and the ejection stability of ink cannot be maintained.

In this regard, when printing is performed using an inkjet recording apparatus equipped with a recording head having a water repellent film formed from a fluorine-based resin on the ink ejection port surface, in order to obtain excellent print density without lowering the water repellent function of the ink ejection port surface, (1) a water-based ink for an inkjet recording apparatus equipped with a recording head having a water repellent film formed from a fluorine-based resin layer on the ink ejection port surface, the water-based ink for inkjet recording including crosslinked polymer particles containing channel black, and the channel black having a DBP oil absorption of 120 to 180 ml/100 g; and (2) inkjet recording using the water-based ink (see, for example, JP-A No. 2010-126602), have been disclosed.

SUMMARY OF THE INVENTION

Conventional inks for inkjet recording that include resin particles and a water-soluble organic solvent are excellent in scratch resistance of images and image quality; however, in a case in which a conventional ink adheres to a nozzle surface and becomes thickened, or the adhered ink is solid-dried at the nozzle surface, since the thickened or solidified ink has low redispersibility, maintenance characteristics tend to deteriorate.

When an ink has poor maintenance characteristics, there are occasions in which the amount of wiping in a maintenance process is increased, and at that time, there may be a problem in that a pigment dispersion of black ink including a carbon black pigment in particular serves as a polishing agent and polishes a liquid repellent film provided on the inkjet head surface and the liquid repellent film deteriorates.

The invention has been made under such circumstances, and an object of the invention is to provide an ink for inkjet recording and an ink set, with which excellent maintenance characteristics can be exhibited while scratch resistance of images can be favorably maintained, and deterioration of the liquid repellent film provided on the inkjet head surface can be suppressed. Another object of the invention is to provide an image forming method with which an image with fewer defects such as occurrence of streaks can be stably formed using the ink for inkjet recording described above, and a maintenance method.

According to a first aspect of the invention, an ink for inkjet recording is provided, the ink including water, a coated carbon black pigment that includes a carbon black pigment having a TEA adsorption capacity of 0.5 meq/g or more and a resin that coats the carbon black pigment, resin particles, and a water-soluble organic solvent having an SP value of less than 28 at a content of 2% by mass or more with respect to a total mass of the ink for inkjet recording, wherein the product of the glass transition temperature of the resin particles and the TEA adsorption capacity of the carbon black pigment is 40 °C·meq/g or more.

According to a second aspect of the invention, an ink set is provided, the ink set including the ink for inkjet recording according to the first aspect of the invention, and a maintenance liquid including an organic solvent and water.
According to a third aspect of the invention, an image forming method is provided, the image forming method including ejecting the ink for inkjet recording according to the first aspect of the invention onto a recording medium using an inkjet head having a liquid repellent film.
According to a forth aspect of the invention, a maintenance method is provided, the maintenance method including ejecting the ink for inkjet recording according to the first aspect of the invention, using an inkjet head having a liquid repellent film, and then wiping the ink remaining on the liquid repellent film.

BRIEF DESCRIPTION OF DRAWINGS

FIG. 1 is a schematic cross-sectional diagram illustrating an example of the internal structure of an inkjet head; and
FIG. 2 is a schematic diagram illustrating an example of the ejection port arrangement of a nozzle plate.

DETAILED DESCRIPTION OF THE INVENTION

The articles "a" and "an" are used to refer to elements described herein. This is done merely for convenience and to give a general sense of the scope of the invention. The articles "a" and "an" should be read to include "one or more" of elements to which they refer, unless it is clear from the context that such a meaning is not intended. For example, when a single item is described herein, more than one item may be used in place of the single item. Similarly, where more than one of an item is described herein, a single one of the item may be substituted for that more than one item.
In a case in which the amount of a component in the composition is indicated in the present disclosure, when there are plural substances corresponding to the component in the composition, the indicated amount means the total amount of the plural substances present in the composition, unless specifically stated otherwise. For example, in a case in which the amount of a structural unit (for example, structural unit A) in a polymer is indicated in the present disclosure, when there are plural kinds of structural units corresponding to the structural unit (structural unit A), the indicated amount means the total amount of the plural kind of structural units in the polymer, unless specifically stated otherwise.

[Ink for Inkjet Recording]

The ink for inkjet recording according to the invention includes water; a coated carbon black pigment that includes a carbon black pigment having a triethanolamine (TEA) adsorption capacity of 0.5 meq/g or more and a resin that coats the carbon black pigment (the "coated carbon black pigment that includes a carbon black pigment having a TEA adsorption capacity of 0.5 meq/g or more and a resin that coats the carbon black pigment" may also be referred to as a carbon black pigment having a TEA adsorption capacity of 0.5 meq/g or more that is coated with a resin); resin particles; and a water-soluble organic solvent having an SP value of less than 28 at a content of 2% by mass or more with respect to the total mass of the ink for inkjet recording. In the ink for inkjet recording according to the invention, the product of the glass transition temperature (Tg) of the resin particles and the TEA adsorption capacity of the carbon black pigment is 40°C·meq/g or more.
The ink for inkjet recording may further include a polymerizable compound, a polymerization initiator, and the like as necessary. The ink for inkjet recording may also be referred to simply as "ink".
The resin used for coating the carbon black pigment and the resin used for the resin particles may be the same or may be different from each other.
With respect to the resin particles in the ink for inkjet recording including a water-soluble organic solvent having an SP value of less than 28, in a case in which the Tg (glass transition temperature) is low, the ink is prone to adhere to the liquid repellent film of the inkjet head, the number of wiping required for ink removal is increased, and maintenance characteristics deteriorate. On the other hand, in a case in which the Tg of the resin particles is high, the ink is more easily redispersed, removal of attached ink is made easier, and favorable maintenance characteristics can be obtained.
With respect to the carbon black pigment, as the pigment has a smaller TEA adsorption capacity, the amount of the resin coating the pigment becomes smaller, and, therefore, in a case in which the ink is adhered to a liquid repellent film, direct contact between the carbon black pigment and the liquid repellent film easily occur, and the liquid repellent film is prone to undergo deterioration due to the polishing effect of the carbon black pigment.
On the other hand, as the pigment has a larger TEA adsorption capacity, the amount of the resin coating the pigment becomes larger, and direct contact between the carbon black pigment and the liquid repellent film can be suppressed, whereby deterioration of the liquid repellent film can be suppressed.
From the above-described finding, the inventors of the invention found that an ink for inkjet recording including

a water-soluble organic solvent having an SP value of less than 28, in which the product of the Tg of resin particles and the TEA adsorption capacity of a carbon black pigment is 40 °C·meq/g or more, exhibits excellent maintenance characteristics, and exhibits an excellent ability to suppress deterioration of a liquid repellent film.

<Carbon Black Pigment Having TEA Adsorption Capacity of 0.5 meq/g or More That Is Coated with Resin>

The ink for inkjet recording includes at least one carbon black pigment coated with a resin.

It is thought that when the ink for inkjet recording includes a carbon black pigment coated with a resin, it is possible to suppress the direct contact between the pigment and the liquid repellent film, and the polishing action of the pigment can be reduced, whereby deterioration of the liquid repellent film can be suppressed.

The carbon black pigment coated with a resin is explained. The carbon black pigment coated with a resin is obtained by coating a carbon black pigment with a resin. Regarding the carbon black pigment and the resin used for coating thereof, it is preferable to use the materials that are described below.

From the viewpoints of the color tone and the print density, the carbon black pigment used in the carbon black pigment coated with a resin has a TEA adsorption capacity of 0.5 meq/g or more, preferably from 0.5 meq/g to 1.0 meq/g, and more preferably from 0.5 meq/g to 0.8 meq/g.

The TEA adsorption capacity is measured according to the method described below.

A blank propylene glycol methyl ether acetate (PGMEA) solution and a PGMEA solution mixed with a carbon black pigment and TEA are respectively titrated with hydrochloric acid. The value obtained by dividing the difference in the amount of hydrochloric acid required for neutralization, by the mass of the carbon black pigment added to the solution, is designated as the TEA adsorption capacity (meq/g). If the TEA adsorption capacity of the carbon black pigment is less than 0.5 meq/g, the amount of adsorption of the resin used for coating is small, and the intended effect of suppressing deterioration of the liquid repellent film cannot be obtained.

The carbon black pigment preferably has an average primary particle diameter of from 12 nm to 25 nm, and more preferably from 12 nm to 20 nm.

The average primary particle diameter of the carbon black pigment is obtained by measuring the particle diameters (equivalent circle diameter) of 1000 primary particles arbitrarily selected from an image taken using a transmission electron microscope, TEM 2010 (applied voltage: 200 kV), manufactured by JEOL, Ltd., and calculating the arithmetic average of the particle diameters.

Examples of the carbon black pigment having a TEA adsorption capacity of 0.5 meq/g or more include carbon black pigments produced by known methods such as a gas black production process and an oil furnace production process.

Any commercially available product may also be used as the carbon black pigment.

Examples thereof include SPECIAL BLACK 6 (TEA adsorption capacity: 0.55 meq/g, Orion Engineered Carbons GmbH), and COLOUR BLACK FW182 (TEA adsorption capacity: 0.72 meq/g, Orion Engineered Carbons GmbH).

The ink for inkjet recording may include a single kind of carbon black pigment, or may include two or more kinds thereof in combination.

The ratio of the content of the carbon black pigment in the ink for inkjet recording is not particularly limited, but from the viewpoints of suppressing deterioration of the liquid repellent film, and of the scratch resistance and print density of images, the ratio of the content of the carbon black is preferably from 0.5% by mass to 4% by mass, and more preferably from 0.8% by mass to 2% by mass, with respect to the total mass of the ink.

- Coloring Pigment -

The ink for inkjet recording may also include, in addition to the carbon black pigment, at least one coloring pigment selected from a magenta pigment, a cyan pigment and a yellow pigment.

Examples of the magenta pigment include C.I. Pigment Red 122, C.I. Pigment Red 202, C.I. Pigment Red 209, and C.I. Pigment Violet 19.

Examples of the cyan pigment include C.I. Pigment Blue 15 : 3, C.I. Pigment Blue 15 : 4, and C.I. Pigment Blue 16.

Examples of the yellow pigment include C.I. Pigment Yellow 74, C.I. Pigment Yellow 155, and C.I. Pigment Yellow 185.

According to the invention, the ratio of the content of the coloring pigment with respect to the total amount of the carbon black pigment and the coloring pigment (coloring pigment/(carbon black pigment + coloring pigment)) is not particularly limited, but from the viewpoints of the scratch resistance of images and ejectability of the ink, the ratio of the content of the coloring pigment is preferably from 5% by mass to 60% by mass, and more preferably from 10% by mass to 50% by mass.

The pH of the carbon black pigment is, from the viewpoint of dispersibility, preferably in the range of from acidity to near neutrality, more preferably from pH 2.0 to pH 8.5, and particularly preferably from pH 2.5 to pH 8.0.

The pH of the carbon black pigment is measured as the pH (25°C) of an aqueous dispersion of a specific oxidation-treated pigment.

The BET specific surface area of the carbon black pigment is not particularly limited, but from the viewpoints of the print density and storage stability, the BET specific surface area is preferably from 30 $m^2$/g to 450 $m^2$/g, and more preferably from 200 $m^2$/g to 400 $m^2$/g.

The carbon black pigment (in a case in which a coloring pigment is further included, the carbon black pigment and the coloring pigment; hereinafter, the carbon black pigment and the coloring pigment together may also be referred to as "pigment" (or pigments)) is coated with a resin and is dispersed in a water-based medium. The resin that coats the carbon black pigment (may also be referred to as a dispersant) may be any of a polymeric dispersant, or a low molecular weight surfactant type dispersant. The polymeric dispersant may be any of a water-soluble dispersant, or a non-water-soluble dispersant.

For the low molecular weight surfactant type dispersant, any low molecular weight surfactant that is conventionally used can be used without any particular limitations.

Among the polymeric dispersants, examples of the water-soluble dispersant include hydrophilic polymer compounds. Examples of naturally occurring hydrophilic polymer compounds include plant-based polymers such as gum arabic, tragacanth gum, guar gum, karaya gum, locust bean gum, arabinogalactan, pectin, and quince seed starch; algae-based polymers such as alginic acid, carrageenan, and agar; animal-based polymers such as gelatin, casein, albumin, and collagen; and microbial-based polymers such as xanthene gum and dextran.

Examples of hydrophilic polymer compounds obtained by modifying a raw material that is a naturally occurring material include cellulose-based polymers such as methyl cellulose, ethyl cellulose, hydroxyethyl cellulose, hydroxypropyl cellulose, and carboxymethyl cellulose; starch-based polymers such as sodium starch glycolate and sodium starch phosphoric acid ester; and algae-based polymers such as sodium alginate and alginic acid propylene glycol ester.

Examples of synthetic hydrophilic polymer compounds include vinylic polymers such as polyvinyl alcohol, polyvinylpyrrolidone, and polyvinyl methyl ether; acrylic resins such as non-crosslinked polyacrylamide, polyacrylic acid or alkali metal salts thereof, and water-soluble styrene acrylic resins; water-soluble styrene maleic acid resins, water-soluble vinylnaphthalene acrylic resins, water-soluble vinylnaphthalene maleic acid resins, polyvinylpyrrolidone, polyvinyl alcohol, alkali metal salts of β-naphthalenesulfonic acid-formalin condensate, polymer compounds each having a salt of a cationic functional group such as a quaternary ammonium or an amino group in a side chain, and natural polymer compounds such as shellac.

Among these, water-soluble dispersants having a carboxyl group introduced therein, such as homopolymers of acrylic acid, methacrylic acid, styrene acrylic acid and the like, or copolymers thereof with one or more monomer having another hydrophilic group, are preferred as hydrophilic polymer compounds.

Regarding the non-water-soluble dispersant among the polymeric dispersants, a water-insoluble resin having a hydrophobic structural unit and a hydrophilic structural unit can be used. The hydrophilic structural unit is preferably a structural unit having an acidic group, and more preferably a structural unit having a carboxyl group.

Examples of the water-insoluble resin include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer, a vinyl acetate-maleic acid copolymer, and a styrene-maleic acid-copolymer.

More specifically, for example, any of the water-insoluble resins described in JP-A No. 2005-41994, JP-ANo. 2006-273891, JP-A No. 2009-084494, JP-ANo. 2009-191134, and the like can also be suitably used in the invention.

Regarding the polymeric dispersant, from the viewpoint of dispersion stability, it is particularly preferable that the ink for inkjet recording includes both a structural unit derived from benzyl methacrylate and a structural unit derived from methyl methacrylate.

According to the invention, "(meth)acrylic acid" represents acrylic acid or methacrylic acid, and "(meth)acrylic acid ester" ("(meth)acrylate") represents acrylic acid ester (acrylate) or methacrylic acid ester (methacrylate).

The weight average molecular weight of the polymeric dispersant is preferably from 3,000 to 100,000, more preferably from 5,000 to 50,000, still more preferably from 5,000 to 40,000, and particularly preferably from 10,000 to 40,000.

From the viewpoints of self-dispersibility, and the rate of aggregation in a case in which the ink is brought into contact with the treatment liquid that is described below is brought into contact, the polymeric dispersant preferably includes a water-insoluble resin having a carboxyl group, and the water-insoluble resin is preferably a water-insoluble resin having a carboxyl group and having an acid value of 100 mg KOH/g or less, and more preferably a water-insoluble resin having an acid value of from 25 mg KOH/g to 100 mg KOH/g. Particularly, in the case of using the ink composition in combination with a treatment liquid that aggregates the components in the ink composition (the details are described below), a polymeric dispersant having a carboxyl group and having an acid value of from 25 mg KOH/g to 100 mg KOH/g

is effective.

The mixing mass ratio of the coating resin and the pigment (resin:pigment) is preferably in the range of from 1 : 5 to 1 : 1, more preferably in the range of from 1 : 4 to 1 : 1, and still more preferably from 1 : 3 to 1 : 1.

When the mixing mass ratio is 1 : 5 or higher, the ink for inkjet recording is further excellent from the viewpoint of ink ejection stability, and when the mixing mass ratio is 1 : 1 or less, the ink is further excellent from the viewpoint of storage stability of the ink.

According to the invention, from the viewpoint of light resistance, product quality and the like of images, the mixing mass ratio of the coating resin and the pigment is from 1 : 5 to 1 : 1. It is preferable that the pigment coated with the coating resin is configured as an encapsulated pigment. It is more preferable that the encapsulated pigment includes a pigment and a water-insoluble resin having an acidic group. It is further preferable that the encapsulated pigment includes a pigment and a water-insoluble resin having a carboxyl group.

From the viewpoint of aggregability, at least one of the carbon black pigment or the coloring pigment is preferably a carbon black pigment coated with a water-insoluble resin having an acidic group (polymeric dispersant). The water-insoluble resin refers to a resin which gives an amount of dissolution of 10 g or less when the resin is dried for 2 hours at 105°C and then dissolved in 100 g of water at 25°C, and the amount of dissolution is preferably 5 g or less, and more preferably 1 g or less. The amount of dissolution is an amount of dissolution when 100% neutralization is achieved with sodium hydroxide or acetic acid in accordance with the kind of the salt-producing group of the water-insoluble resin.

The carbon black pigment coated with a resin can be produced by, specifically, for example, a production method including:

(i) a process of mixing a carbon black pigment, a water-soluble resin (dispersant), an aqueous solution containing a basic substance, and an organic solvent capable of dissolving or dispersing a water-soluble resin, and subjecting the mixture to a dispersing treatment (mixing/hydration process); and
(ii) a process of removing at least a portion of the organic solvent (solvent removal process).

A carbon black pigment coated with a crosslinked resin can be produced by, for example, a production method further including, between process (i) and process (ii):

(iii) a process of adding a crosslinking agent to the dispersion obtained by the dispersing treatment and heating the dispersion to crosslink the water-soluble resin (crosslinking process); and
(iv) a process of purifying the dispersion after crosslinking and thereby removing impurities (purification process).

A pigment dispersion having excellent storage stability, in which a pigment is finely dispersed, can be produced by process (i) to process (iv).

Specifically, for example, a pigment dispersion in which at least a portion of the pigment surface is coated with a water-insoluble resin, can be produced according to the method described in JP-ANo. 2009-190379.

The carbon black pigment coated with a resin is preferably incorporated in an amount of from 1.0% by mass to 4.0% by mass, and more preferably in an amount of from 1% by mass to 2.2% by mass, with respect to the total mass of the ink for inkjet recording.

(Encapsulated pigment)

The encapsulated pigment is described in detail. The resin for the encapsulated pigment is not limited, but a high molecular weight compound having self-dispersing capacity or dissolution capacity in a mixed solvent of water and a water-soluble organic solvent, and having an anionic group (acidic) is preferred.

The average particle diameter of the encapsulated pigment in a dispersed state is preferably from 12 nm to 200 nm, more preferably from 12 nm to 150 nm, and still more preferably from 40 nm to 150 nm. When the average particle diameter is 200 nm or less, favorable color reproducibility can be obtained, and favorable droplet ejection characteristics can be obtained at the time of droplet ejection by an inkjet method. When the average particle diameter is 10 nm or more, favorable light resistance can be obtained. There are no particular limitations on the particle size distribution of the encapsulated pigment, and the particle size distribution may be any of a wide particle size distribution or a monodisperse particle size distribution. A mixture of two or more kinds of encapsulated pigments each having a monodisperse particle size distribution may be used.

Here, the average particle diameter of the encapsulated pigment in a dispersed state represents an average particle diameter in a state of having been formulated into an ink, and the same also applies to a so-called concentrated ink dispersion that is in a stage before a final ink is obtained.

The average particle diameter and the particle size distribution of the encapsulated pigment in a dispersed state can be determined by measuring the volume average particle diameter by a dynamic light scattering method using

a NanoTrac particle size distribution analyzer, UPA-EX150 (manufactured by Nikkiso Co., Ltd.).

A pigment coated with a water-insoluble resin having an acidic group (preferably, a carboxyl group) can be obtained by, for example, subjecting a mixture including a pigment and a water-insoluble resin (dispersant), and, if necessary, a solvent (preferably, an organic solvent) or the like, to a dispersion treatment using a dispersing machine.

Specifically, for example, a pigment dispersion in which at least a portion of the surface of a pigment is coated with a water-insoluble resin can be produced by a production method which includes a process of adding an aqueous solution containing a basic substance to a mixture of a pigment, a water-insoluble resin (dispersant), and an organic solvent capable of dissolving or dispersing a water-insoluble resin, and subjecting the mixture to a dispersion treatment (mixing/hydration process), and a process of removing at least a portion of the organic solvent (solvent removal process). In this way, a pigment dispersion having excellent storage stability, in which a pigment is finely dispersed, can be produced.

More specifically, for example, a pigment dispersion in which at least a portion of the pigment surface is coated with a water-insoluble resin can be produced according to a method for producing a pigment dispersion described in JP-A No. H10-140065 or the like.

Alternatively, as a method for obtaining a "pigment dispersion in which at least a portion of the pigment surface is coated with a water-insoluble resin," a method of producing a pigment dispersion by dispersing a pigment using a water-soluble or water-insoluble dispersant, and then crosslinking the dispersant using a crosslinking agent to make the water-soluble dispersant water-insoluble, is also preferable. This method is more preferable even from the viewpoint of abrasion of the liquid repellent film, due to the fact that the surface of secondary pigment particles can be rigidly covered with a dispersant resin by crosslinking.

Examples of the dispersant include a polyvinyl, a polyurethane, and a polyester, but among them, a polyvinyl is preferred.

In the method including the process of crosslinking the dispersant, a dispersant having a functional group which can be crosslinked by a crosslinking agent, in the molecule, is used as the dispersant. The functional group which can be crosslinked is not particularly limited, and examples thereof include a carboxyl group or a salt thereof, an isocyanate group, and an epoxy group; however, from the viewpoint of enhancing dispersibility, the dispersant preferably has a carboxyl group or a salt thereof.

<Resin Particles>

The ink for inkjet recording in the invention includes at least one kind of resin particles.

When the ink for inkjet recording includes resin particles, the strength of images and the image quality can be enhanced.

It is preferable that the resin particles have a function of fixing an ink for inkjet recording, that is, an image, by aggregating the ink or destabilize the dispersion, when brought into contact with the treatment liquid that is described below, or a region on a recording medium in which the treatment liquid has been dried, thereby thickening the ink. Such resin particles are preferably dispersed in at least one of water or an organic solvent.

The glass transition temperature (Tg) of the resin particles is a value such that the product of the value of the Tg of the resin particles and the TEA adsorption capacity of the carbon black pigment used in the carbon black pigment coated with a resin is 40 °C·meq/g or more, and from the viewpoint of redispersibility of the ink, the glass transition temperature is preferably from 80°C to 170°C, and more preferably from 150°C to 170°C.

Examples of the resin particles include particles of resins, such as thermoplastic, thermosetting or modified acrylic resins, epoxy-based resins, polyurethane-based resins, polyether-based resin, polyamide-based resin, unsaturated polyester-based resins, phenolic resins, silicone-based resins, and fluorine-based resins; polyvinyl-based resins such as vinyl chloride, vinyl acetate, polyvinyl alcohol, and polyvinyl butyral; alkyd resins; polyester-based resins such as phthalic acid resins; amino-based materials such as melamine resins, melamine-formaldehyde resins, amino-alkyd cocondensated resins, urea resins, and urea resins; or copolymers or mixtures thereof. Among these, an anionic acrylic resin is obtained by, for example, polymerizing in a solvent an acrylic monomer having an anionic group (anionic group-containing acrylic monomer) and if necessary, another monomer capable of copolymerizing with the anionic group-containing acrylic monomer. Examples of the anionic group-containing acrylic monomer include acrylic monomers having one or more selected from the group consisting of a carboxyl group, a sulfonic acid group, and a phosphonic acid group, and among them, an acrylic monomer having a carboxyl group (for example, acrylic acid, methacrylic acid, crotonic acid, ethacrylic acid, propylacrylic acid, isopropylacrylic acid, itaconic acid, or fumaric acid) is preferred, and acrylic acid or methacrylic acid is further preferred.

The resin particles are preferably self-dispersing resin particles, from the viewpoints of ejection stability and liquid stability (particularly, dispersion stability) of the system containing a pigment. A self-dispersing resin refers to a water-insoluble polymer capable of forming a dispersed state in an aqueous medium by means of a functional group (particularly, an acidic group or a salt thereof) of the polymer itself when the resin is brought into a dispersed state by a reverse phase emulsification method in the absence of a surfactant.

Here, the scope of the term "dispersed state" includes both an emulsified state (emulsion) in which a water-insoluble polymer is dispersed in a liquid state in an aqueous medium, and a dispersed state (suspension) in which a water-insoluble polymer is dispersed in a solid state in an aqueous medium.

The self-dispersing resin is preferably a self-dispersing resin capable of forming a dispersed state in which a water-insoluble polymer is dispersed in a solid state, from the viewpoint of the ink fixability obtainable when the self-dispersing resin is included in an ink composition.

Examples of the method for producing an emulsified or dispersed state of the self-dispersing resin, that is, an aqueous dispersion of the self-dispersing resin, include a reverse phase emulsification method. Examples of the reverse phase emulsification method include a method of dissolving or dispersing a self-dispersing resin in a solvent (for example, a water-soluble organic solvent), subsequently introducing the solution or dispersion directly into water without adding a surfactant, stirring and mixing the mixture in a state that the salt-producing group (for example, an acidic group) carried by the self-dispersing resin is neutralized, removing the solvent, and then obtaining an aqueous dispersion in an emulsified or dispersed state.

It is preferable from the viewpoint of self-dispersibility that the particles of the self-dispersing resin include a water-insoluble polymer which includes a hydrophilic structural unit, and a structural unit derived from an aromatic group-containing monomer or a cyclic aliphatic group-containing monomer.

It is preferable that the water-insoluble polymer that is a component of the particles of the self-dispersing resin contains, from the viewpoint of controlling hydrophilicity or hydrophobicity of the polymer, a structural unit derived from an aromatic group-containing (meth)acrylate monomer or a cyclic aliphatic group-containing monomer (preferably, an alicyclic (meth)acrylate) at a proportion as a copolymerization ratio of from 15% to 80% by mass of the total mass of the self-dispersing polymer particles.

It is preferable that the water-insoluble polymer contains, from the viewpoint of controlling hydrophilicity or hydrophobicity of the polymer, a structural unit derived from an aromatic group-containing (meth)acrylate monomer (preferably, a structural unit derived from phenoxhyethyl (meth)acryalte and/or a structural unit derived from benzyl (meth)acrylate) or a structural unit derived from an alicyclic (meth)acrylate (preferably, a structural unit derived from isobornyl (meth)acrylate, and/or a structural unit derived from adamantyl (meth)acrylate, and/or a structural unit derived from dicyclopentanyl (meth)acrylate) at a copolymerization ratio of from 15% to 80% by mass, a structural unit derived from a carboxyl group-containing monomer, and a structural unit derived from an alkyl group-containing monomer (preferably a structural unit derived from a $(C_{1-4})$ alkyl ester of (meth)acrylic acid).

The weight average molecular weight of the resin particles is preferably from 10,000 to 200,000, and more preferably from 20,000 to 200,000.

Furthermore, the average particle diameter of the resin particles is preferably in the range of from 1 nm to 1 μm, more preferably in the range of from 1 nm to 200 nm, still more preferably in the range of from 1 nm to 100 nm, and particularly preferably in the range of from 1 nm to 50 nm.

The amount of addition of the resin particles is preferably from 0.1% by mass to 20% by mass, more preferably from 0.1% by mass to 10% by mass, and still more preferably from 0.1% by mass to 5% by mass, with respect to the total mass of the ink for inkjet recording.

The ratio of the content on a mass basis of the resin particles with respect to the carbon black is preferably from 0.5 to 10.0, and more preferably from 0.5 to 5.0.

The particle size distribution of the resin particles is not particularly limited, and the resin particles may be any of particles having a wide particle size distribution, or particles having a monodisperse particle size distribution. Two or more kinds of resin particles having a monodisperse particle size distribution may be used as a mixture.

In a case in which the Tg of the resin particles is low, the ink is prone to adhere to the liquid repellent film of the head, the number of wiping required for the removal of ink is increased, and maintenance characteristics are deteriorated. On the other hand, in a case in which the Tg of the resin particles is high, adhesion of the ink to the liquid repellent film is suppressed, or removal of the adhered ink is made easier, and thus favorable maintenance characteristics can be obtained.

The TEA adsorption capacity of the carbon black pigment is such that, as described above, as the TEA adsorption capacity is smaller, coating of the pigment with a resin becomes more difficult. Accordingly, when the ink in which the TEA adsorption capacity of the carbon black pigment is small adheres to the liquid repellent film, the pigment is more easily brought into direct contact with the liquid repellent film, so that the liquid repellent film is prone to undergo deterioration due to the polishing effect of the pigment.

On the other hand, as the TEA adsorption capacity is larger, the coating resin becomes more easily to adsorb to the pigment. Accordingly, direct contact between the pigment and the liquid repellent film can be suppressed, so that deterioration of the liquid repellent film can be suppressed.

That is, as the Tg of the resin particles is higher, and the TEA adsorption capacity of the carbon black pigment is larger, maintenance charactaristics and ability to suppress deterioration of the liquid repellent film of the ink for inkjet recording become further excellent. When the product of the Tg of the resin particles and the TEA adsorption capacity

of the carbon black pigment is 40 °C·meq/g or more, favorable effects of the two components can be obtained.

From the viewpoints described above, the product of the Tg of the resin particles and the TEA adsorption capacity of the carbon black pigment that are included in the ink for inkjet recording according to the invention is 40 °C·meq/g or more, preferably 80 °C·meq/g or more, and more preferably 100 °C·meq/g or more.

<Water-Soluble Organic Solvent>

The ink for inkjet recording of the invention includes at least one water-soluble organic solvent, and in the at least one water-soluble organic solvent, the ratio of the content of at least one water-soluble organic solvent having a solubility parameter (SP value) of less than 28 is 2% by mass or more with respect to the total mass of the ink.

The ink for inkjet recording of the invention may include, if necessary, a water-soluble organic solvent having an SP value of 28 or more, in addition to the water-soluble organic solvent having an SP value of less than 28.

The water-soluble organic solvent according to the invention means an organic solvent which dissolves in an amount of 5 g or more with respect to 100 g of water.

The SP value according to the invention means the solubility parameter (SP value) of an organic solvent, and is a value represented by the square root of the molecular cohesive energy. In regard to the SP value, descriptions can be found in "Polymer Handbook (Second Edition), Chapter IV Solubility Parameter Values," and the values disclosed therein are employed as the SP values in the invention. Also, the unit is $(MPa)^{1/2}$, and the value refers to a value at 25°C.

Meanwhile, regarding those solvents for which the data are not disclosed therein, the values calculated by the method described in R.F. Fedors, Polymer Engineering Science, 14, p. 147-154 (1974) are employed as the SP values according to the invention.

Specifically, in the method described in the above scientific article by R. F. Fedors, the solubility parameter (SP value) of a particular water-soluble solvent at 25°C can be calculated using the following equation.

$$\delta = \left[ \frac{\sum_i \Delta e_i}{\sum_i \Delta v_i} \right]^{1/2}$$

In the above equation, $\delta$ represents the solubility parameter (SP value) of the water-soluble solvent at 25°C; $\Delta e_i$ is the additive atomic and group contribution for the energy of vaporization of the solvent; $\Delta v_i$ is the additive atomic and group contribution for the molar volume of the solvent; and the summation index i represents the number of atoms or groups within the molecular structure of the water-soluble solvent. The contributions $\Delta e_i$ and $\Delta v_i$ at a temperature of 25°C are listed in Table 5 on page 152 of Fedors' article as identified above. Hence, based on only the knowledge of the chemical structure of the particular water-soluble solvent, i.e. the atoms and groups constituting the molecular structure thereof, the required contributions $\Delta e_i$ and $\Delta v_i$ can be selected from Table 5 of Fedors' paper, and on their basis, $\delta$ can be calculated using the above equation. In the event that the water-soluble solvent has a cyclic structure, the solubility parameter thereof can be estimated from the properties of a linear compound having the same chemical structure, and adding a cyclization increment $\Delta e_i$ and $\Delta v_i$, which increment is also listed in Table 5 of the paper. More details and a concrete example for calculating the solubility parameter of a cyclic water-soluble solvent are provided on pages 152 and 153 of Fedors' paper.

(Water-Soluble Organic Solvent Having SP value of Less than 28)

The water-soluble organic solvent having an SP value of less than 28 (hereinafter, may be referred to as "first water-soluble organic solvent") in the invention is not particularly limited as long as the SP value is less than 28, but from the viewpoint of image film forming, the SP value is preferably 16 or more but less than 28, and more preferably 20 or more but less than 28.

Here, a water-soluble organic solvent having an SP value of 28 or more may be referred to as "second water-soluble organic solvent."

Specific examples of the water-soluble organic solvent having an SP value of less than 28 are shown below together with their SP values, but the water-soluble organic solvent having an SP value of less than 28 which may be used in the invention is not limited to the following specific examples.

- Propylene glycol (PG) (SP value: 27.6)

- Diethylene glycol monoethyl ether (DEGmEE) (SP value: 22.4)
- Diethylene glycol monobutyl ether (DEGmBE) (SP value: 21.5)
- Triethylene glycol monobutyl ether (TEGmBE) (SP value: 21.1)
- Propylene glycol monoethyl ether (PGmEE) (SP value 22.3)
- Dipropylene glycol (DPG) (SP value: 27.1)
- Dipropylene glycol monomethyl ether (DPGmME) (SP value: 21.3)
- Triethylene glycol monoethyl ether (TEGmEE) (SP value: 21.7)
- Tripropylene glycol monomethyl ether (TPGmME) (SP value: 20.4)
- Triethylene glycol monomethyl ether (TEGmME) (SP value: 22.1)
- Tripropylene glycol (TPG) (SP value: 24.7, for example, PP-200 (manufactured by Sanyo Chemical Industries, Ltd.))
- Heptapropylene glycol (SP value: 21.2, for example, PP-400 (manufactured by Sanyo Chemical Industries, Ltd.))
- 1,2-Hexanediol (SP value: 24.1)
- POP(3) glyceryl ether (SP value: 26.4, for example, GP-250 (manufactured by Sanyo Chemical Industries, Ltd.))
- POP(4) glyceryl ether (SP value: 24.9)
- POP (5) glyceryl ether (SP value: 23.9)
- POP (6) glyceryl ether (SP value: 23.2, for example, GP-400 (manufactured by Sanyo Chemical Industries, Ltd.))
- POP(7) glyceryl ether (SP value: 22.6)
- POP(8) glyceryl ether (SP value: 22.1)
- POP (9) glyceryl ether (SP value: 21.7, for example, GP-600 (manufactured by Sanyo Chemical Industries, Ltd.))
- POP(10) glyceryl ether (SP value: 21.4)
- POP(16) glyceryl ether (SP value: 20.2, for example, GP-1000 (manufactured by Sanyo Chemical Industries, Ltd.))
- POP(4) diglyceryl ether (SP value: 26.1, for example, SC-P400 (manufactured by Sakamoto Yakuhin Kogyo Co., Ltd.))
- POP(9) diglyceryl ether (SP value: 22.7, for example, SC-P750 (manufactured by Sakamoto Yakuhin Kogyo Co., Ltd.))
- POE(20) diglyceryl ether (SP value: 22.4, for example, SC-E1000 (manufactured by Sakamoto Yakuhin Kogyo Co., Ltd.))
- POE(40) diglyceryl ether (SP value: 21.0, for example, SC-E2000 (manufactured by Sakamoto Yakuhin Kogyo Co., Ltd.))
- Dioxyethylene dioxypropylene butyl ether (SP value: 20.1, for example, 50HB-55 (manufactured by Sanyo Chemical Industries, Ltd.))
- Pentaoxyethylene pentaoxypropylene butyl ether (SP value: 18.8, for example, 50HB-100 (manufactured by Sanyo Chemical Industries, Ltd.))
- Decaoxyethylene heptaoxypropylene butyl ether (SP value: 18.8, for example, 50HB-260 (manufactured by Sanyo Chemical Industries, Ltd.))
- Dodecaoxyethylene dodecaoxypropylene butyl ether (SP value: 18.8, for example, 50HB-400 (manufactured by Sanyo Chemical Industries, Ltd.))
- Decaoxyethylene triacontaoxypropylene butyl ether (SP value: 18.7, for example, PE-62 (manufactured by Sanyo Chemical Industries, Ltd.))
- Pentacosaoxyethylene triacontaoxypropylene butyl ether (SP value: 18.8, for example, PE-64 (manufactured by Sanyo Chemical Industries, Ltd.))

POP(3) glyceryl ether means an ether derivative of glycerin in which three propylene oxide molecules are added to a glycerin molecule, and this also applies to other compounds in the above specific examples of the water-soluble organic solvent having an SP value of less than 28. For example, POP(4) diglyceryl ether means an ether derivative of glycerin in which four propylene oxide molecules are added to a glycerin molecule.

Among the specific examples of the water-soluble organic solvent having an SP value of less than 28, PG and TPGmME are preferred.

It is also preferable that the water-soluble organic solvent having an SP value of less than 28 according to the invention is a compound represented by the following structural formula.

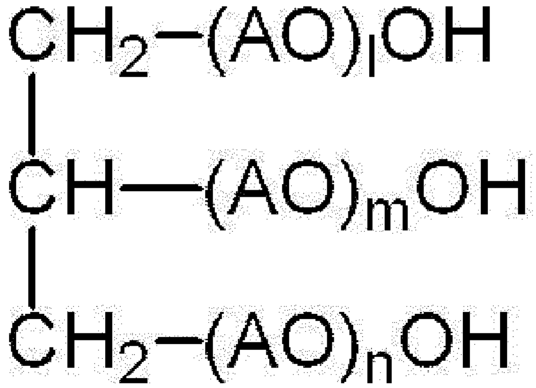

Structural Formula

In the structural formula, each of 1, m and n independently represents an integer of 1 or more, and the sum l+m+n represents from 3 to 15. When the sum l+m+n is 3 or more, a sufficient effect of suppressing curling can be obtained. When the sum l+m+n is 15 or less, favorable ejectability can be obtained. The sum l+m+n is preferably from 3 to 12, and more preferably from 3 to 10.

In the above structural formula, AO represents at least one of an oxyethylene group (EO) or an oxypropylene group (PO), but among them, an oxypropylene group is preferred. The AOs in $(AO)_l$, $(AO)_m$ and $(AO)_n$ may be respectively identical with or different from one another.

In the invention, any one of the water-soluble organic solvent having an SP value of less than 28 may be used singly, or two or more kinds thereof may be used as a mixture.

When the ink composition of the invention includes two or more kinds of the water-soluble organic solvent having an SP value of less than 28, there are no particular limitations on the kinds of the respective water-soluble organic solvents. For example, the water-soluble organic solvent represented by the above structural formula and an organic solvent other than that (preferably, polyalkylene glycol, or an alkyl ether of polyalkylene glycol) may be used in combination.

The content of the water-soluble organic solvent having an SP value of less than 28 according to the invention is 2% by mass or more, preferably from 2% by mass to 15% by mass, and more preferably from 5% by mass to 12% by mass, with respect to the total mass of the ink for inkjet recording. If the content of the water-soluble organic solvent having an SP value of less than 28 is less than 2% by mass, the images formed by the ink for inkjet recording may have poor scratch resistance.

When the content of the water-soluble organic solvent having an SP value of less than 28 is 15% by mass or less, favorable storage stability of the ink and favorable blocking resistance of the formed images can be obtained.

(Water-Soluble Organic Solvent Having SP Value of 28 or More)

The ink for inkjet recording of the invention may also include a water-soluble organic solvent having an SP value of 28 or more, in addition to the water-soluble organic solvent having an SP value of less than 28.

Specific examples of the water-soluble organic solvent having an SP value of 28 or more are shown below together with their SP values, but the water-soluble organic solvent having an SP value of 28 or more which may be used in the invention is not limited thereto.

Examples of the water-soluble organic solvent include alkanediols (polyhydric alcohols) such as glycerin and ethylene glycol; sugar alcohols; $C_{1-4}$ alkyl alcohols such as ethanol, methanol, butanol, propanol, and isopropanol; and glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol mono-n-propyl ether, ethylene glycol monoisopropyl ether, diethylene glycol monoisopropyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol mono-t-butyl ether, propylene glycol mono-n-propyl ether, propylene glycol monoisopropyl ether, dipropylene glycol monoethyl ether, dipropylene glycol mono-n-propyl ether, and dipropylene glycol monoisopropyl ether. Any one of these can be used singly, or two or more kinds thereof may be used in combination.

<Water>

The ink according to the invention includes water.

In the invention, it is preferable to use water that does not contain ionic impurities, such as ion-exchanged water or distilled water.

The content of water in the ink may be appropriately selected according to the purpose, but from the viewpoints

of securing stability and ejection reliability of the ink, the content is preferably from 10% by mass to 99% by mass, more preferably from 30% by mass to 80% by mass, and still more preferably from 50% by mass to 70% by mass, with respect to the total mass of the ink.

<Polymerizable Compound>

It is preferable that from the viewpoint of enhancing scratch resistance of the images formed by image formation, the ink for inkjet recording includes at least one polymerizable compound.

When the ink for inkjet recording includes a polymerizable compound, the ink for inkjet recording is polymerized and cured by being irradiated with active energy radiation (for example, radiation or light, or an electron beam).

Since the ink for inkjet recording of the invention includes water as a solvent, it is preferable that the polymerizable compound is water-soluble.

Here, the polymerizable compound being water-soluble means that the solubility of the polymerizable compound in water at 25°C is 5% by mass or more. The solubility of the polymerizable compound in water at 25°C is preferably 10% by mass or more. It is also preferable that the polymerizable compound can be dissolved (desirably, uniformly) in the aqueous ink composition. A polymerizable compound may be a compound which dissolves (desirably, uniformly) in the ink composition as a result of addition of the water-soluble organic solvent which is described below to increase solubility.

The polymerizable compound preferably includes at least one selected from the group consisting of a (meth)acrylic acid ester compound and a (meth)acrylamide compound, and more preferably includes at least one (meth)acrylamide compound.

- (Meth)acrylic Acid Ester Compound -

The (meth)acrylic acid ester compound is not limited as long as the compound is a polymerizable compound which is water-soluble and has (meth)acrylic acid ester groups in the molecule.

The (meth)acrylic acid ester compound is preferably a compound represented by the following Formula (M-1):

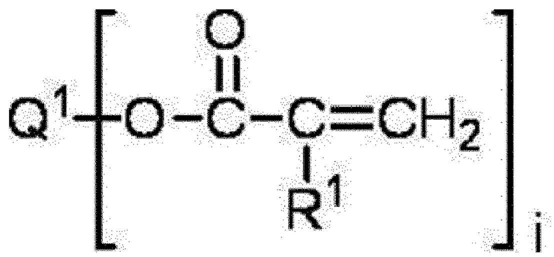

(M-1)

In Formula (M-1), $Q^1$ represents a monovalent linking group; $R^1$ represents a hydrogen atom or a methyl group; and i represents an integer of 1 or more.

In regard to the compound represented by Formula (M-1), the group surrounded by "$[\ ]_i$" is a (meth)acrylic acid ester group. That is, in the molecule of the compound represented by Formula (M-1), the number of (meth)acrylic acid ester group is "i".

The compound represented by Formula (M-1) is a compound in which one or more unsaturated monomers are bonded to a linking group $Q^1$ by an ester bond. $R^1$ represents a hydrogen atom or a methyl group, and is preferably a hydrogen atom. There are no limitations on the valence i of the linking group $Q^1$, but the valence i is preferably 2 or more, more preferably from 2 to 6, and still more preferably from 2 to 4.

The linking group $Q^1$ is not particularly limited as long as the linking group is capable of bonding to (meth)acrylic acid ester group, but it is preferable that the linking group $Q^1$ is a group with which the compound represented by Formula (M-1) is capable of satisfying the requirement of water-solubility described above. Specific examples of the linking $Q^1$ include residues obtained by eliminating one or more hydrogen atoms or hydroxyl groups from a compounds selected from the following compound group X.

- Compound Group X -

Polyols such as ethylene glycol, diethylene glycol, triethylene glycol, polyethylene glycol, propylene glycol, dipropylene glycol, tripropylene glycol, polypropylene glycol, 1,3-propanediol, 1,2-butanediol, 1,3-butanediol, 1,4-butanediol, 2,3-butanediol, 1,5-pentanediol, 1,4-pentanediol, 2,4-pentanediol, 3-methyl-1,5-pentanediol, 2-methyl-2,4-pentanediol, 1,5-hexanediol, 1,6-hexanediol, 2,5-hexanediol, glycerin, 1,2,4-butanetriol, 1,2,6-hexanetriol, 1,2,5-pentanetriol, thioglycol, trimethylolpropane, ditrimethylolpropane, trimethylolethane, ditrimethylolethane, neopentyl glycol, pentaerythritol, dipentaerythritol, and a condensate thereof, a low molecular weight polyvinyl alcohol, and a sugar; and polyamines such as ethylenediamine, diethylenetriamine, triethylenetetramine, polyethyleneimine, and polypropylenediamine.

Examples of the linking group $Q^1$ include substituted or unsubstituted alkylene chains having 4 or fewer carbon atoms, such as a methylene group, an ethylene group, a propylene group and a butylenes group; and functional groups having a saturated or unsaturated heterocyclic ring, such as a pyridine ring, an imidazole ring, a pyrazine ring, a piperidine ring, a piperazine ring and a morpholine ring.

Among these, the linking group $Q^1$ is preferably a residue of a polyol containing an oxyalkylene group (preferably, an oxyethylene group), and particularly preferably a residue of a polyol containing three or more oxyalkylene groups (preferably, oxyethylene groups).

Specific examples of the water-soluble (meth)acrylic acid ester compound include (meth)acrylic acid ester compounds 1 to 6 shown below, but the (meth)acrylic acid ester compound which may be used in the invention is not limited to the following specific examples.

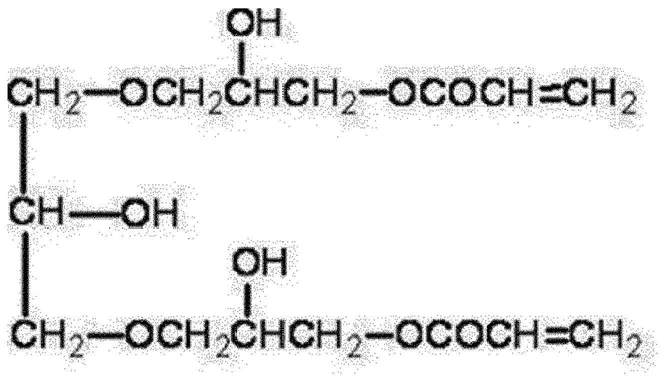

(Meth)acrylic acid ester compound 1

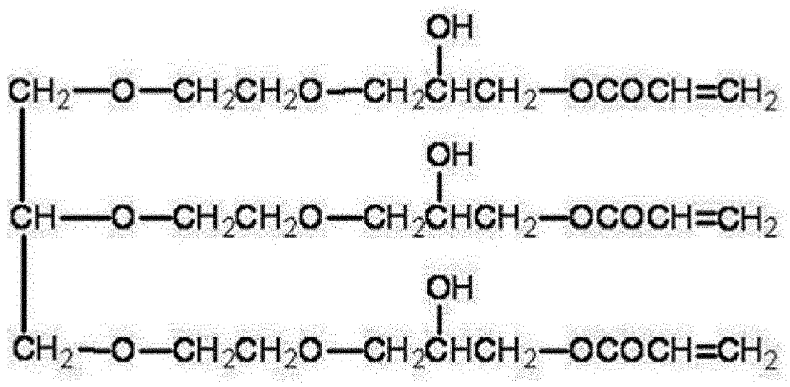

(Meth)acrylic acid ester compound 2

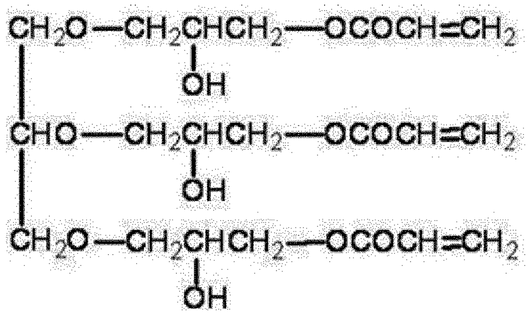

(Meth)acrylic acid ester compound 3

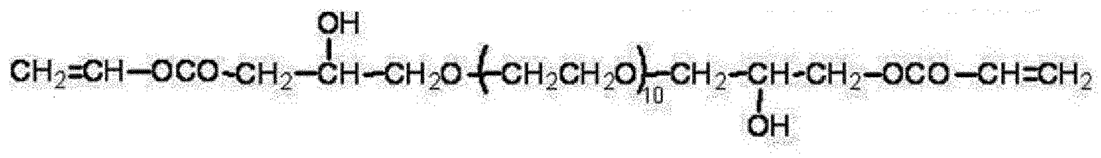

(Meth)acrylic acid ester compound 4

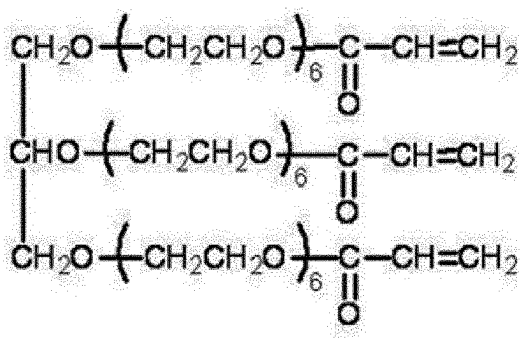

(Meth)acrylic acid ester compound 5

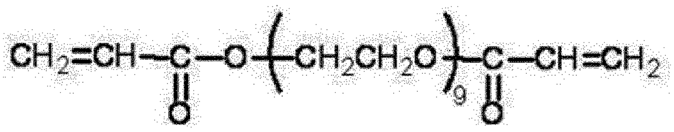

(Meth)acrylic acid ester compound 6

A (meth)acrylic acid ester having two or more acryloyl groups in one molecule derived from a polyol compound can also be used as the (meth)acrylic acid ester compound. Examples of the polyol compound include a condensate, an oligo ether, or an oligo ester of a glycol; and a polyol compound having two or more hydroxyl groups, such as a monosaccharide or a disaccharide.

(Meth)acrylic acid esters such as triethanolamine, diethanolamine, trishydroxyaminomethane, and trishydroxyaminoethane are also suitable.

Specific examples of the water-soluble (meth)acrylic acid ester compound represented by Formula (M-1) include cationic compounds shown below, but the water-soluble (meth)acrylic acid ester compound represented by Formula (M-1) which may be used in the invention is not limited to the following specific examples.

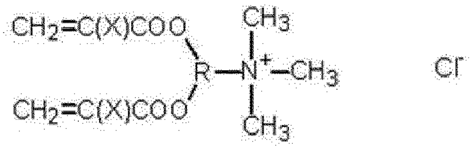

Structure 1

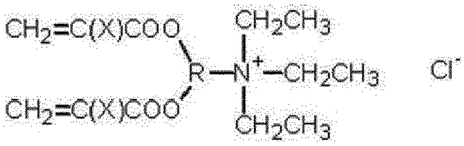

Structure 2

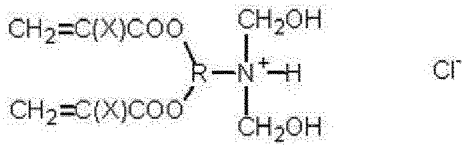

Structure 3

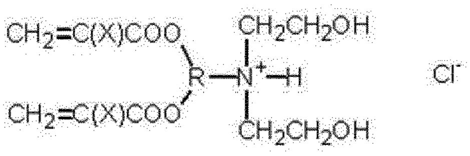

Structure 4

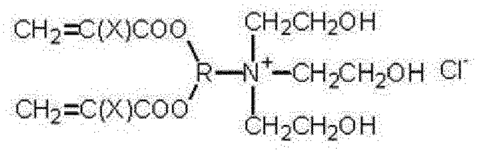

Structure 5

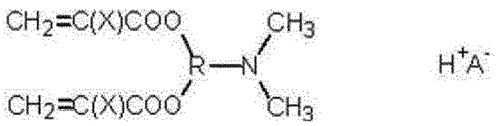

Structure 6

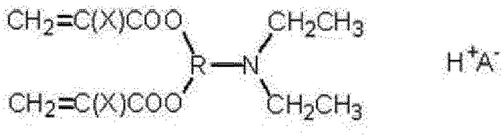

Structure 7

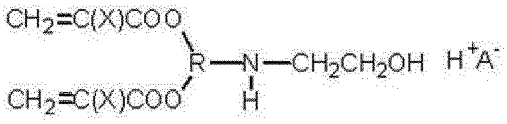

Structure 8

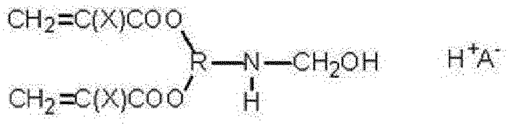

Structure 9

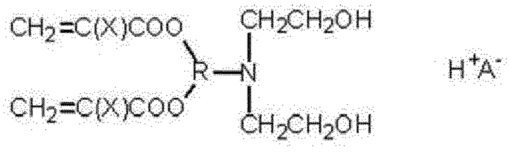

Structure 10

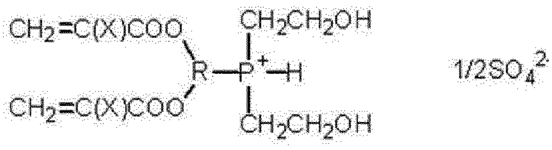

Structure 11

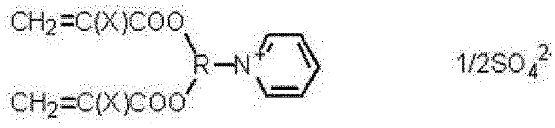

Structure 12

In Structures 1 to 12, R represents a residue of a polyol compound; and X represents H or $CH_3$; $A^-$ represents $Cl^-$, $HSO_4^-$, or $CH_3COO^-$. Examples of the polyol compound include glycerin, 1,2,4-butanetriol, 1,2,5-pentanetriol, 1,2,6-hexanetriol, trimethylolpropane, trimethylolmethane, trimethylolethane, pentaerythritol, bisphenol A, alicyclic bisphenol A, and condensates thereof. Further examples of the polymerizable compound having a cationic group include the following structures (cationic compounds 1 to 11).

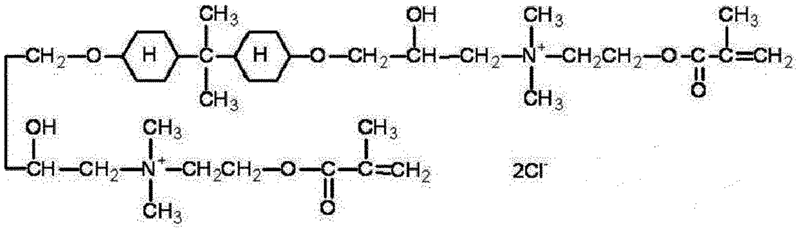

(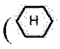 represents cyclohexane)

Cationic compound 1

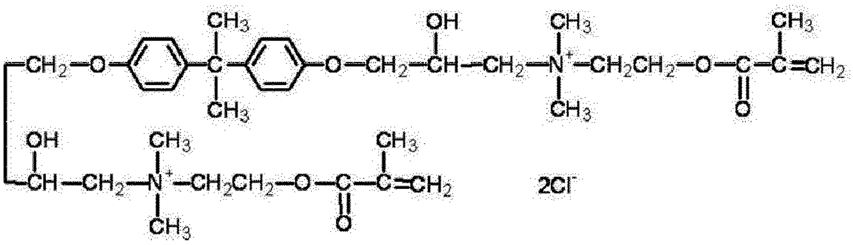

Cationic compound 2

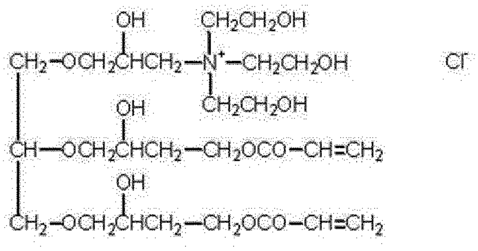

Cationic compound 3

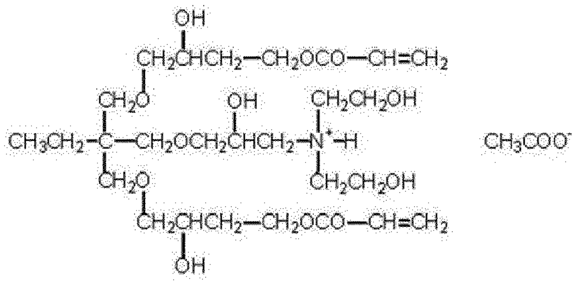

Cationic compound 5

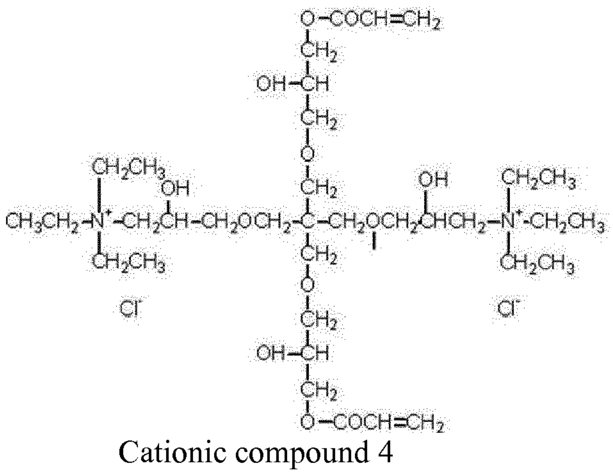

Cationic compound 4

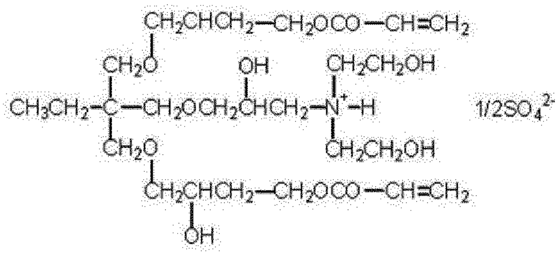

Cationic compound 6

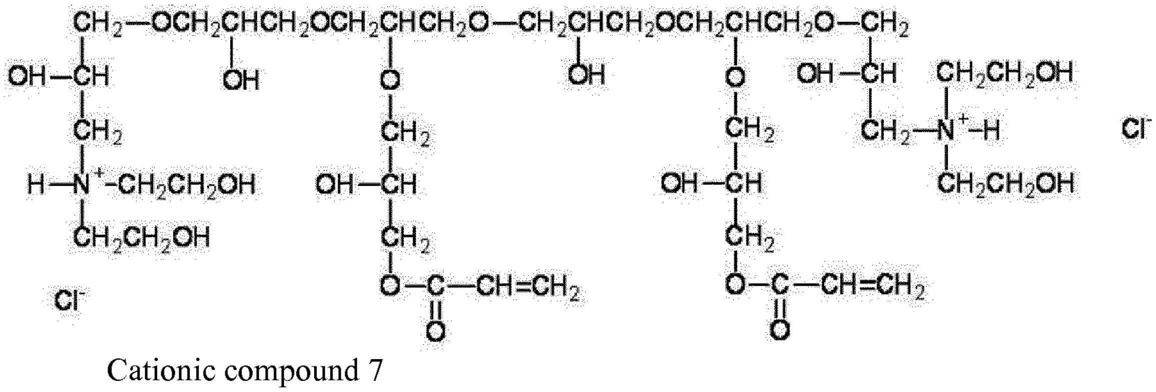

Cationic compound 7

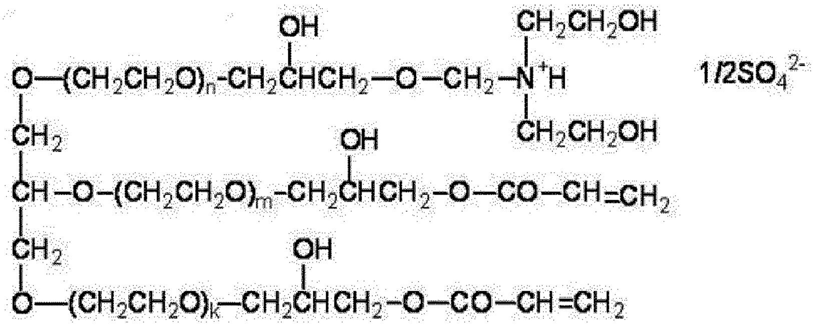

n+m+k=15

Cationic compound 8

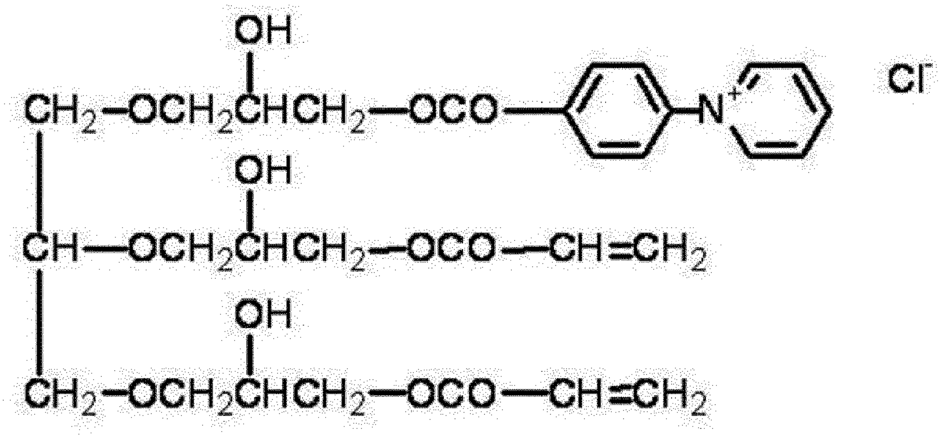

Cationic compound 9

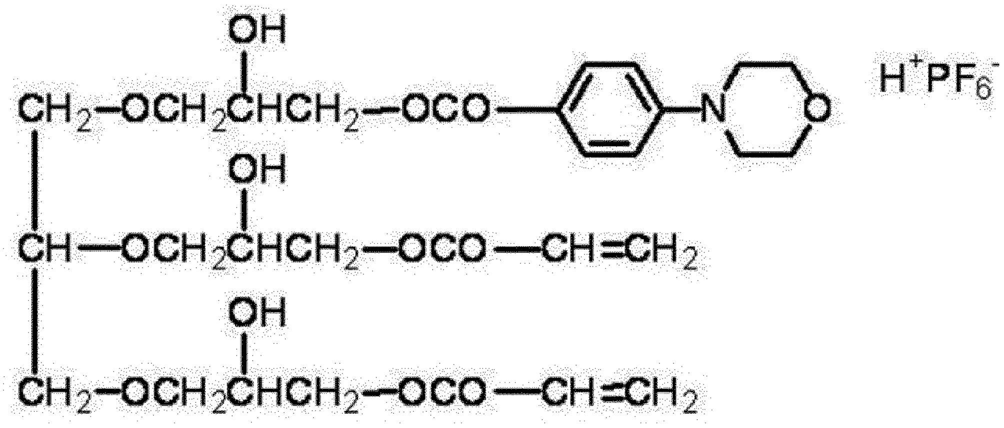

Cationic compound 10

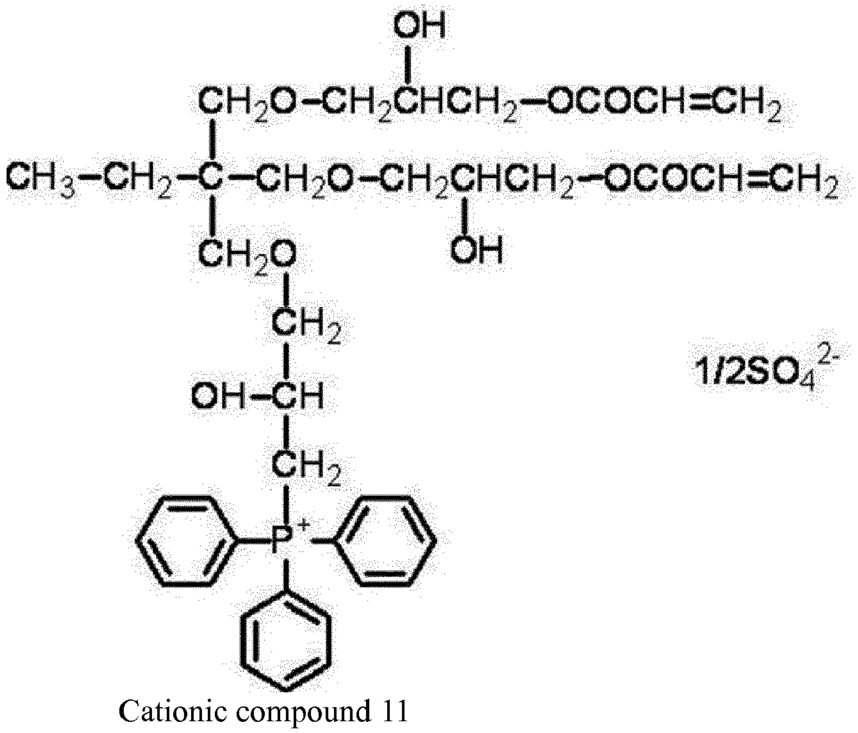

Cationic compound 11

- (Meth)acrylamide Compound -

The (meth)acrylamide compound is not limited as long as it is a polymerizable compound having a (meth)acrylamide group in the molecule.

The (meth)acrylamide compound is preferably a compound represented by the following Formula (M-2). When the (meth)acrylamide compound has a structure of Formula (M-2), the compatibility of the compound represented by Formula (1) that is described below and a polymerizable compound increases, and the curing sensitivity and the like can be increased.

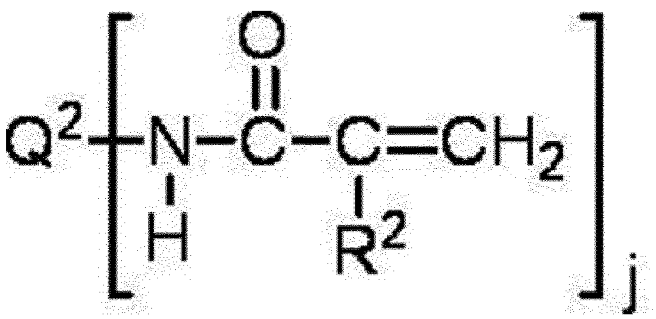

(M-2)

In Formula (M-2), $Q^2$ represents a linking group having a valence of j; $R^2$ represents a hydrogen atom or a methyl group; and j represents an integer of 1 or more.

In regard to the compound represented by Formula (M-2), the group surrounded by "$[\ ]_j$" is a (meth)acrylamide group. That is, in the molecule of the compound represented by Formula (M-2), the number of (meth)acrylamide group is "j".

The compound represented by Formula (M-2) is a compound in which one or more unsaturated monomers are bonded to a linking group $Q^2$ by an amide bond. $R^2$ represents a hydrogen atom or a methyl group, and is preferably a hydrogen atom. There are no limitations on the valence j of the linking group $Q^2$, but the valence j is preferably 2 or more, more preferably from 2 to 6, and still more preferably from 2 to 4.

The linking group $Q^2$ is not particularly limited as long as it is a group that can be linked with a (meth)acrylamide group. The details of the linking group $Q^2$ are the same as those of the linking group $Q^1$, and preferred examples of the linking group $Q^2$ also include the preferred examples of the linking group $Q^1$.

Specific examples of the water-soluble (meth)acrylamide compound include polymerizable compound 1 to polymerizable compound 32, and (V)-1 to (V)-6 shown below.

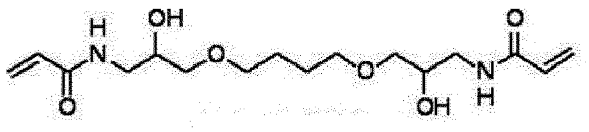

Polymerizable compound 1

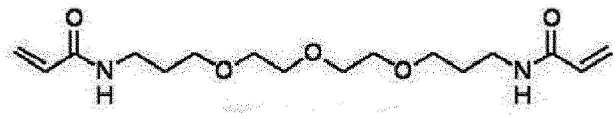

Polymerizable compound 2

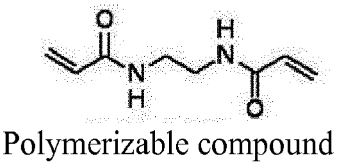

Polymerizable compound 3

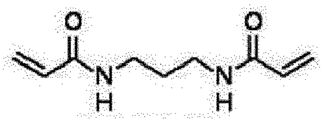

Polymerizable compound 4

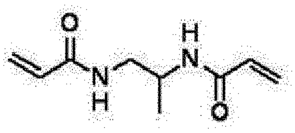

Polymerizable compound 5

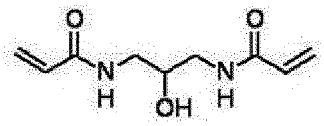

Polymerizable compound 6

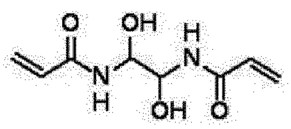

Polymerizable compound 7

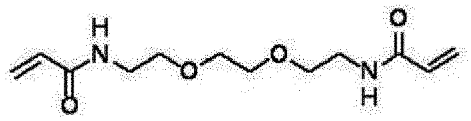

Polymerizable compound 8

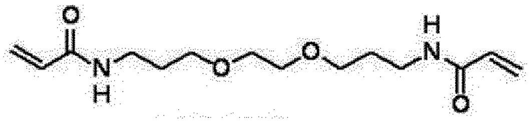

Polymerizable compound 9

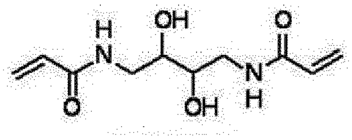

Polymerizable compound 10

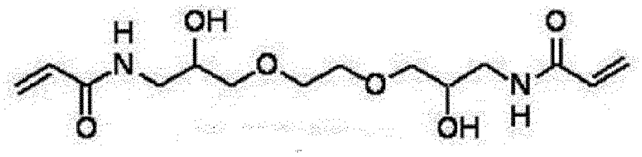

Polymerizable compound 11

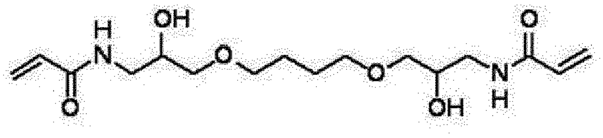

Polymerizable compound 12

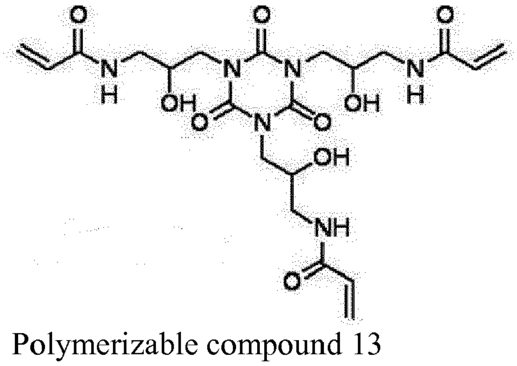

Polymerizable compound 13

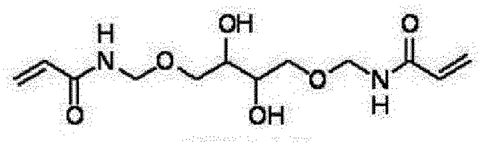

Polymerizable compound 14

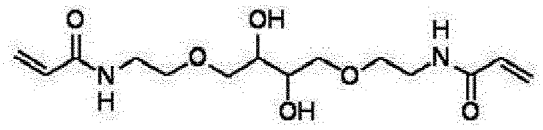

Polymerizable compound 15

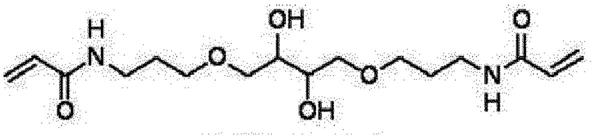

Polymerizable compound 16

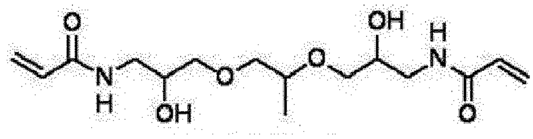

Polymerizable compound 17

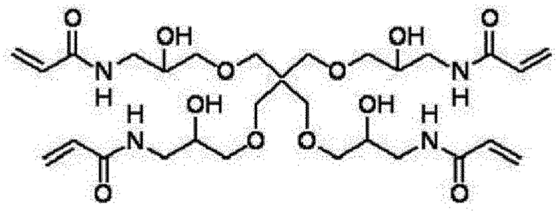

Polymerizable compound 18

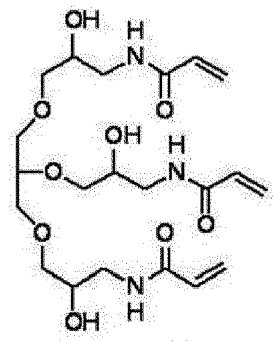

Polymerizable compound 19

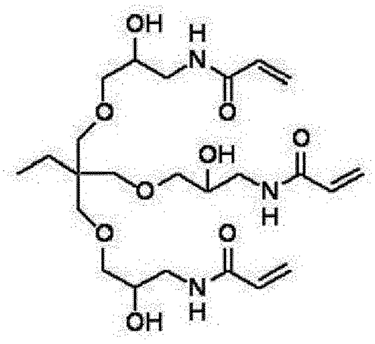

Polymerizable compound 20

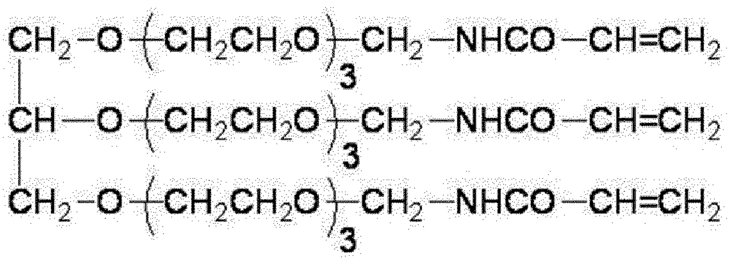

Polymerizable compound 21

$$C\left[CH_2-O\left(CH_2CH_2O\right)_3CH_2-NHCO-CH=CH_2\right]_4$$

Polymerizable compound 22

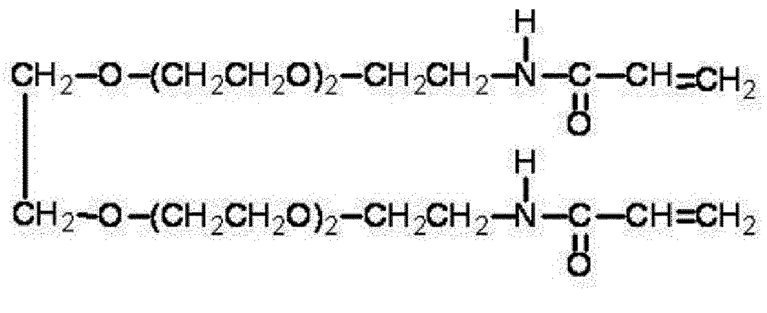

Polymerizable compound 23

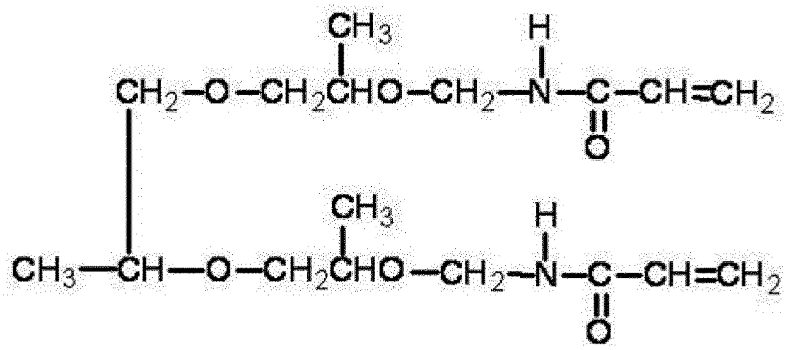

Polymerizable compound 24

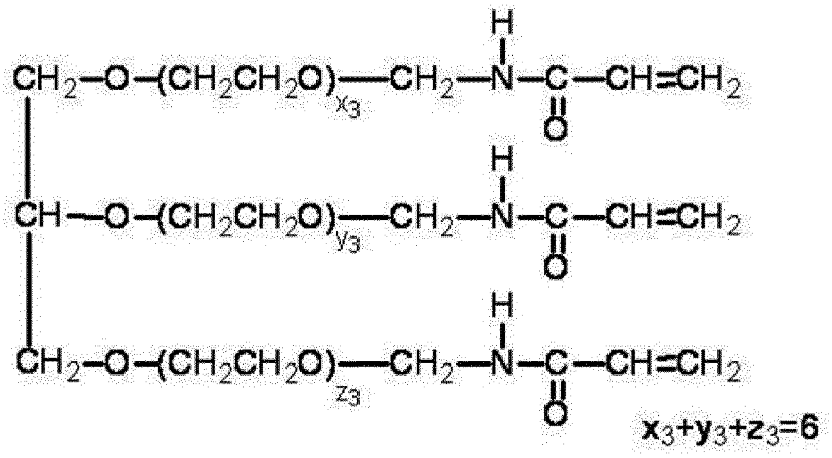

Polymerizable compound 25

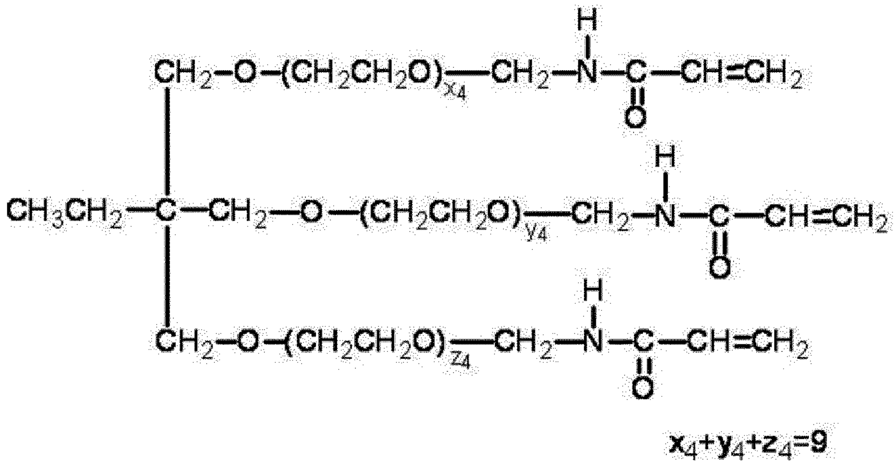

Polymerizable compound 26

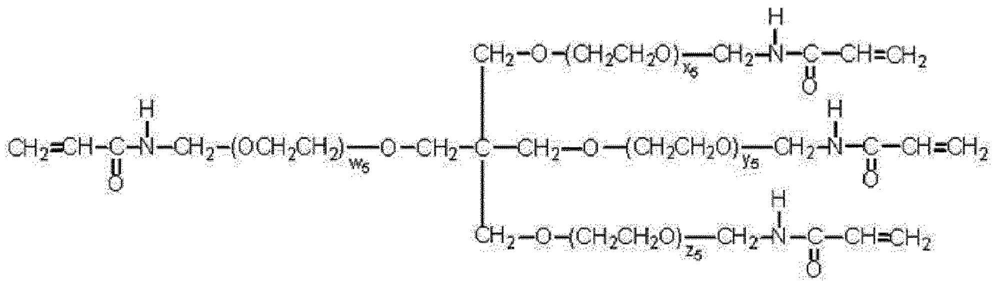

$w_5+x_5+y_5+z_5=6$

Polymerizable compound 27

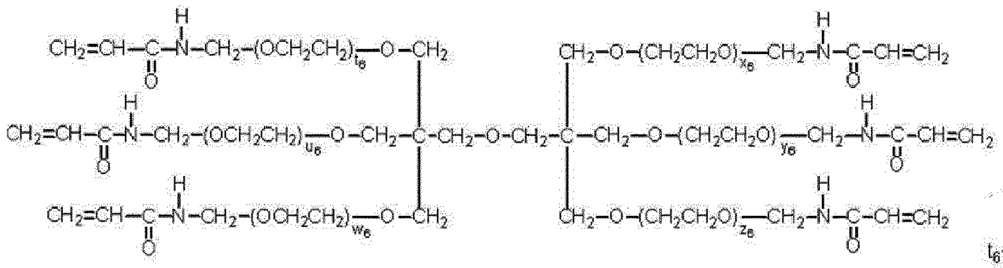

$t_6+u_6+w_6+x_6+y_6+z_6=12$

Polymerizable compound 28

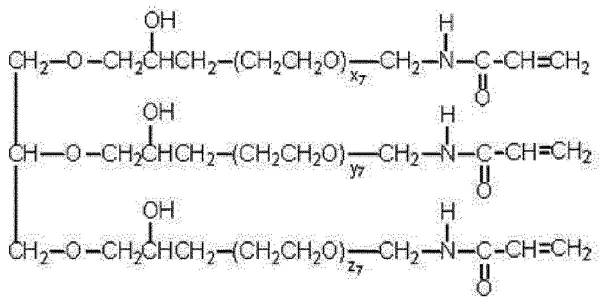

$x_7+y_7+z_7=3$

Polymerizable compound 29

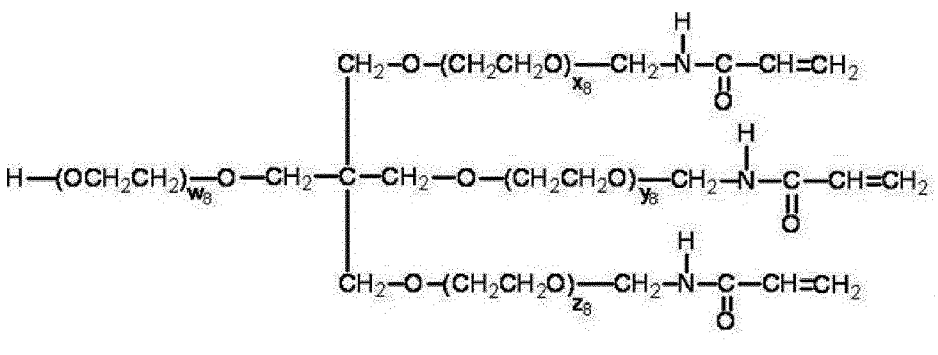

$w_8+x_8+y_8+z_8=6$

Polymerizable compound 30

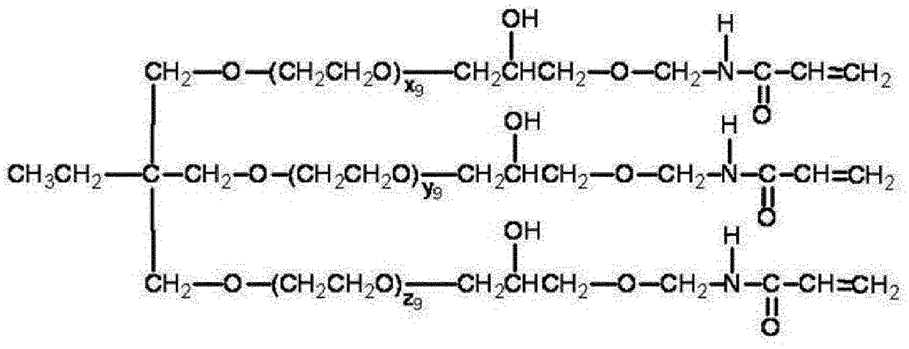

$x_9+y_9+z_9=3$

Polymerizable compound 31

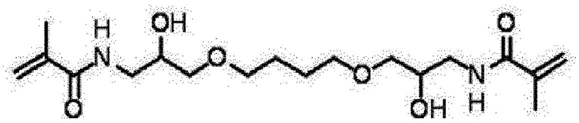

Polymerizable compound 32

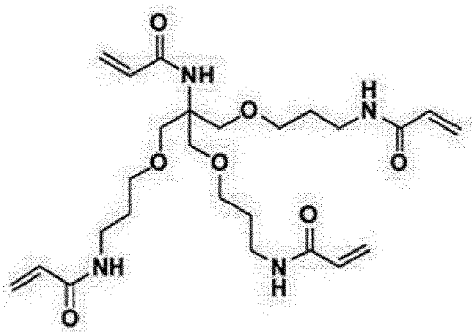

(V)−1

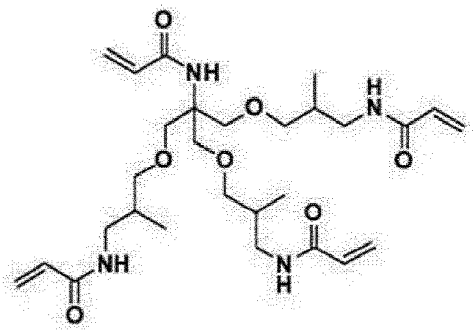

(V)−2

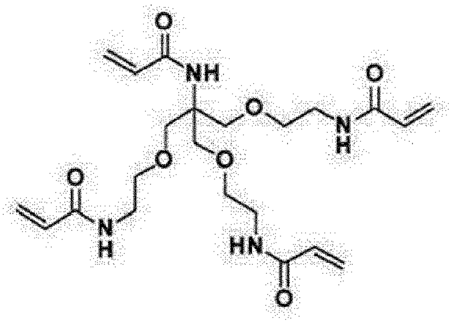

(V)−3

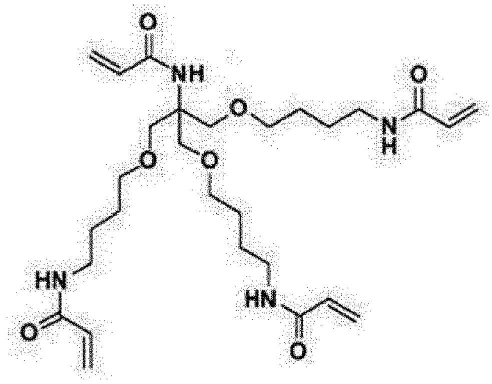

(V)−4

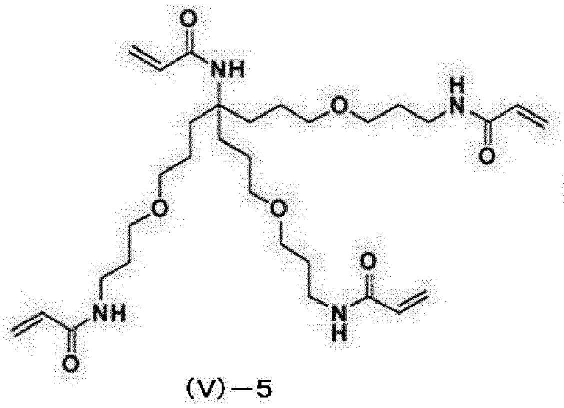

(V)−5

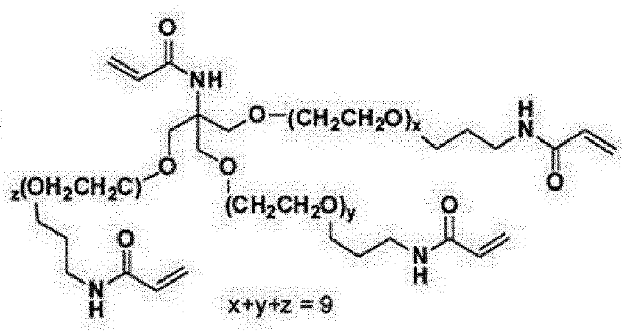

x+y+z = 9

(V)−6

Other than the polymerizable compound, a compound containing an unsaturated double bond can be suitably used, and hydroxyethyl acrylamide (HEAA) in particular can be suitably used. Also, for example, a compound having a maleimide structure, a compound having a sulfamide structure, or a compound having an N-vinylacetamide structure, which are represented by the following, can also be used.

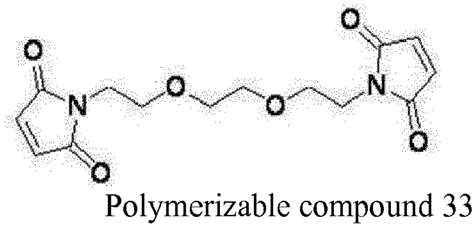

Polymerizable compound 33

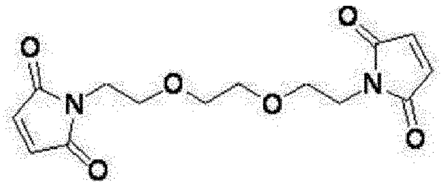

Polymerizable compound 34

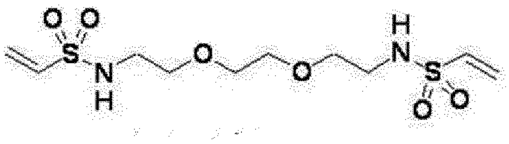

Polymerizable compound 35

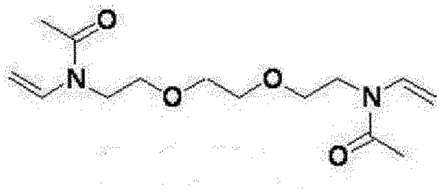

Polymerizable compound 36

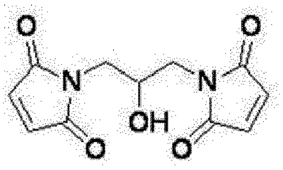

Polymerizable compound 37

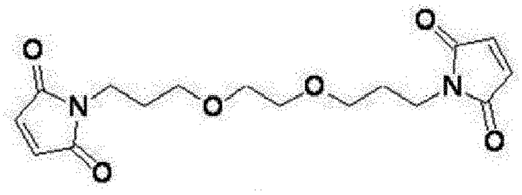

Polymerizable compound 38

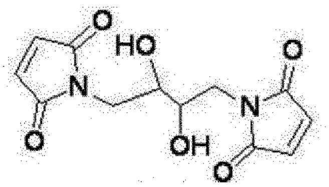

Polymerizable compound 39

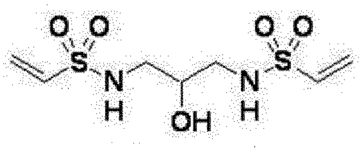

Polymerizable compound 40

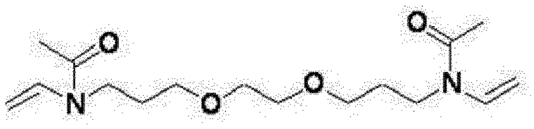

Polymerizable compound 41

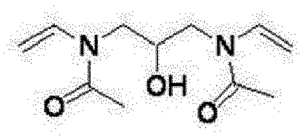

Polymerizable compound 42

Any one of the polymerizable compound can be incorporated singly or two or more kinds thereof may be incorporated in combination.

The content of the polymerizable compound in the ink composition is preferably from 3% by mass to 50% by mass, more preferably from 10% by mass to 30% by mass, and still more preferably from 15% by mass to 25% by mass, with respect to the total mass of the ink composition.

<Polymerization Initiator>

It is preferable that the ink for inkjet recording includes a polymerization initiator, and the polymerization initiator is preferably a water-soluble polymerization initiator. Here, the water-soluble polymerization initiator means that a polymerization initiator which dissolves in distilled water at 25°C at a proportion of 0.5% by mass or more. It is preferable that the water-soluble polymerization initiator dissolves in distilled water at 25°C at a proportion of 1% by mass or more, and more preferably dissolves at a proportion of 3% by mass or more.

Examples of the water-soluble polymerization initiator include a compound represented by the following Formula (1), and the compounds described in JP-A No. 2005-307198. Among them, a water-soluble polymerization initiator represented by the following Formula (1) is preferred from the viewpoint of the scratch resistance of images.

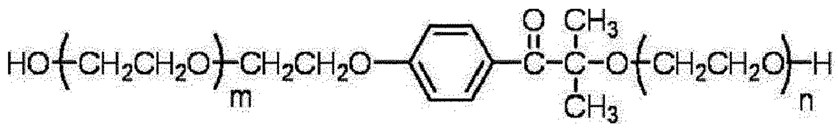

(1)

In Formula (1), each of m and n independently represents an integer of 0 or more, and the sum m+n represents an integer from 0 to 3. However, it is preferable that m is from 0 to 3, while n is 0 or 1; and it is more preferable that m is 0 or 1, while n is 0.

Specific examples of the compound represented by Formula (1) is shown below, but the compound represented by Formula (1) which may be used in the invention is not limited to these specific examples.

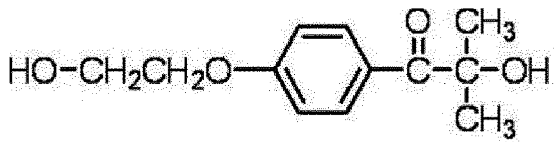

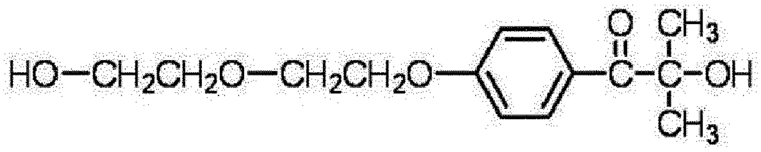

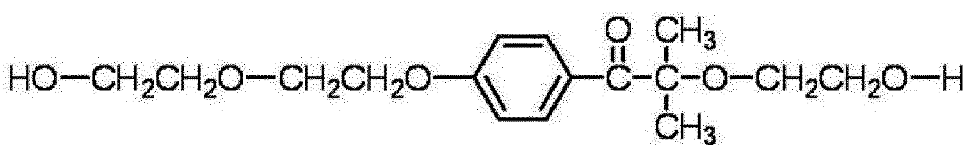

The compound represented by Formula (1) may be a compound synthesized according to the description of JP-A No. 2005-307198, or may be a commercially available compound. Examples of a commercially available compound represented by Formula (1) include IRGACURE 2959 (m = 0, and n = 0).

The content of the polymerization initiator in the ink for inkjet recording is, in terms of solid content, preferably in the range of from 0.1% by mass to 30% by mass, more preferably in the range of from 0.5% by mass to 20% by mass, still more preferably in the range of from 1.0% by mass to 15% by mass, and most preferably in the range of from 1.0% by mass to 5.0% by mass.

<Other Components>

The ink for inkjet recording may further include any one or more of various additives as other components, if necessary.

Examples of the various additives include known additives such as colloidal silica, a surfactant, an ultraviolet absorber, a fading inhibitor, an antifungal agent, a pH adjusting agent, a rust preventive agent, an oxidation inhibitor, an emulsion stabilizer, an antiseptic agent, a defoamant, a viscosity adjusting agent, a dispersion stabilizer, and a chelating agent. The contents of these additives may be appropriately determined in accordance with the use of the additives, but for example, the contents may be respectively set to about from 0.02% by mass to 1.00% by mass of the ink composition.

It is preferable that the ink for inkjet recording further includes at least one kind of colloidal silica. When the ink includes colloidal silica, ejection stability can be enhanced, and a decrease in liquid repellency in inkjet head members can also be suppressed. Particularly, in a case in which silicon is used in at least some of inkjet head members, the effect is particularly highly exhibited.

In this regard, it is speculated that, for example, when colloidal silica is incorporated, hydrolysis of the ink components are effectively suppressed, and stability of the ink composition is enhanced, so that even in a case in which ejection of the ink for inkjet recording on an inkjet recording apparatus is stopped and held for a certain time period, and then ejection is resumed thereafter, an excellent ejection stability (restorability after being left to stand) can be obtained, and scratch resistance of images can also be satisfied. Furthermore, it is speculated that when colloidal silica adsorbs appropriately to the surface of inkjet head members, erosion of the surface caused by the ink components can be lessened , whereby deterioration of liquid repellency can be prevented.

Colloidal silica is a colloid composed of fine particles of an inorganic oxide containing silicon with an average particle diameter of several hundred nanometers or less. Colloidal silica contains silicon dioxide (including hydrates thereof) as a main component, and may also contain an aluminate as a small quantity component. Examples of the aluminate that may be included as a small quantity component include sodium aluminate and potassium aluminate.

Colloidal silica may also include an inorganic salt such as sodium hydroxide, potassium hydroxide, lithium hydroxide, or ammonium hydroxide; and/or an organic salts such as tetramethylammonium hydroxide. These inorganic salts and organic salts may function as, for example, stabilizers of the colloid.

There are no particular limitations on the dispersing medium for the colloidal silica, and the dispersing medium may be any of water, an organic solvent, or a mixture thereof. The organic solvent may be a water-soluble organic solvent, or may be a non-water-soluble organic solvent, but a water-soluble organic solvent is preferred. Specific examples include methanol, ethanol, isopropyl alcohol, and n-propanol.

The method for producing colloidal silica is not particularly limited, and colloidal silica can be produced by a conventionally used method. For example, colloidal silica can be produced from aerosil synthesis based on thermal decomposition of silicon tetrachloride, or from water glass. Alternatively, colloidal silica can also be produced by a liquid phase synthesis method such as hydrolysis of alkoxide (see, for example, "Seni to Kogyo (Fibers and Industry)", Vol. 60, No. 7 (2004), p. 376).

The average particle diameter of the particles included in the colloidal silica is not particularly limited, but the average particle diameter is preferably from 1 nm to 25 nm, more preferably from 3 nm to 20 nm, still more preferably from 3 nm to 15 nm, and particularly preferably from 5 nm to 10 nm.

When the average particle diameter is 25 nm or less, damages (for example, deterioration of liquid repellency) caused by the ink to a member of the inkjet head, for example, a base material, a protective film, and a liquid repellent film, can be more effectively suppressed. The reason for this can be speculated as follows. That is, for example, when the average particle diameter is smaller, the total surface area of the particles increases, and the damage to the members constituting the inkjet head is suppressed more effectively. Furthermore, from the viewpoints of ejectability of the ink composition and the polishing agent effect caused by the particles, the average particle diameter of the particles is preferably 25 nm or less.

When the average particle diameter is 1 nm or more, productivity can be enhanced, and a colloidal silica having reduced fluctuations in the performance can be obtained.

The average particle diameter of the colloidal silica for the invention can be measured by techniques such as a light scattering method and a laser diffraction method, which are general analysis methods for dispersed particles, but in this invention, a more direct technique is used, in which the particle diameters of three-hundred colloidal silica particles are actually measured by a transmission electron microscopic (TEM) photographing method, and the average value

thereof is taken as the average particle diameter.

The shape of the colloidal silica is not particularly limited as long as the ejection performance of the ink is not interrupted. For example, the shape may be any of a spherical shape, a lengthy shape, a needle shape, or a rosary-like shape. Among them, the shape is preferably a spherical shape from the viewpoint of ejectability of the ink.

The colloidal silica may be produced by any of the above-described production method, or may be a commercially available product. Specific examples of the commercially available product include LUDOX AM, LUDOX AS, LUDOX LS, LUDOX TM, and LUDOX HS (all manufactured by E.I. Du Pont de Nemours & Co.); SNOWTEX S, SNOWTEX XS, SNOWTEX 20, SNOWTEX 30, SNOWTEX 40, SNOWTEX N, SNOWTEX C, and SNOWTEX O (all manufactured by Nissan Chemical Industries, Ltd.); SYTON C-30 and SYTON ZOO (all manufactured by Monsanto Co.); NALCOAG-1060 and NALCOAG-ID21 to NALCOAG-ID 64 (all manufactured by Nalco Chemical Co.); METHANOL SOL, IPA SOL, MEK SOL, and TOLUENE SOL (all manufactured by Fuso Chemical Co., Ltd.); CATALOID-S, CATALOID-F120, CATALOID SI-350, CATALOID SI-500, CATALOID SI-30, CATALOID S-20L, CATALOID S-20H, CATALOID S-30L, CATALOID S-30H, CATALOID SI-40, and OSCAL-1432 (isopropyl alcohol sol) (all manufactured by JGC Catalysts and Chemicals Ltd.); and ADELITE (manufactured by Asahi Denka Kogyo K.K.). Examples of rosary-shaped colloidal silica include products commercially available under the trade names of SNOWTEX ST-UP, SNOWTEX PS-S, SNOWTEX PS-M, SNOWTEX ST-OUP, SNOWTEX PS-SO, and SNOWTEX PS-MO (all manufactured by Nissan Chemical Industries, Ltd.), and these are easily available.

Many of commercially available colloidal silica dispersion liquids have their pH adjusted to acidity or alkalinity. This is because the stable dispersion range of colloidal silica exists on the acidic side or on the alkaline side, and when a commercially available colloidal silica dispersion liquid is added to the ink composition, it is necessary to add the colloidal silica dispersion liquid in consideration of the pH of the stable dispersion range of the colloidal silica and the pH of the ink composition.

The content of the colloidal silica in the ink for inkjet recording is not particularly limited, but the content is preferably from 0.005% by mass to 0.5% by mass of the total amount of the ink for inkjet recording, more preferably from 0.005% by mass to 0.1% by mass of the total amount of the ink for inkjet recording, and particularly preferably from 0.01% by mass to 0.1% by mass of the total amount of the ink for inkjet recording. When the content of the colloidal silica in the ink for inkjet recording is equal to lower than the upper limit of the above-described preferable range, ejectability of the ink for inkjet recording can be further enhanced, and the influence on the inkjet head caused by the polishing agent effect of the silica particles can be suppressed more effectively. When the content of the colloidal silica is equal to or higher than the lower limit of the above-described preferable range, deterioration of liquid repellency of the liquid repellent film at the inkjet head surface can be suppressed more effectively.

From the viewpoints of ink ejectability and suppressing deterioration of the liquid repellency of the liquid repellent film at the inkjet head surface, the ink for inkjet recording preferably includes a colloidal silica having an average particle diameter (as measured by TEM photographing method) of from 3 nm to 25 nm in an amount of from 0.005% by mass to 0.5% by mass of the total amount of the ink for inkjet recording, and more preferably includes a colloidal silica having an average particle diameter of from 3 nm to 15 nm in an amount of from 0.005% by mass to 0.1% by mass of the total amount of the ink for inkjet recording.

The content ratio of the colloidal silica to the polymerizable compound (colloidal silica/polymerizable compound) in the ink for inkjet recording is, on a mass basis, preferably from 0.0001 to 0.1, and more preferably from 0.001 to 0.05.

When the content ratio of the colloidal silica to the polymerizable compound is 0.0001 or more, deterioration of the liquid repellency of the liquid repellent film at the inkjet head surface can be suppressed more effectively. Also, when the content ratio is 0.1 or less, ejectability can be further enhanced.

The ink for inkjet recording preferably includes at least one surfactant. The surfactant can be used as a surface tension adjusting agent.

A compound having a structure which includes both a hydrophilic part and a hydrophobic part in the molecule, or the like can be effectively used as the surface tension adjusting agent, and, as the surface tension adjusting agent, any one of an anionic surfactant, a cationic surfactant, an amphoteric surfactant, a nonionic surfactant, or a betaine-based surfactant can be used.

In a case in which a surfactant (surface tension adjusting agent) is incorporated into the ink composition, from the viewpoint of performing ejection of the ink composition favorably by an inkjet system, the surfactant is preferably incorporated in an amount capable of adjusting the surface tension of the ink for inkjet recording to the range of from 20 mN/m to 60 mN/m, and in terms of surface tension, more preferably to the range of from 20 mN/m to 45 mN/m, and still more preferably to the range of from 25 mN/m to 40 mN/m.

The specific amount of the surfactant in the ink for inkjet recording is not particularly limited, while a surface tension in a preferred range is preferably obtained, and the specific amount of the surfactant is preferably 0.1 % by mass or more, more preferably from 0.1 % by mass to 10% by mass, and still more preferably from 0.2% by mass to 3% by mass.

Examples of the ultraviolet absorber include benzophenone-based ultraviolet absorbers, benzotriazole-based ultraviolet absorbers, salicylate-based ultraviolet absorbers, cyanoacrylate-based ultraviolet absorbers, and nickel complex salt-based ultraviolet absorbers.

Regarding the fading inhibitor, any of various organic or metal complex-based fading inhibitors can be used. Examples of organic fading inhibitors include hydroquinones, alkoxyphenols, dialkoxyphenols, phenols, anilines, amines, indanes, chromanes, alkoxyanilines, and heterocyclic rings. Examples of metal complexes include nickel complexes and zinc complexes.

Examples of the antifungal agent include sodium dehydroacetate, sodium benzoate, sodium pyridinethione-1-oxide, p-hydroxybenzoic acid ethyl ester, 1,2-benzisothiazolin-3-one, sodium sorbate, and pentachlorophenol sodium salt.

The pH adjusting agent is not particularly limited as long as the agent can adjust the pH to a desired value without adversely affecting the ink composition to be prepared, and the pH adjusting agent can be appropriately selected according to the purpose. Examples include alcohol amines (for example, diethanolamine, triethanolamine, and 2-amino-2-ethyl-1,3-propanediol), alkali metal hydroxides (for example, lithium hydroxide, sodium hydroxide, and potassium hydroxide), ammonium hydroxides (for example, ammonium hydroxide and quaternary ammonium hydroxide), phosphonium hydroxide, and alkali metal carbonates.

Examples of the rust preventive agent include acidic sulfites, sodium thiosulfate, ammonium thiodiglycolate, diisopropylammonium nitrite, pentaerythritol tetranitrate, and dicyclohexylammonium nitrite.

Examples of the oxidation inhibitor include phenolic oxidation inhibitors (including hindered phenol-based oxidation inhibitors), amine-based oxidation inhibitors, sulfur-based oxidation inhibitors, and phosphorus-based oxidation inhibitors.

Examples of the chelating agent include sodium ethylenediamine tetraacetate, sodium nitrilotriacetate, sodium hydroxyethyl ethylenediamine triacetate, sodium diethylenetriamine pentaacetate, and sodium uramil diacetate.

(Properties of Ink Composition)

The surface tension (25°C) of the ink composition is preferably from 20 mN/m to 60 mN/m, more preferably from 20 mN/m to 45 mN/m, and still more preferably from 25 mN/m to 40 mN/m.

The surface tension is measured using an Automatic Surface Tensiometer, CBVP-Z (manufactured by Kyowa Interface Science Co., Ltd.) under the conditions of an ink composition temperature of 25°C.

The viscosity at 25°C of the ink composition is preferably from 1.2 mPa·s to 15.0 mPa·s, more preferably from 2 mPa·s to less than 13 mPa·s, and still more preferably from 2.5 mPa·s to less than 10 mPa·s.

The viscosity is measured using a VISCOMETER TV-22 (manufactured by Toki Sangyo Co., Ltd.) under the conditions of an ink composition temperature of 25°C.

[Ink Set]

The ink set according to the invention preferably includes at least an ink for inkjet recording, and a maintenance liquid including an organic solvent and water. Furthermore, the ink set may further include a treatment liquid.

<Maintenance liquid>

The maintenance liquid is not particularly limited, but preferably includes an organic solvent and water. The maintenance liquid may further include, if necessary, a surfactant, a moisture retaining agent, a basic compound, and one or more other additives.

It is preferable that the maintenance liquid used in the invention is a liquid including water, a compound represented by Formula (II) and having an HLB value of from 10.5 to 13.8, and a compound represented by Formula (III).

(Compound Represented by Formula (II))

It is preferable that the maintenance liquid which may be used in the invention includes at least one kind of compound represented by the following Formula (II) and having an HLB value of from 10.5 to 13.8 (hereinafter, also referred to as surfactant). This compound may penetrate into ink deposits and may enhance solubility of the ink deposits. Accordingly, ejection deviation or ejection failure can be prevented.

$$R^1-O-(CH_2CH_2O)_m-H$$

Formula (II)

In Formula (II), $R^1$ represents a linear or branched alkyl group having from 6 to 20 carbon atoms, a linear or branched alkenyl group having from 6 to 20 carbon atoms, or a substituted or unsubstituted aryl group; and m represents an integer from 3 to 14.

The alkyl group represented by $R^1$ has from 6 to 20 carbon atoms, may be unsubstituted or may have a substituent, and may have any of a linear structure or a branched structure. Examples of the alkyl group include an octyl group, a nonyl group, a decyl group, an undecyl group, a dodecyl group, a tridecyl group, a tetradecyl group, a cetyl (hexadecyl) group, a stearyl (octadecyl) group, a nonadecyl group, and an icosyl group. Among them, a linear or branched alkyl group having from 8 to 10 carbon atoms is preferred, and a linear alkyl group having from 8 to 10 carbon atoms is particularly preferred.

The alkenyl group represented by $R^1$ has from 6 to 20 carbon atoms, may be unsubstituted or may have a substituent, and may have any of a linear structure or a branched structure. Examples of the alkenyl group include an octenyl group, a nonenyl group, a decenyl group, an undecenyl group, a dodecenyl group, a tridecenyl group, a tetradecenyl group, a hexadecenyl group, an oleyl (octadecenyl group), a nonadecenyl group, and an icosenyl group. Among them, an alkenyl group having from 8 to 10 carbon atoms is preferred.

The substituted or unsubstituted aryl group represented by $R^1$ is preferably a substituted aryl group, and is preferably an aryl group having from 10 to 20 carbon atoms, and more preferably an aryl group having from 12 to 16 carbon atoms. The substituent in a case in which the aryl group has a substituent is preferably an alkyl group, an alkenyl group, or the like; more preferably an alkyl group; and particularly preferably an alkyl group having from 6 to 10 carbon atoms. Preferred examples of the aryl group include a nonylphenyl group and an octylphenyl group.

m represents an integer of from 3 to 14. When m is 2 or less, aggregation may occur at the time of ink mixing, and maintenance performance may be deteriorated. When m is 15 or more, it is not possible to provide the effect of enhancing solubility of ink deposits. m is preferably an integer of from 4 to 8, and more preferably from 5 to 7. m can be varied depending on the feed amount of the epoxy that is added to the alkyl group.

The HLB value of the compound represented by Formula (II) is in the range of from 10.5 to 13.8. When the HLB value is in this range, aggregation at the time of ink mixing can be suppressed, and ejection failure over time can be prevented. Also, favorable cleaning performance can be obtained without causing deterioration of the solubility of ink deposits.

The "HLB value" in the invention is a value calculated by the following Formula (1).

Formula (1): HLB = 20 x (formula weight of polyethylene oxide group) / (molecular weight)

Among the compounds represented by Formula (II), a compound in which $R^1$ represents a linear alkyl group having from 8 to 10 carbon atoms, and m represents an integer from 4 to 8 is preferred, and a compound in which $R^1$ represents a linear alkyl group having 10 carbon atoms, and m represents an integer from 5 to 7 is particularly preferred, from the viewpoints of favorable dissolvability of ink deposits and suppressing aggregation at the time of ink mixing.

Specific examples of the compound represented by Formula (II) include the compounds shown below. Meanwhile, "PEG" represents "polyethylene glycol".

$R^1$-O-$(CH_2CH_2O)_m$-H

| No | Compound name | $R^1$ | m number | HLB |
|---|---|---|---|---|
| (II)-1 | PEG(m = 3) monohexyl ether | $C_6H_{13}$ | 3 | 11.3 |
| (II)-2 | PEG(m = 4) monohexyl ether | $C_6H_{13}$ | 4 | 12.7 |
| (II)-3 | PEG(m = 5) monohexyl ether | $C_6H_{13}$ | 5 | 13.7 |

(continued)

| No | Compound name | $R^1$ | m number | HLB |
|---|---|---|---|---|
| (II)-4 | PEG(m = 4) monooctyl ether | $C_8H_{17}$ | 4 | 11.5 |
| (II)-5 | PEG(m = 5) monooctyl ether | $C_8H_{17}$ | 5 | 12.6 |
| (II)-6 | PEG(m = 6) monooctyl ether | $C_8H_{17}$ | 6 | 13.4 |
| (II)-7 | PEG(m = 4) monodecyl ether | $C_{10}H_{25}$ | 4 | 10.5 |
| (II)-8 | PEG(m = 6) monodecyl ether | $C_{10}H_{25}$ | 6 | 12.5 |
| (II)-9 | PEG(m = 7) monodecyl ether | $C_{10}H_{25}$ | 7 | 13.2 |
| (II)-10 | PEG(m = 8) monodecyl ether | $C_{10}H_{25}$ | 8 | 13.8 |
| (II)-11 | PEG(m = 8) monolauryl ether | $C_{12}H_{25}$ | 8 | 13.1 |
| (II)-12 | PEG(m = 8) cetyl ether | $C_{16}H_{33}$ | 8 | 11.8 |
| (II)-13 | PEG(m = 10) cetyl ether | $C_{16}H_{33}$ | 10 | 12.9 |
| (II)-14 | PEG(m = 8) oleyl ether | $C_{18}H_{35}$ | 8 | 11.3 |
| (II)-15 | PEG(m = 10) oleyl ether | $C_{18}H_{35}$ | 10 | 12.4 |
| (II)-16 | PEG(m = 12) oleyl ether | $C_{18}H_{35}$ | 12 | 13.2 |
| (II)-17 | PEG(m = 8) icosyl ether | $C_{20}H_{41}$ | 8 | 10.8 |
| (II)-18 | PEG(m = 12) icosyl ether | $C_{20}H_{41}$ | 12 | 12.8 |
| (II)-19 | PEG(m = 6) nonyl phenyl ether | $C_{15}H_{23}$ | 6 | 10.7 |
| (II)-20 | PEG(m = 8) nonyl phenyl ether | $C_{15}H_{23}$ | 8 | 12.1 |
| (II)-21 | PEG(m = 8) octyl phenyl ether | $C_{14}H_{21}$ | 8 | 12.4 |

The content of the compound represented by the above Formula (II) in the maintenance liquid is preferably from 0.1% to 10% by mass, and more preferably from 0.5% to 5% by mass, with respect to the total amount of the maintenance liquid. When the content of the compound represented by Formula (II) is 0.1% by mass or more, favorable dissolvability of the ink deposits (for example, particulate ink produced as a result of drying and solidification of mist-like ink) adhering onto the ejection head can be obtained, and favolable cleaning performance can be provided. When the content of this compound is 10% by mass or less, it is advantageous in view of the dissolvability of the maintenance liquid, and problems such as precipitation and cloudiness are less likely to occur.

Regarding the compound represented by Formula (II), a mixture of two or more kinds thereof ,may be used, if necessary.

(Compound Represented by Formula (III))

The maintenance liquid which may be used in the invention preferably includes a compound represented by the following Formula (III) (hereinafter, also referred to as an organic solvent), together with the compound represented by Formula (II). When the maintenance liquid includes a compound represented by the following Formula (III), the maintenance liquid may exhibit further favorable dissolvability of ink deposits. The compound represented by the following Formula (III) also has an effect of dissolving the compound represented by Formula (II) itself.

$$R^3\text{—}\left(OR^4\right)_x\text{—}OR^5$$

Formula (III)

In the above Formula (III), each of $R^3$ and $R^5$ independently represents a hydrogen atom or an alkyl group having 1 to 4 carbon atoms; $R^4$ represents an ethylene group or a propylene group; provided that $R^3$ and $R^5$ do not

represent hydrogen atoms at the same time, and x represents an integer from 1 to 4.

Examples of the alkyl group having 1 to 4 carbon atoms, which is represented by $R^3$ and $R^5$, include a methyl group, an ethyl group, an n-propyl group, an isopropyl group, an n-butyl group, a sec-butyl group, and a tert-butyl group.

Examples of the compound represented by Formula (III) include ethylene glycol monomethyl ether, ethylene glycol monoethyl ether, ethylene glycol monobutyl ether, diethylene glycol monomethyl ether (DEGmME/SP value: 23.0), diethylene glycol monoethyl ether (DEGmEE/SP value: 22.4), diethylene glycol monobutyl ether (DEGmBE/SP value: 21.5), triethylene glycol monomethyl ether (TEGmME/SP value: 19.6), triethylene glycol monoethyl ether (TEGmEE/SP value: 19.4), triethylene glycol monobutyl ether (TEGmBE/SP value: 21.1), propylene glycol monomethyl ether, propylene glycol monobutyl ether, dipropylene glycol monomethyl ether (DPGmME/SP value: 21.3), tripropylene glycol monomethyl ether (TPGmME/SP value: 21.3), dipropylene glycol (DPG/SP value: 27.2), and $nC_4H_9O(AO)_4$-H (AO = EO or PO, EO:PO [mass ratio] = 1 : 1, SP value: 20.1), and $HO(PO)_3$-H (SP value: 24.7). Among the organic solvents represented by Formula (III), any one of diethylene glycol monobutyl ether (DEGmBE) or triethylene glycol monomethyl ether (TEGmBE) is preferred, and diethylene glycol monobutyl ether (DEGmBE) is more preferred, from the viewpoint of increasing the dissolvability of ink deposits and the dissolvability of the compound represented by Formula (II).

The compound represented by the above Formula (III) may be used singly, or two or more kinds thereof may be used as a mixture.

The compound represented by Formula (III) is preferably incorporated at a content of 0.3% by mass to 30% by mass, and more preferably at a content of 1% by mass to 15% by mass, in the maintenance liquid. When the content of the compound represented by Formula (III) in the maintenance liquid is 0.3% by mass or more, the dissolvability of ink deposits can be enhanced. When the content of the compound represented by Formula (III) in the maintenance liquid is 30% by mass or less, aggregation at the time of ink mixing can be prevented.

The content ratio of the compound represented by Formula (III) (organic solvent) and the compound represented by Formula (II) (surfactant) (organic solvent:surfactant/ mass ratio) is preferably from 1 : 50 to 50 : 1, more preferably from 1 : 10 to 10 : 1, and still more preferably from 1 : 3 to 3 : 1. When the content ratio is in the above-described range, dissolvability of ink deposits can be further enhanced, and dissolvability of the photopolymerization initiator represented by Formula (I) in the maintenance liquid can also be enhanced.

Regarding the organic solvent, a compound represented by the following Structural Formula (1) can be incorporated to the extent that the effect of the invention is not impaired, in addition to the above-described solvents.

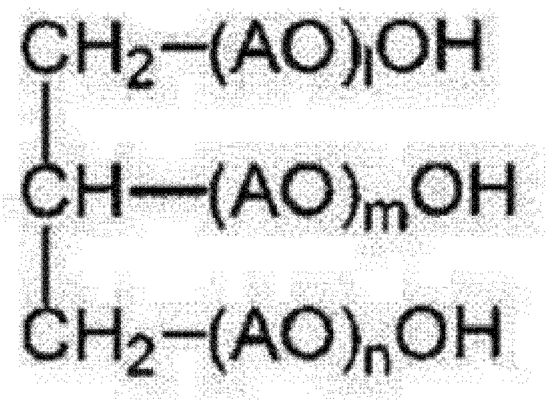

Structural Formula (1)

In Structural Formula (1), each of 1, m and n independently represents an integer of 1 or more; and the sum l+m+n satisfies from 3 to 15. When the sum l+m+n is 3 or more, cleaning performance and a curl suppressing effect may become favorable, and when the sum is 15 or less, ejectability can be maintained favorably. The sum l+m+n is preferably from 3 to 12, and more preferably from 3 to 10. AO represents an ethyleneoxy (EO) group and/or a propyleneoxy (PO) group, and among them, a propyleneoxy group is preferred. The AOs of $(AO)_l$, $(AO)_m$ and $(AO)_n$ in Structural Formulas (1) may be respectively identical with or different from one another.

Examples of the compound represented by Structural Formula (1) include the following compounds. Meanwhile, in the following compounds, the numerical values within the parentheses represent SP values, and "OP" represents propyleneoxy.

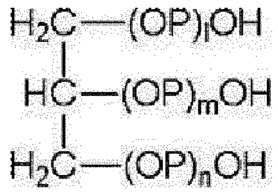

l+m+n=3 (26.4)

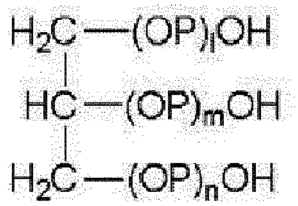

l+m+n=4 (24.9)

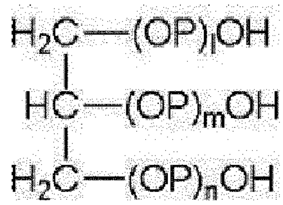

l+m+n=5 (23.9)

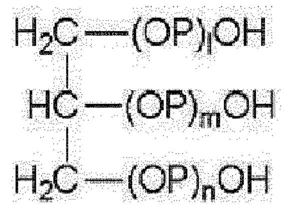

l+m+n=6 (23.2)

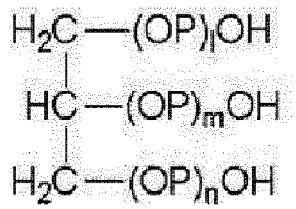

l+m+n=7 (22.6)

OP = propyleneoxy

Regarding the compound represented by the above Structural Formula (1), any commercially available product may be used, and examples thereof include SANNIX GP-250 (average molecular weight: 250), SANNIX GP-400 (average molecular weight: 400), and SANNIX GP-600 (average molecular weight: 600) [all manufactured by Sanyo Chemical Industries, Ltd.] as a polyoxypropylated glycerin (ether of polypropylene glycol and glycerin).

When the maintenance liquid which may be used in the invention includes another organic solvent in addition to the compound represented by Formula (III), the other organic solvent is preferably an organic solvent having an SP value of 27.5 or less, from the viewpoint of the dissolvability of ink deposits.

It is preferable that the maintenance liquid of the invention includes an organic solvent having an SP value of 27.5 or less in an amount of 50% by mass or more with respect to the total amount of organic solvents. When the content of the organic solvent having an SP value of 27.5 or less is 50% by mass or more, dissolvability of ink deposits on the ejection head can be further enhanced, and cleaning performance can be further increased. The content of the organic solvent having an SP value of 27.5 or less is more preferably 60% by mass or more, still more preferably 70% by mass or more, and particularly preferably 80% by mass or more. Furthermore, it is preferable that the maintenance liquid includes the compound represented by Formula (III) in an amount in the range described above.

The SP value is preferably 24 or less, and more preferably 22 or less, from the viewpoint of enhancing the dissolvability of ink deposits.

Furthermore, the maintenance liquid of the invention may also include another organic solvent in addition to the compound represented by Formula (III) and the compound represented by Structural Formula (1). Examples of such organic solvent include water-soluble organic solvents such as alcohol compounds, polyol compounds that can be used as moisture retaining agents, and ether compounds. Examples of the alcohol compounds include linear or branched

alkyl alcohol compounds such as ethanol, butanol, and isopropanol. Specific examples of the ether compounds include alkyl ether compounds such as diethyl ether, dibutyl ether, ethyl methyl ether, dihexyl ether, and furan. Further examples of water-soluble organic solvents also include lactams, 1,3-dimethyl-2-imidazolidinone, formamide, acetamide, dimethyl sulfoxide, sorbitol, sorbitan, acetine, diacetine, triacetine, sulfolane and the like, which can be used as moisture retaining agents.

Any one of these organic solvents may be used singly, or two or more kinds thereof may be used in combination.

The solubility parameter (SP value) is a value represented by the square root of molecular cohesive energy, and is a value calculated by the method described in R.F. Fedors, Polymer Engineering Science, 14, p. 147-154 (1967), which is also described in the description of the water-soluble organic solvent in the ink for inkjet in the above.

The total content of the organic solvent in the maintenance liquid of the invention is preferably in the range of from 1% by mass to 50% by mass with respect to the total mass of the maintenance liquid, in view of cleaning performance. In this regard, it is preferable that the ratio of the content of the water-soluble organic solvent represented by the above Formula (III) with respect to the total content of the organic solvents is 10% by mass or more, from the viewpoint of enhancing the dissolvability of ink deposits.

(Moisturizing Agent)

The maintenance liquid of the invention preferably includes a moisturizing agent. A moisturizing agent refers to a water-soluble compound which is less volatile and has relatively high moisture retaining capacity.

When the moisturizing agent is incorporated, drying of the maintenance liquid caused by moisture evaporation can be suppressed, whereby alteration of the composition of the maintenance liquid during long-term storage can be suppressed.

Examples of the moisture retaining agent include polyols, lactams, and water-soluble moisture retaining agent. Examples of polyol include glycerin, ethylene glycol, diethylene glycol, triethylene glycol, tetraethylene glycol, polyethylene glycol, propylene glycol, dipropylene glycol, polypropylene glycol, 1,3-propanediol, 1,4-butanediol, 1,5-pentanediol, and pentaerythritol. Examples of lactam include 2-pyrrolidone and N-methyl-2-pyrrolidone. Examples of the water-soluble solid moisture retaining agents include nitrogen compounds such as urea, thiourea, and N-ethylurea; and diols such as 1,6-hexanediol, 1,8-octanediol, 2,2-dimethyl-1,3-propanediol, and 2,2-diethyl-1,3-propanediol; trimethylolethane, trimethylolpropane. Examples of the water-soluble solid moisture retaining agents further include monosaccharides, disaccharides, oligosaccharides, polysaccharides, and derivatives such as reduced sugars, oxidized sugars, amino acids and thio sugars of these saccharides. Examples of monosaccharide, disaccharide or polysaccharide include glucose, mannose, fructose, ribose, xylose, arabinose, galactose, maltose, cellobiose, lactose, sucrose, trehalose, and maltotriose. Examples of the reduced sugar include glusitol (sorbitol). Examples of the oxidized sugars include aldonic acid. Among them, the moisture retaining agent used in the invention is preferably a polyol; more preferably glycerin, ethylene glycol, diethylene glycol, or triethylene glycol; and most preferably diethylene glycol.

The content of the moisture retaining agent in the maintenance liquid is preferably in the range of from 10% by mass to 40% by mass, and further preferably in the range of from 16% by mass to 30% by mass, with respect to the total amount of the maintenance liquid. When the content of the moisture retaining agent is 10% by mass or more, drying of the maintenance liquid caused by moisture evaporation cam be suppressed. When the content of the moisture retaining agent is 40% by mass or less, deterioration of fluidity caused by viscosity increase can be prevented, and at the same time, favorable cleaning performance can be secured.

The total content of the organic solvent represented by Formula (III) and the moisture retaining agent in the maintenance liquid is preferably from 20% to 40% by mass. It is preferable that the mass ratio of the organic solvent and the moisture retaining agent is from 1 : 1 to 1 : 100, more preferably from 1 : 1 to 1 : 10, and particularly preferably from 1 : 2 to 1 : 5. These ranges are preferred from the viewpoints of obtaining the dissolvability of the compound of Formula (II) of the invention, and suppressing aggregation at the time of drying of the ink mixed liquid.

(Water)

The maintenance liquid of the invention preferably includes water as a solvent.

Regarding water, pure water such as ion-exchanged water, ultrafiltered water, reverse osmosis-treated water, or distilled water, or ultrapure water is preferred for the purpose of reducing ionic impurities as much as possible.

The proportion of water with respect to the total mass of the maintenance liquid is preferably in the range of from 50% by mass to 80% by mass, and more preferably in the range of from 60% by mass to 70% by mass.

(Basic Compound)

The maintenance liquid of the invention preferably includes a basic compound. When the maintenance liquid

includes a basic compound, in a case in which the maintenance liquid is stored or the like for a long time, the maintenance liquid can have a buffering function for preventing a decrease in pH as a result of decomposition of the included components or the like.

When a basic compound is used in this invention, a compound having pH buffering ability in the pH range of the maintenance liquid is desirable, and a compound having a solubility of 5 mmol/L or more in the solvent that is a component of the maintenance liquid (for example, water, an organic solvent, or a mixed solvent thereof) is preferred.

Regarding the basic compound, from the viewpoint of effectively exhibiting pH buffering ability in the pH range of the maintenance liquid, a compound having a pKa value of from 6.0 to 8.5 is preferred, and a compound having a pKa value of from 6.8 to 8.3 is more preferred.

The basic compound may be any of an inorganic compound or an organic compound. In view of obtaining a desired pKa value, and of having favorable solubility in the maintenance liquid, the basic compound is preferably a basic organic compound. The basic compound may be a monobasic compound, or may be a polybasic compound. The pKa value of the basic organic compound is the pKa value of the conjugate acid.

Specific examples of the basic compound include the following compounds:

- Cacodylic acid (pKa: 6.2)
- 2,2-Bis(hydroxymethyl)-2,2',2"-nitrilotriethanol (pKa: 6.5)
- Piperazine-N,N'-bis(2-ethanesulfuric acid) (pKa: 6.8)
- Phosphoric acid (pKa2: 6.86)
- Imidazole (pKa: 7.0)
- N'-2-hydroxyethylpiperazine-N',2-ethanesulfuric acid (pKa: 7.6)
- N-methylmorpholine (pKa: 7.8)
- Triethanolamine (pKa: 7.8)
- Hydrazine (pKa: 8.11)
- Trishydroxymethylaminomethane (pKa: 8.3)

When a basic compound is used in the maintenance liquid, the content thereof is preferably in the range of from 0.01% by mass to 10% by mass, and more preferably in the range of from 0.1% by mass to 5% by mass, with respect to the total amount of the maintenance liquid. When the content of the basic compound is 0.01% by mass or more, fluctuations in the pH of the maintenance liquid can be suppressed, so that the occurrence of aggregation of the components in the ink or the like in a case in which the maintenance liquid is mixed with ink after cleaning, can be effectively prevented. When the content is 10% by mass or less, it is advantageous from the viewpoint that when the maintenance liquid is concentrated on the head surfaces, precipitation is not likely to occur thereon.

(Defoamant)

The maintenance liquid of the invention preferably includes a defoamant. Examples of the defoamant include silicone-based compounds and pluronic-based compounds, and among these, it is more preferable that the maintenance liquid includes a silicone-based defoamant. The silicone-based defoamant is preferably a defoamant having a polysiloxane structure, and BYK-024 manufactured by BYK Chemie Japan K.K. is particularly preferred.

(Other Additives)

The maintenance liquid for inkjet recording of the invention may include, if necessary, for example, any of other additives such as a fading inhibitor, an emulsion stabilizer, a penetration accelerator, an ultraviolet absorber, a rust preventive agent, an antiseptic agent, an antifungal agent, a pH adjusting agent, a surface tension adjusting agent (a nonionic surfactant, a cationic surfactant, an anionic surfactant, a betaine-based surfactant, or the like), a viscosity adjusting agent, and the silicone-based compounds described in JP-A No. 2011-63777.

The maintenance liquid of the invention may further include a surfactant other than the compound represented by Formula (II) described above, as a surface tension adjusting agent.

Preferred examples of the surfactant other than the compound of Formula (II) include anionic surfactants such as a fatty acid salt, an alkyl carboxylic acid salt, an alkyl sulfuric acid ester salt, an alkyl sulfonic acid salt, an alkyl benzenesulfonic acid salt, an alkyl naphthalenesulfonic acid salt, a dialkyl sulfosuccinic acid salt, an alkyl phosphoric acid ester salt, a naphthalenesulfonic acid-formalin condensate, and a polyoxyethylene alkyl sulfuric acid ester salt; and nonionic surfactants such as a polyoxyethylene alkyl ether, a polyoxyethylene alkyl aryl ether, a polyoxyethylene fatty acid ester, a sorbitan fatty acid ester, a polyoxyethylene sorbitan fatty acid ester, an acetylene diol derivative, a polyoxyethylene alkylamine, a glycerin fatty acid ester, and an oxyethylene-oxypropylene block copolymer. When the maintenance liquid includes such a surfactant, the content thereof in the maintenance liquid is preferably from 0.5% by mass

to 10% by mass with respect to the total amount of the maintenance liquid, from the viewpoint of cleaning performance.

The pH of the maintenance liquid according to the invention is preferably from 7.0 to 9.5, more preferably from 7.5 to 9.0, and particularly preferably from 8.0 to 8.8.

When the pH of the maintenance liquid is 7.0 or higher, aggregation is not likely to occur when the maintenance liquid is mixed with the ink composition of the invention, and when the pH is 9.5 or lower, deterioration of the liquid repellant film of the head can be prevented.

The viscosity at 25°C of the maintenance liquid is preferably from 1 mPa·s to 50 mPa·s, more preferably 1 mPa·s or more but less than 10 mPa·s, and still more preferably 2 mPa·s or more but less than 5 mPa·s, from the viewpoint of workability.

The viscosity is a value measured at 25°C using a VISCOMETER TV-22 (manufactured by Toki Sangyo Co., Ltd.).

The maintenance liquid of the invention is preferably a colorless liquid that does not include a pigment.

Furthermore, the solid content (25°C) in the maintenance liquid is not particularly limited, but from the viewpoint of preventing residual deposits after cleaning, the solid content is preferably 5% by mass or less, and more preferably 2% by mass or less.

<Treatment Liquid>

A treatment liquid is an aqueous composition which can form aggregates when brought into contact with an ink for inkjet recording. Specifically, the treatment liquid includes at least an aggregating component which is capable of aggregating dispersed particles such as a resin-coated quinacridone-based pigment in the ink for inkjet recording when the treatment liquid is mixed with an ink for inkjet recording, and forming aggregates The treatment liquid may further include one or more other components as necessary.

When the treatment liquid is used together with an inkjet for inkjet recording, inkjet recording can be accelerated, and even if high speed recording is performed, images with high density and high resolution can be obtained.

- Aggregating Component -

The treatment liquid includes at least one aggregating component capable of forming aggregates as a result of being brought into contact with an ink for inkjet recording. When the treatment liquid is mixed with an ink for inkjet recording ejected by an inkjet method, aggregation of a resin-coated quinacridone-based pigment or the like that is stably dispersed in the ink for inkjet recording is accelerated.

Examples of the treatment liquid include a liquid composition capable of generating aggregates by changing the pH of the ink for inkjet recording. At this time, from the viewpoint of the rate of aggregation of the ink for inkjet recording, the pH (25°C) of the treatment liquid is preferably from 1 to 6, more preferably from 1.2 to 5, and still more preferably from 1.5 to 4. In this case, the pH (25°C) of the ink for inkjet recording used in the ejection process is preferably from 7.5 to 9.5 (more preferably from 8.0 to 9.0).

In the invention, it is preferable that the pH (25°C) of the ink for inkjet recording is 7.5 or higher, and the pH (25°C) of the treatment liquid is from 3 to 5, from the viewpoints of the image density, resolution, and speed-up of inkjet image formation.

The aggregating component can be used singly, or in mixture of two or more kinds thereof.

The treatment liquid may include at least one acidic compound as the aggregating component.

Examples of the acidic compound that can be used include compounds having a phosphoric acid group, a phosphonic acid group, a phosphinic acid group, a sulfuric acid group, a sulfonic acid group, a sulfinic acid group, or a carboxyl group, or salts thereof (for example, polyvalent metal salts). Among them, a compound having a phosphoric acid group or a carboxyl group is more preferred, and a compound having a carboxyl group is still more preferred, from the viewpoint of the rate of aggregation of the ink composition.

The compound having a carboxyl group is preferably selected from polyacrylic acid, acetic acid, glycolic acid, malonic acid, malic acid, maleic acid, ascorbic acid, succinic acid, glutaric acid, fumaric acid, citric acid, tartaric acid, lactic acid, pyrrolidonecarboxylic acid, pyronecarboxylic acid, pyrrolecarboxylic acid, furancarboxylic acid, pyridinecarboxylic acid, coumaric acid, thiophenecarboxylic acid, nicotinic acid, or derivatives of these compounds, or salts thereof (for example, polyvalent metal salts). Any one of these compounds may be used singly, or two or more kinds thereof may be used as a mixture.

The treatment liquid may further include a water-based solvent (for example, water), in addition to the acidic compound.

When the treatment liquid includes an acidic compound, the content of the acidic compound in the treatment liquid is preferably from 5% by mass to 95% by mass, and more preferably from 10% by mass to 80% by mass, with respect to the total mass of the treatment liquid, from the viewpoint of an aggregating effect.

Preferred examples of the treatment liquid that can enhance high speed aggregability include a treatment liquid containing a polyvalent metal salt or polyallylamine.

Examples of the polyvalent metal salt include salts of alkaline earth metals of Group 2 of the Periodic Table of Elements (for example, magnesium and calcium), transition metals of Group 3 of the Periodic Table of Elements (for example, lanthanum), cations from Group 13 of the Periodic Table of Elements (for example, aluminum), and lanthanides (for example, neodymium). Examples of polyallylamine include polyallylamine and polyallylamine derivatives. Suitable examples of salts of metals include carboxylic acid salts (salts of formic acid, acetic acid, benzoic acid, and the like), nitric acid salts, chlorides, and thiocyanic acid salts. Among them, preferred examples include calcium salts or magnesium salts of a carboxylic acid (formic acid, acetic acid, and benzoic acid, and the like); calcium salt or magnesium salt of nitric acid; calcium chloride, magnesium chloride; and calcium salt or magnesium salt of thiocyanic acid.

When the treatment liquid includes a polyvalent metal salt, the content of the polyvalent metal salt in the treatment liquid is preferably in the range of from 1% by mass to 10% by mass, more preferably from 1.5% by mass to 7% by mass, and still more preferably from 2% by mass to 6% by mass, with respect to the total mass of the treatment liquid.

From the viewpoint of the rate of aggregation of the ink composition, the viscosity of the treatment liquid is preferably in the range of from 1 mPa·s to 30 mPa·s, more preferably in the range of from 1 mPa·s to 20 mPa·s, still more preferably in the range of from 2 mPa·s to 15 mPa·s, and particularly preferably in the range of from 2 mPa·s to 10 mPa·s. The viscosity is measured using a VISCOMETER TV-22 (manufactured by Toki Sangyo Co., Ltd.) under the conditions of 20°C.

From the viewpoint of the rate of aggregation of the ink composition, the surface tension of the treatment liquid is preferably from 20 mN/m to 60 mN/m, more preferably from 20 mN/m to 45 mN/m, and still more preferably from 25 mN/m to 40 mN/m. The surface tension is measured using an Automatic Surface Tensiometer, CBVP-Z (manufactured by Kyowa Surface Science Co., Ltd.) under the conditions of 25°C.

[Image Forming Method]

The image forming method of the invention preferably includes an ink ejection process of ejecting an ink for inkjet recording containing water, a carbon black pigment having a TEA adsorption capacity of 0.5 meq/g or more that is coated with a resin, resin particles, and a water-soluble organic solvent having an SP value of less than 28, from an inkjet head having a liquid repellent film on the ejection surface.

The image forming method of the invention may also include a process of further applying a maintenance liquid containing an organic solvent and water, and may also include a process of applying a treatment liquid.

The image forming method of the invention may also include one or more additional processes (other processes) such as a maintenance process of wiping off the ink composition attached to the liquid repellent film or ink deposits originating from the ink composition, as necessary.

The surface of the pigment may be coated with a resin in order to obtain dispersion stability in the ink composition. When a carbon black pigment is coated with a resin, direct contact of the carbon black pigment with a liquid repellent film may be suppressed by the presence of the resin.

In recent years, in order to enhance the image quality of images and in order to increase the efficiency of image formation, images are formed using an inkjet apparatus in which an inkjet head is provided with a nozzle plate on which plural ejection holes are arranged two-dimensionally, and a liquid repellent film is formed on the ejection surface of the nozzle plate.

A nozzle plate has a larger area of formation of the liquid repellent film, as compared with a short serial head that is used in a shuttling system by which recording is performed while an inkjet head is caused to scan in the width direction of a recording medium. Therefore, if the carbon black pigment in the ink composition has polishing properties, deterioration of the liquid repellent film is also likely to occur to a larger extent.

However, when an ink composition is ejected by the image forming method of the invention, deterioration of the liquid repellent film can be prevented even in inkjet recording using a nozzle plate.

Generally, in regard to image formation using the nozzle plate described above (particularly, image formation by a single pass system), there is a tendency that when the rate of image formation is increased, the rate at which recording media having images formed thereon are stacked up is also increased as a result. If the rate at which recording media having images formed thereon are stacked up is increased, the phenomenon in which an image formed on a recording medium adheres to another recording medium stacked up on the image, and the image is damaged, is likely to occur. This phenomenon is referred to as blocking.

Blocking tends to occur when the ejection accuracy of the ink is poor (that is, when unintended overlapping of ink dots occurs in the image, and sites with larger amounts of applied ink are produced locally). Particularly, when a head with a liquid repellent film that has been deteriorated by maintenance is used, since ejection accuracy is prone to be lowered, blocking tends to occur easily.

On the contrary, in the image forming method of the invention, the blocking phenomenon can be suppressed

(that is, resistance to blocking can be enhanced) by using an ink composition including a pigment dispersion which can reduce the degree of deterioration of the liquid repellent film caused by maintenance.

<Ink Ejection Process>

In the ink ejection process in the invention, the ink composition according to the invention is ejected from an inkjet head having a liquid repellent film on the ejection surface.

- Method for Ejecting Ink for Inkjet Recording -

In an ink ejection process, an ink for inkjet recording is ejected from an inkjet head having a liquid repellent film on the ejection surface.

Ejection of an ink for inkjet recording is not particularly limited, except that the ink is ejected from an inkjet head having a liquid repellent film on the ejection surface, and ejection can be carried out using a conventional inkjet method.

Ejection of ink according to an inkjet method can be carried out by, for example, ejecting, by applying energy, an ink onto a desired recording medium, that is, ordinary paper; resin-coated paper, for example, the papers exclusive for inkjet use described in JP-A No. H08-169172, JP-ANo. H08-27693, JP-ANo. H02-276670, JP-ANo. H07-276789, JP-ANo. H09-323475, JP-ANo. S62-238783, JP-ANo. H10-153989, JP-ANo. H10-217473, JP-ANo. H10-235995, JP-ANo. H10-217597, and JP-ANo. H10-337947; films, paper for common electrophotographic use, cloth, glass, metals, and ceramics. In addition, the method described in paragraphs 0093 to 0105 of JP-A No. 2003-306623 can be applied as a preferred method for ejecting ink in this invention.

There are no particular limitations on the inkjet method, and a known system, for example, any one of a charge control system that ejects ink by utilizing an electrostatic attraction force; a drop-on-demand system that utilizes the vibration pressure of a piezoelectric element (pressure pulse system); an acoustic inkjet system in which electric signals are converted into acoustic beams, ink is irradiated with the beams, and the ink is effected by utilizing a radiation pressure; and a thermal inkjet (BUBBLEJET (registered trademark)) system that in which ink is heated to form bubbles and the pressure resulting therefrom is utilized, may be used.

Furthermore, the inkjet method includes the usage of a system in which a large number of small-volume droplets of a low-concentration ink called photo-ink are ejected; a system in which the image quality is improved by using plural kinds of inks having a substantially identical color but different concentrations; and a system in which a colorless transparent ink is used.

The inkjet head used in the inkjet method may be of an on-demand system, or may be of a continuous system.

Specific examples of the ejection system include an electromechanical conversion system (for example, single cavity type, double cavity type, bender type, piston type, shear mode type, or shared wall type), an electrothermal conversion system (for example, thermal inkjet type, or BUBBLEJET (registered trademark) type), an electrostatic suction system (for example, electric field control type or slit jet type), and a discharge system (for example, spark jet type). However, any ejection system may be used without limitations.

There are no particular limitations on the ink nozzles and the like used when recording is performed by an inkjet method, and they can be appropriately selected according to the purpose.

Ink ejection according to the inkjet method may employ a shuttle system in which recording is performed using a short serial head, while the head is caused to move in a scanning manner along the width direction of the recording medium; and a line system in which a line head is used in which recording elements are arranged so as to face the entire length of one side of the recording medium (one side in the width direction).

In the line system, image recording can be performed over the entire surface of the recording medium by scanning the recording medium in a direction perpendicular to the direction in which recording elements are arranged, and thus, a conveyance system such as a carriage that is used for scanning with a short head is not needed. Furthermore, complicated scan control of the movement of a carriage and a recording medium becomes unnecessary, and since only the recording medium is moved, speed-up of the recording speed can be realized as compared with the shuttle system.

In this invention, it is preferable to use, among line systems, a single pass system by which an image is formed by single-time scanning of a recording medium.

In the ink ejection process, in a case in which a line system is used, recording can be carried out suitably by using only one kind of ink for inkjet recording, and recording can also be carried out suitably by using two or more kinds of ink for inkjet recording, such that the ejection (droplet ejection) interval between an ink composition that is ejected earlier (n-th color ($n \geq 1$), for example, second color) and an ink for inkjet recording that is ejected subsequently thereto ((n+1)-th color, for example, third color) is adjusted to one second or less.

The inkjet head may be provided with a nozzle plate in which plural ejection holes are arranged two-dimensionally. The nozzle plate may be installed on the ejection surface side of the line head, and in the nozzle plate, ejection holes may be provided at positions corresponding to recording elements.

The nozzle plate has a larger area at which a liquid repellent film is formed, as compared with a short serial head used in the shuttle system by which recording is performed while scanning the inkjet head along the width direction of the recording medium. Therefore, if the carbon black pigment in the ink composition has polishing properties, deterioration of the liquid repellent film is prone to increase.

However, when an ink for inkjet recording is ejected by the image forming method of the invention, deterioration of the liquid repellent film can be prevented even in the case of inkjet recording using a nozzle plate.

The amount of liquid droplets of the ink composition ejected from the inkjet head is preferably from 0.5 picoliters (pl) to 6 pl, more preferably from 1 pl to 5 pl, and still more preferably from 2 pl to 4 pl, from the viewpoint of obtaining high precision images.

<Maintenance Liquid Application Process>

The image forming method of the invention preferably includes a maintenance liquid application process of applying a maintenance liquid to the head (for example, the periphery of the head and ink flow channels; hereinafter, also referred to as "head and the like"), in order to remove the ink for inkjet recording from the nozzle surface of the head. As a result of applying a maintenance liquid to the head and the like, the ink composition undergoes dissolution, swelling and the like.

Application of a maintenance liquid can be carried out by, for example, ejection according to an inkjet method, coating using a roller, or spraying; however, it is preferable that a maintenance liquid is applied to the head such that maintenance liquid columns are formed on a maintenance liquid (cleaning liquid) application unit by utilizing the water head difference described in JP-ANo. 2011-73295 or JP-ANo. 2011-73339, and a liquid film is formed between the head and a maintenance liquid application unit when the head for inkjet recording passes therethrough.

The amount of application of the maintenance liquid is not particularly limited as long as it is an amount capable of causing the ink composition to dissolve, swell or the like, but the amount of application is preferably from 1 $g/m^2$ to 100 $g/m^2$.

<Treatment Liquid Application Process>

The image forming method of the invention preferably includes a treatment liquid application process of applying, on the recording medium, a treatment liquid containing an aggregating agent capable of forming aggregates as a result of being brought into contact with an ink for inkjet recording.

In this treatment liquid application process, a treatment liquid capable of forming aggregates as a result of being brought into contact with an ink for inkjet recording (treatment liquid) is applied on the recording medium, and the treatment liquid is brought into contact with the ink to form an image. In this case, dispersed particles such as a carbon black pigment coated with a resin, and resin particles, which are included in the ink, undergo aggregation, and an image is fixed onto the recording medium. Consequently, image formation can be accelerated, and even if image formation is accelerated, images having high image density and high resolution can be obtained.

The details and preferred embodiments of the various components for the treatment liquid are as described above.

Application of the treatment liquid can be carried out by applying any known method such as a coating method, an inkjet method, and an immersion method. A coating method can be carried out according to a known coating method using a bar coater, an extrusion die coater, an air doctor coater, a pan coater, a rod coater, a knife coater, a squeeze coater, a reverse roll coater, or the like. The details of the inkjet method are as described above.

The treatment liquid application process may be provided anywhere between before and after the ink ejection process.

According to the invention, an embodiment in which the ink ejection process is provided after the treatment liquid is applied in the treatment liquid application process. That is, an embodiment in which a treatment liquid for aggregating a coloring material (resin-coated quinacridone-based pigment) in the ink is applied in advance on the recording medium before ink is ejected, and image formation is performed by ejecting the ink for inkjet recording so as to be brought into contact with the treatment liquid that has been applied on the recording medium, is preferred. Thereby, inkjet recording can be accelerated, and even if recording is performed at a high speed, images having high density and high resolution can be obtained.

The amount of application of the treatment liquid is not particularly limited as long as the treatment liquid can aggregate ink, but preferably, the amount of application may be such an amount that the amount of application of the aggregating component (for example, a divalent or higher-valent carboxylic acid or cationic organic compound) is 0.1 $g/m^2$ or more. The amount of application of the treatment liquid is preferably an amount which allows the amount of application of the aggregating component to be from 0.1 $g/m^2$ to 1.0 $g/m^2$, and more preferably from 0.2 $g/m^2$ to 0.8 $g/m^2$. When the amount of application of the aggregating component is 0.1 $g/m^2$ or more, the aggregating reaction

proceeds favorably, and when the amount of application is 1.0 $g/m^2$ or less, glossiness does not increase excessively, which is preferable.

In the invention, the image forming method may further include, after the treatment application process, a heating and drying process of heating and drying the treatment liquid on the recording medium during a period from the time when the treatment liquid is applied onto the recording medium by providing an ink ejection process after the treatment liquid application process, to the time when the ink is ejected. When the treatment liquid is heated and dried in advance before the ink ejection process, ink coloring performance such as prevention of bleeding becomes favorable, and visible images with favorable color densities and hues can be recorded.

Heating and drying can be carried out by a known heating means such as a heater; an air blowing means utilizing air blowing, such as a dryer; or a means combining these. Examples of the heating method include a method of applying heat using a heater or the like from the opposite side of the surface of the recording medium where the treatment liquid is applied; a method of blowing warm air or hot air to the surface of the recording medium where the treatment liquid is applied; and a heating method using an infrared heater. Heating may also be carried out by combining a plural number of these methods.

- Nozzle Plate -

A nozzle plate has a configuration in which plural ejection holes are arranged tow-dimensionally. There are no particular limitations on the number of the plural ejection holes, and the number can be appropriately selected in consideration of the speed-up of image formation or the like.

Regarding the nozzle plate, a nozzle plate containing silicon (hereinafter, also referred to as "silicon nozzle plate") is suitable.

Regarding silicon, single crystal silicon or polysilicon can be used.

Furthermore, regarding the silicon nozzle plate, for example, a silicon substrate provided with a film of a metal oxide (silicon oxide, titanium oxide, chromium oxide, tantalum oxide (preferably, $Ta_2O_5$), or the like), a metal nitride (titanium nitride, silicon nitride, or the like), a metal (zirconium, chromium, titanium, or the like), or the like may be used.

Here, silicon oxide may be a $SiO_2$ film formed as a result of oxidation of the entirety or a portion of the surface of a silicon substrate.

The silicon nozzle plate may also be a nozzle plate configured by substituting a portion of silicon with glass (for example, borosilicate glass, photosensitive glass, quartz glass, or soda lime glass).

Among these, particularly a film formed of tantalum oxide such as tantalum pentoxide has excellent resistance to ink, and favorable corrosion resistance can be obtained against alkaline inks in particular.

A kind of method for forming a film formed of silicon oxide ($SiO_2$ film) is described.

For example, a $SiO_2$ film can be formed on a silicon substrate by a method including placing a silicon substrate in a chemical vapor deposition (CVD) reactor, and introducing $SiCl_4$ and steam thereinto.

At this time, the partial pressure of $SiCl_4$ can be adjusted to a value between 0.05 torr and 40 torr (from 6.67 Pa to $5.3x10^3$ Pa) (for example, from 0.1 torr to 5 torr (13.3 Pa to 666.5 Pa)), and the partial pressure of $H_2O$ can be adjusted to a value between 0.05 torr and 20 torr (for example, from 0.2 torr to 10 torr). The deposition temperature is generally between room temperature and 100°C.

According to another embodiment, a $SiO_2$ film can be formed by subjecting a silicon substrate to sputtering.

In all of these embodiments, it is preferable that the silicon substrate surface on which a $SiO_2$ film is to be formed, is cleaned before the $SiO_2$ film is formed (for example, by exposing to oxygen plasma).

- Inkjet Head Including Nozzle Plate -

FIG. 1 is a schematic cross-sectional diagram illustrating an example of an inkjet head including a nozzle plate.

As illustrated in FIG. 1, an inkjet head 100 includes a nozzle plate 11 having ejection holes (nozzles), and an ink supply unit 20 provided on the opposite side of the direction of ejection of the nozzle plate. The nozzle plate 11 is provided with plural ejection holes 12 for ejecting ink. A liquid repellent film 13 containing a fluorine compound is provided on the ejection surface side of the nozzle plate 11.

FIG. 2 is a perspective view diagram conceptually illustrating the ejection surface (surface at which the liquid repellent film 13 formed) of the nozzle plate 11.

The nozzle plate 11 is provided with plural ejection holes (nozzles) that are arranged two-dimensionally, as illustrated in FIG. 2. The number of ejection holes is not limited, and can be appropriately selected in consideration of the speed-up of image formation, or the like. For example, the number of ejection holes may be 32 x 60.

As this nozzle plate 11, the nozzle plate containing silicon (silicon nozzle plate) described above can be used, and, for example, a silicon nozzle plate having a structure in which silicon is exposed at least at the inner walls of nozzle openings and the plate surface on the side of the direction of ink ejection, is preferred.

Although not shown in the diagram, the nozzle plate 11 may be a silicon nozzle plate composed of a silicon substrate, and a silicon oxide film provided on the silicon substrate. In this case, the silicon oxide film is disposed between the silicon substrate and the liquid repellent film 13 containing a fluorine compound.

The ink supply unit 20 includes plural pressure chambers 21 that are respectively in communication with the plural ejection holes 12 of the nozzle plate 11 through nozzle communication paths 22; plural ink supply flow channels 23 that supply ink respectively to the plural pressure chambers 21; a common liquid chamber 25 that supplies ink to the plural ink supply flow channels 23; and a pressure generating means 30 that deforms each of the plural pressure chambers 21.

The ink supply flow channels 23 are formed between the nozzle plate 11 and the pressure generating means 30, and the ink supplied to the common liquid chamber 25 is transported therethrough. Each of these ink supply flow channels 23 is connected to one end of a supply regulating path 24 that connects between the ink supply flow channel and a pressure chamber 21, so that the ink can be sent to the pressure chamber 21 by adjusting the amount of ink supplied from the ink supply flow channel 23 to a certain amount. There are plural supply regulating paths 24 that are provided to the ink supply flow channels 23, and ink is supplied through these ink supply flow channels 23 to the pressure chambers 21 that are provided adjacently to the pressure generating means 30.

In this manner, a large amount of ink can be supplied to plural ejection holes.

The pressure generating means 30 includes, from the pressure chamber 21 side, a vibrating plate 31, an adhesive layer 32, a lower electrode 33, a piezoelectric layer 34, and an upper electrode 35 stacked in this sequence, and an electrical wiring that supplies driving signals from an external source are connected thereto. When a piezoelectric element is deformed according to image signals, ink is ejected from a nozzle 12 through a nozzle communication path 22.

Furthermore, a circulation throttle 41 is provided in the vicinity of the ejection holes 12 so that ink can be collected to a circulation path 42 constantly. Consequently, a viscosity increase of the ink near the ejection holes during a non-ejection time can be prevented.

- Recording Medium -

In the ink ejection process, the ink for inkjet recording is ejected onto a recording medium.

There are no particular limitations on the recording medium, but general printing papers formed using cellulose as a main component, such as so-called high quality paper, coated paper, and art paper, which are used in general offset printing or the like, can be used. In a inkjet recording method using an aqueous ink, general printing paper formed using cellulose as a main component exhibit relatively slow ink absorption and drying, migration of a coloring material easily occur after droplet ejection, and, therefore, image quality is prone to deteriorate. However, when the image forming method of the invention is used, migration of coloring material can be suppressed, and recording of high-resolution images having excellent color densities and hues is enabled.

Regarding the recording medium, generally, any commercially available recording medium may be used, and examples include high quality papers (A) such as "OK PRINCE HIGH QUALITY" manufactured by Oji Paper Co., Ltd., "SHIRAOI" manufactured by Nippon Paper Industries Co., Ltd. and "NEW NPI HIGH QUALITY" manufactured by Nippon Paper Group, Inc.; finely coated papers such as "OK EVER LIGHT COAT" manufactured by Oji Paper Co., Ltd., and "AURORA S" manufactured by Nippon Paper Industries Co., Ltd.; lightweight coated papers (A3) such as "OK COAT L" manufactured by Oji Paper Co., Ltd., and "AURORA L" manufactured by Nippon Paper Industries Co., Ltd.; coated papers (A2, B2) such as "OK TOPCOAT +" manufactured by Oji Paper Co., Ltd., and "AURORA COAT" manufactured by Nippon Paper Industries Co., Ltd., Inc.; and art papers (A1) such as "OK GOLDEN CASK GLOSS+" manufactured by Oji Paper Co., Ltd., and "TOKUBISHI ART" manufactured by Mitsubishi Paper Mills, Ltd. Furthermore, any of various exclusive photographic papers for inkjet recording may be used.

The recording medium is preferably a recording medium having a water absorption coefficient Ka of from 0.05 $mL/m^2 \cdot ms^{1/2}$ to 0.5 $mL/m^2 \cdot ms^{1/2}$, more preferably a recording medium having a water absorption coefficient of from 0.1 $mL/m^2 \cdot ms^{1/2}$ to 0.4 $mL/m^2 \cdot ms^{1/2}$, and still more preferably a recording medium having a water absorption coefficient of 0.2 $mL/m^2 \cdot ms^{1/2}$ to 0.3 $mL/m^2 \cdot ms^{1/2}$, from the viewpoint of having an effect of suppressing migration of a coloring material and obtaining high-resolution images having more favorable color densities and hues compared to the conventional level.

The water absorption coefficient Ka has the same meaning as that described in Japan TAPPI Paper and Pulp Test Method No. 51:2000 (issued by Japan Technical Association of the Pulp and Paper Industry). Specifically, the absorption coefficient Ka is calculated from the difference between the amounts of transfer of water at a contact time of 100 ms and a contact time of 900 ms, each measured using an automatic scanning liquid absorptiometer, KM500WIN (manufactured by Kumagai Riki Kogyo Co., Ltd.).

Among recording media, so-called coated papers that are used in general offset printing and the like are preferred. Coated paper is a paper in which a coating layer is provided by applying a coating material on the surface of high quality paper or neutral paper, which is made mainly of cellulose and is generally not surface-treated. Coated paper is prone to cause problems in product quality, such as gloss, scratch resistance and the like of images, in connection

with image formation by conventional aqueous inkjet. However, in the image forming method of the invention, gloss unevenness can be suppressed, and images having favorable glossiness and scratch resistance can be obtained. Particularly, it is preferable to use a coated paper having a base paper and a coating layer containing kaolin and/or calcium hydrogen carbonate. More specifically, an art paper, a coated paper, a lightweight coated paper, or a finely coated paper is more preferred.

<Liquid Repellent Film>

Provided on the surface of the inkjet head used in the image forming method of the invention is a liquid repellent film.

A liquid repellent film repels the ink for inkjet recording to make it difficult for the ink to adhere to the inkjet head surface. Also, at the time of ejection, the liquid repellent film can achieve cutting of the ink for inkjet recording, and can enhance ejectability of the ink for inkjet recording from the inkjet head.

There are no particular limitations on the constituent material of the liquid repellent film, but it is preferable that the constituent material contains a fluorine compound from the viewpoint of achieving cutting of the ink for inkjet recording favorably and ejecting the ink for inkjet recording stably.

From the viewpoint of further enhancing ink repelency, the SP value of the liquid repellent film calculated according to the Okitsu method is preferably 16.00 $MPa^{1/2}$ or less, more preferably 15.00 $MPa^{1/2}$ or less, and particularly preferably 13.00 $MPa^{1/2}$ or less.

Regarding the fluorine compound included in the liquid repellent film, for example, a fluorinated alkyl-based compound may be suitably used.

The liquid repellent film is preferably, for example, a liquid repellent film produced using a fluorinated alkylsilane compound.

Regarding the fluorinated alkylsilane compound, a fluorinated alkylsilane compound represented by the following Formula (F) can be suitably used. The fluorinated alkylsilane compound represented by the following Formula (F) is a silane coupling compound.

$$C_nF_{2n+1}\text{-}C_mH_{2m}\text{-}Si\text{-}X_3 \qquad \text{Formula (F)}$$

In Formula (F), n represents an integer of 1 or more; m represents 0 or an integer of 1 or more; X represents an alkoxy group, an amino group, or a halogen atom. Some of X may be each substituted with an alkyl group.

Examples of the fluorinated alkylsilane compound include fluoroalkyltrichlorosilanes such as $C_8F_{17}C_2H_4SiCl_3$ (also referred to as "1H,1H,2H,2H-perfluorodecyltrichlorosilane" or "FDTS") and $CF_3(CF_2)_8C_2H_4SiCl_3$; and fluoroalkylalkoxysilanes such as $CF_3(CF_2)_8C_2H_4Si(OCH_3)_3$, 3,3,3-trifluoropropyltrimethoxysilane, tridecafluoro-1,1,2,2-tetrahydrooctyltrimethoxysilane, and heptadecafluoro-1,1,2,2-tetrahydrodecyltrimethoxysilane.

In Formula (F), a case in which n represents an integer from 1 to 14; m represents 0 or an integer from 1 to 5; and X represents an alkoxy group or a halogen atom, is preferred from the viewpoints of liquid repellency, and durability of the liquid repellent film, and a case in which n represents an integer from 1 to 12; m represents an integer from 0 to 3; and X represents an alkoxy group or a halogen atom, is more preferred.

Among them, $C_8F_{17}C_2H_4SiCl_3$ is most preferred.

It is preferable that the fluorine compound that is a component of the liquid repellent film contains oxygen atoms. When the liquid repellent film is constituted using a fluorine compound containing oxygen atoms, deterioration of the liquid repellent film can be suppressed more effectively. The fluorine compound containing oxygen atoms is preferably an oxygen-containing fluorinated alkyl compound. It is preferable to use a compound having a perfluoropolyether (PFPE) group ($-CF_2-O-CF_2-$).

Any commercially available product can also be used as the fluorine compound.

Specific examples thereof include silane coupling agents such as OPTOOL (manufactured by Daikin Industries, Ltd.), DURASURF (manufactured by Harves Co., Ltd.), NOVEC EGC1720 (manufactured by Sumitomo 3M, Limited), FLUOROLINK S-10 (manufactured by Solvay Solexis), NANOS (manufactured by T & K, Inc.), SIFEL KY-100 (manufactured by Shin-Etsu Chemical Co., Ltd.), and CYTOP Type M (manufactured by Asahi Glass Co., Ltd.).

The thickness of the liquid repellent film containing a fluorine compound is not particularly limited, but the thickness is preferably in the range of from 0.2 nm to 30 nm, and more preferably in the range of from 0.4 nm to 20 nm. Regarding the thickness of the liquid repellent film, there is no particular problem even if the thickness is in the range of more than 30 nm. In view of uniformity of the film, the thickness is 30 nm or less may be advantageous. When the thickness is 0.2nm or more, favorable water repellency to the ink can be obtained.

As for the liquid repellent film containing a fluorine compound, for example, a monomolecular film (self-assembled monolayer (SAM) film) of a fluorinated alkylsilane compound, or a laminate film of a fluorinated alkylsilane compound can be used. Here, the laminate film of a fluorinated alkylsilane compound may be, for example, a film in which fluorinated

alkylsilane compounds are stacked without being polymerized. The laminate film of a fluorinated alkylsilane compound may be, for example, a polymerized film of a fluorinated alkylsilane compound

The liquid repellent film containing a fluorine compound can be formed by, for example, the method described in paragraphs [0114] to [0124] of JP-A No. 2011-111527.

Specifically, the liquid repellent film containing a fluorine compound can be formed by, for example, vapor deposition according to a chemical vapor deposition method, coating of a fluororesin, eutectoid plating with a fluorine-based polymer and the like, a fluorosilane treatment, an aminosilane treatment, fluorocarbon plasma polymerization.

A more specific example of the method for forming a liquid repellent film containing a fluorine compound may be the method described below.

A first example is a method of allowing a fluoroalkyltrichlorosilane such as $CF_3(CF_2)_8C_2H_4SiCl_3$ with a base material, and thereby forming a water-repellent monomolecular film or a water-repellent polymerized film (see, for example, Japanese Patent No. 2500816 and Japanese Patent No. 2525536).

In the chemical formula, $CF_3(CF_2)_8C_2H_4$- is a fluoroalkyl group, and $-SiCl_3$ is a trichlorosilyl group.

In this method, a base material in which activated hydrogen is present on the surface is exposed to a solution in which a fluoroalkyltrichlorosilane is dissolved, to thereby cause a chlorosilyl group (-SiCl) to react with activated hydrogen, thereby s a Si-O bond with the base material is formed. As a result thereof, a fluoroalkyl group is fixed to the base material via Si-O. Here, the fluoroalkyl group imparts liquid repellency to the film. The liquid repellent film may be formed as a monomolecular film or a polymerized film, depending on the conditions for forming a film.

A second example is a method of heating a porous base body that has been impregnated with a compound containing a fluoroalkyl group, such as a fluoroalkylalkoxysilane such as $CF_3(CF_2)_8C_2H_4Si(OCH_3)_3$, in a vacuum, evaporating the compound, and thereby making the base material surface water-repellent (see, for example, JP-ANo. H06-143586).

In this method, an intermediate layer of silicon dioxide or the like may be provided in order to increase adhesiveness between the liquid repellent film and the base material.

A third example is a method of forming a fluoroalkylsilane on a base material surface by a chemical vapor deposition method, using a compound such as a fluoroalkyltrichlorosilane such as $CF_3(CF_2)_8C_2H_4SiCl_3$ (see, for example, JP-A No. 2000-282240).

A fourth example is a method of forming oxide fine particles of zirconia, alumina or the like on a base material surface, and then applying a fluoroalkylchlorosilane, a fluoroalkylalkoxysilane or the like thereon (see, for example, JP-ANo. H06-171094).

A fifth example is a method of subjecting a mixed solution obtained by adding a metal alkoxide to a fluoroalkylalkoxysilane, to hydrolysis and dehydrating polymerization, subsequently applying the thus obtained solution on a base material, calcining this solution, and thereby forming a liquid repellent film in which molecules having a fluoroalkyl chain is mixed into the metal oxide (see Japanese Patent No. 2687060, Japanese Patent No. 2874391, Japanese Patent No. 2729714, and Japanese Patent No. 2555797).

In this method, a fluoroalkyl chain imparts water repellency to the film, and the metal oxide imparts high mechanical strength to the film.

Among the forming methods described above, the chemical vapor deposition method listed as a third example is preferred.

Examples of the chemical vapor deposition method include an embodiment in which a nozzle plate (for example, a nozzle plate formed of a silicon substrate) and a container containing a fluorinated alkylsilane compound are placed in a tightly sealed container made of TEFLON (registered trademark) or the like, and the temperature of the content of the sealed container is increased by, for example, placing the entirety of this sealed container in an electric furnace to evaporate the fluorinated alkylsilane compound, whereby the molecules of the fluorinated alkylsilane compound are deposited on the surface of the nozzle plate.

In this manner, for example, a monomolecular film of a fluorinated alkylsilane compound can be formed on a nozzle plate by a chemical vapor deposition method. In this case, the surface subjected to deposition of the nozzle plate is preferably hydrophilized. Specifically, when the surface of a nozzle plate formed of a silicon substrate is cleaned using ultraviolet light (wavelength 172 nm), organic impurities are removed, and a clean surface can be obtained. At this time, since the silicon surface undergoes natural oxidation and is covered with a $SiO_2$ film, water vapor in the atmosphere immediately adsorbs to the surface, and the surface is covered with OH groups, whereby a hydrophilic surface is obtained.

Another embodiment of the chemical vapor deposition method may be the method described below.

That is, a liquid repellent film can be deposited on the surface of a silicon substrate by introducing a fluoroalkyltrichlorosilane compound such as $CF_3(CF_2)_8C_2H_4SiCl_3$ and steam into a CVD reactor at a low pressure.

The partial pressure of the fluoroalkyltrichlorosilane compound such as $CF_3(CF_2)_8C_2H_4SiCl_3$ can be adjusted to a value between 0.05 torr and 1 torr (from 6.67 Pa to 133.3 Pa) (for example, from 0.1 torr to 0.5 torr (13.3 Pa to 66.5 Pa)), and the partial pressure of $H_2O$ can be adjusted to a value between 0.05 torr and 20 torr (for example, from 0.1 torr to 2 torr).

The deposition temperature may be a temperature in the range of from room temperature to 100°C. The coating process can be carried out using, for example, a Molecular Vapor Deposition (MVD) TM machine manufactured by Applied Micro Structures, Inc.

<Heating and Fixing Process>

The image forming process of the invention preferably includes, after the ink ejection process, a heating and fixing process of bringing an ink image formed by applying an ink composition into contact with a heated surface, and heating and fixing the ink image.
By subjecting the image to a heating and fixing treatment, fixation of the image onto the recording medium is performed so that resistance to abrasion of the image can be further enhanced.
There are no particular limitations on the heating method, but suitable examples include methods of drying in a non-contact manner, such as a method of heating with a heat generating element such as a nichrome wire heater; a method of supplying warm air or hot air; and a method of heating with a halogen lamp, an infrared lamp or the like. Furthermore, there are no particular limitations on the method of heating and applying pressure, but suitable examples include methods of performing heating and fixation in a contact manner, such as a method of pressing a hot plate onto an image-formed surface of the recording medium; and a method of using a pair of heating and pressing rollers, a pair of heating and pressing belts, or a heating and pressure application apparatus equipped with a heating and pressing belt disposed on the image-recorded surface side of the recording medium, and a retaining roller disposed on the opposite side, and passing the recording medium through between the rollers that constitute a pair, or the like.
The conveyance speed of the recording medium in the case of using heating and pressing rollers or heating and pressing belts is preferably in the range of from 200 mm/second to 700 mm/second, more preferably from 300 mm/second to 650 mm/second, and even more preferably from 400 mm/second to 600 mm/second.

<Other Processes>

The image forming method of the invention may further include other processes such as a drying process and a curing process, as necessary.

(Curing process)

In a case in which the ink composition further contains a polymerizable compound, the image forming method of the invention may further include a curing process of irradiating active energy radiation to the image formed by the ink ejection process, and thereby curing the image.
Scratch resistance of the image to be formed, and adhesiveness between the image and the recording medium can be further enhanced thereby.
The active energy radiation is not particularly limited as long as the active energy radiation can polymerize the polymerizable compound. Examples thereof include ultraviolet radiation and an electron beam, and among them, ultraviolet radiation is preferred from the viewpoint of general-purpose usability. Examples of a generation source of active energy radiation include an ultraviolet irradiating lamp (a halogen lamp, a high pressure mercury lamp, or the like), a laser, a light emitting diode (LED), and an electron beam irradiating apparatus.
The ultraviolet radiation intensity is in a wavelength range effective for curing, and is preferably from 500 $mW/cm^2$ to 5000 $mW/cm^2$.
Regarding the means for irradiating ultraviolet radiation, any conventionally used means may be used, and particularly, an ultraviolet irradiating lamp is suitable. Suitable examples of the ultraviolet irradiating lamp include a so-called low pressure mercury lamp in which the vapor pressure of mercury is from 1 Pa to 10 Pa when the lamp is lit, a high pressure mercury lamp, a mercury lamp coated with a fluorescent material, and a UV-LED light source. The light emission spectra in the ultraviolet region of mercury lamps and UV-LEDs are in the range of 450 nm or less, and particularly in the range of from 184 nm to 450 nm, and these are suitable for efficiently causing the polymerizable compound in a black or colored ink composition to react. In regard to mounting of a power supply on the printer, these light sources are suitable from the viewpoint that small-sized power supplies can be used. Examples of mercury lamps that are put to practical use include a metal halide lamp, a high pressure mercury lamp, an ultrahigh pressure mercury lamp, a xenon flash lamp, a deep UV lamp, a lamp that excites a mercury lamp from an external source using microwaves without using an electrode, and a UV laser. Since the light emission spectrum is included in the light emission wavelength region, these mercury lamps are basically applicable as long as the power supply size, input intensity, lamp shape, and the like are allowable. The light source may be selected in accordance with the sensitivity of the polymerization initiator used.

[Maintenance Method]

The maintenance method according to the invention preferably includes a maintenance process of wiping out the ink (including a thickened matter or solidified matter of the ink) adhering to the liquid repellent film, after ejection of the ink for inkjet recording.

<Maintenance process>

In a case in which although the ink for inkjet recording includes a carbon black pigment having a TEA adsorption capacity of less than 0.5 meq/g, or includes a particular carbon black pigment, the ink does not include specific resin particles, the liquid repellent film is prone to be polished by the carbon black pigment and, therefore, is prone to be deteriorated. Particularly, when the liquid repellent film to which ink or ink deposits originating from the ink (hereinafter, also referred to as "ink and the like") are attached is wiped so that the ink is wiped out, the liquid repellent film is further polished, and is prone to deteriorate.

Even in such a case, when the ink used in the image forming method of the invention is used as the ink, since an untreated carbon black pigment or a particular oxidation-treated pigment is not likely to be exposed, deterioration of the liquid repellent film can be prevented.

In the maintenance process, the ink composition or deposits originating from the ink composition are removed by, for example, scraping with a wiper blade, or wiping out with cloth or paper.

The maintenance process may include application of a maintenance liquid to the periphery of the inkjet head (examples: ink flow channels and the like; hereinafter, referred to as head and the like). When a maintenance liquid is applied to the head and the like, ink deposits originating from the ink on the nozzle surface dissolve, swell or the like, and become more easily removable.

Application of the maintenance liquid may be performed either before or after the scraping with a wiper blade, or the wipeout with cloth or paper. Examples of a preferable method include a method of rubbing (wiping) the nozzle surface using a wiper blade after the maintenance liquid is applied, thereby scraping off ink deposits; a method of removing ink deposits by means of, for example, air pressure of liquid pressure of, for example, the maintenance liquid; a method of wiping out ink deposits with, for example, cloth or paper. Among them, scraping with a wiper blade, or wipeout with cloth or paper is preferred.

The material of the wiper blade is preferably rubber having elasticity, and specific examples of the material of the wiper include butyl rubber, chloroprene rubber, ethylene-propylene rubber, silicone rubber, urethane rubber, and nitrile rubber. A wiper blade coated with a fluororesin or the like may be used in order to impart ink repellency to the wiper blade.

EXAMPLES

Hereinafter, the invention is described specifically by way of Examples, but the invention is not intended to be limited to these Examples. Unless particularly stated otherwise, the units "parts" and "percentage (%)" are on a mass basis.

The weight average molecular weight was measured by gel permeation chromatography (GPC). GPC was performed using HLC-8020 GPC (manufactured by Tosoh Corp.), and three TSKGEL SUPER MULTIPORE HZ-H columns (manufactured by Tosoh Corp., 4.6 mm ID x 15 cm) were used as columns, while tetrahydrofuran (THF) was used as an eluent. Also, GPC was performed under the conditions of a sample concentration of 0.35% by mass, a flow rate of 0.35 ml/min, a sample feed amount of 10 μl, and a measurement temperature of 40°C, using a refractive index (RI) detector (differential refractive index detector). Furthermore, a calibration curve was produced from eight samples of "F-40", "F-20", "F-4", "F-1", "A-5000", "A-2500", "A-1000" and "n-propylbenzene" of "Standard Sample TSK Standard, polystyrene", all manufactured by Tosoh Corp.

<Synthesis of Water-Insoluble Resin (Polymeric Dispersant) P-1>

In a 1000-ml three-necked flask equipped with a stirrer and a cooling tube, 88 g of methyl ethyl ketone was introduced, and the content of the flask was heated to 72°C in a nitrogen atmosphere. A solution prepared by dissolving 0.85 g of dimethyl-2,2'-azobisisobutyrate, 50 g of phenoxyethyl methacrylate, 13 g of methacrylic acid, and 37 g of methyl methacrylate in 50 g of methyl ethyl ketone, was added dropwise to the flask over 3 hours. After completion of the dropwise addition, the mixture was allowed to react for another one hour, and then a solution prepared by dissolving 0.42 g of dimethyl-2,2'-azobisisobutyrate in 2 g of methyl ethyl ketone was added thereto. The temperature of the mixture was raised to 78°C, and the mixture was heated for 4 hours. The reaction solution thus obtained was subjected to reprecipitation two times with an excess amount of hexane, and a resin precipitated therefrom was dried. Thus, 96.5 g of a phenoxyethyl methacrylate/methyl methacrylate/methacrylic acid (copolymerization ratio [mass% ratio] = 50/37/13)

copolymer (water-insoluble resin P-1) was obtained.

The composition of the water-insoluble resin P-1 thus obtained was checked by $^1$H-NMR, and the weight average molecular weight (Mw) determined by GPC was 49400. Furthermore, the acid value of this water-insoluble resin was determined by the method described in the JIS standards (JIS K 0070: 1992), and the acid value was 84.8 mg KOH/g.

<Preparation of Carbon Black Pigment>

The following materials were prepared as carbon black pigments. The average primary particle diameters (catalogue values) of the following pigments are shown below.

- SPECIAL BLACK 6 (TEA adsorption capacity: 0.55 meq/g, average primary particle diameter: 17 nm, manufactured by Orion Engineered Carbons Co.,Ltd.)
- COLOUR BLACK FW182 (TEA adsorption capacity: 0.72 meq/g, average primary particle diameter: 15 nm, manufactured by Orion Engineered Carbons Co., Ltd.)
- NIPEX 170 (TEA adsorption capacity: 0.09 meq/g, average primary particle diameter: 17 nm, manufactured by Evonik Degussa Japan Co., Ltd.)
- #950 (TEA adsorption capacity: 0.03 meq/g, average primary particle diameter: 16 nm, manufactured by Mitsubishi Chemical Corp.)

Quantitative determination of the TEA adsorption capacity of a carbon black pigment was carried out as follows.

<Quantitative Determination of TEA Adsorption Capacity of Carbon Black Pigment>

0.1 g to 1 g of a carbon black pigment was added to 55 ml of propylene glycol methyl ether acetate (PGMEA), and the mixture was stirred for 5 minutes. A PGMEA solution of TEA (0.1 M) was added thereto, and the mixture was stirred for another one hour. The stirred liquid was transferred to a centrifuge vessel. The pigment remaining in the stirring vessel was transferred to the centrifuge vessel together with a cleaner liquid (2 ml of PGMEA). Centrifugation was performed using a cooling centrifuge (CR26H) manufactured by Hitachi, Ltd. and an angle rotor (R26A), at a speed of rotation of 25,000 rpm (centrifuge acceleration: 74,060G) and a temperature of 20°C for 30 minutes. 60 ml of tetrahydrofuran (THF) and 23 ml of pure water were added to the supernatant (entire amount), and the mixture was titrated with 0.1 N hydrochloric acid. At this time, the amount of hydrochloric acid required for neutralization was designated as (A).

Next, a blank liquid with no added pigment was neutralized. The blank liquid was produced by adding a PGMEA solution of TEA (0.1 M), 60 ml of THF, and 23 ml of pure water to 57 ml of PGMEA. The blank liquid was titrated with 0.1 N hydrochloric acid. At this time, the amount of hydrochloric acid required for neutralization was designated as (B).

The TEA adsorption capacity (meq/g) was determined by the following formula. ((B) - (A))/amount of pigment

<Preparation of Resin Particles>

The following particles were prepared as resin particles.

- Resin particles A (synthesized product, Tg: 170°C)
- Resin particles B (synthesized product, Tg: 150°C)
- Resin particles C (JONCRYL 631, Tg: 107°C, manufactured by BASF)
- Resin particles D (JONCRYL 538, Tg: 68°C, manufactured by BASF)

(Synthesis of Resin Particles A)

In a 2-liter three-necked flask equipped with a stirrer, a thermometer, a reflux cooling tube, and a nitrogen gas inlet tube, 360.0 g of methyl ethyl ketone was introduced, and the temperature was raised to 75°C. A mixed solution formed of 162.0 g of methyl methacrylate, 126.0 g of isobornyl methacrylate, 50.4 g of "PME-100" (methoxypolyethylene glycol methacrylate (n = 2), manufactured by NOF Corp.), 21.6 g of methacrylic acid, 72 g of methyl ethyl ketone, and 1.44 g of "V-601" (manufactured by Wako Pure Chemical Industries, Ltd.) was added dropwise to the flask at a constant rate such that dropwise addition would be completed in 2 hours. After completion of the dropwise addition, a solution formed from 0.72 g of "V-601" and 36.0 g of methyl ethyl ketone was added thereto, and the mixture was stirred for 2 hours at 75°C. Subsequently, a solution formed from 0.72 g of "V-601" and 36.0 g of methyl ethyl ketone was further added thereto, and the mixture was stirred for 2 hours at 75°C. Thereafter, the temperature was increased to 85°C, and stirring was continued for 2 hours. Thus, a resin solution of a methyl methacrylate/isobornyl methacrylate/PME-100/methacrylic acid copolymer (= 45/35/14/6 [mass ratio]) was obtained.

The weight average molecular weight (Mw) of the copolymer thus obtained was 65,000 (calculated relative to polystyrene standards by GPC), the acid value was 39 mg KOH/g, and the glass transition temperature (Tg) was 92°C.
Next, 668.3 g of the resin solution thus obtained was weighed, and 388.3 g of isopropanol and 145.7 mL of a 1 mol/L aqueous solution of NaOH were added thereto. The temperature inside the reaction vessel was raised to 80°C. Next, 720.1 g of distilled water was added dropwise thereto at a rate of 20 mL/min, thereby converting the mixture to an aqueous dispersion. Thereafter, the temperature inside the reaction vessel was maintained at 80°C for 2 hours, at 85°C for 2 hours, and at 90°C for 2 hours under atmospheric pressure, and then the pressure inside the reaction vessel was reduced. Isopropanol, methyl ethyl ketone, and distilled water were distilled off in an amount of 913.7 g in total, and an aqueous dispersion of the resin particles A at a solid content concentration of 28.0% was obtained.

(Synthesis of Resin Particles B)

In a 2-liter three-necked flask equipped with a stirrer, a thermometer, a reflux cooling tube, and a nitrogen gas inlet tube, 560.0 g of methyl ethyl ketone was introduced, and the temperature was raised to 87°C. While the interior of the reaction vessel was maintained in a refluxing state (hereinafter, refluxed until completion of the reaction), a mixed solution containing 266.8 g of methyl methacrylate, 63.8 g of methoxyethyl acrylate, 203 g of benzyl methacrylate, 46.4 g of methacrylic acid, and 2.32 g of "V-601" (manufactured by Wako Pure Chemical Industries, Ltd.) was added dropwise to this reaction vessel at a constant rate such that the dropwise addition would be completed in 2 hours. After completion of the dropwise addition, the mixture was stirred for one hour. Thereafter, a solution formed of 1.16 g of V-601 and 6.4 g of methyl ethyl ketone was added thereto, and the mixture was stirred for 2 hours (Process (1)). Subsequently, this Process (1) was repeated four times, a solution containing 1.16 g of V-601 and 6.4 g of methyl ethyl ketone was further added thereto, and the mixture was stirred continuously for 3 hours. After the polymerization reaction was completed, the temperature of the solution was lowered to 65°C, 163.0 g of isopropanol was added thereto, and the mixture was left to cool. Thus, a resin solution of a copolymer (methyl methacrylate/methoxyethyl acrylate/benzyl methacrylate/methacrylic acid = 46/11/35/8) was obtained. The weight average molecular weight (Mw) of the copolymer thus obtained was 63,000, and the acid value was 65.1 mg KOH/g.
Next, 317.3 g (solid content concentration: 41.0% by mass) of the resin solution thus obtained was weighed, and 46.4 g of isopropanol, 1.65 g of a 20 mass% aqueous solution of maleic anhydride (water-soluble acidic compound; equivalent to 0.3% by mass in terms of maleic acid with respect to the copolymer), and 40.77 g of a 2 mol/L aqueous solution of NaOH were added thereto. The temperature inside the reaction vessel was raised to 70°C. Next, 380 g of distilled water was added dropwise thereto at a rate of 10 ml/min, and the mixture was converted to an aqueous dispersion. Thereafter, the temperature inside the reaction vessel was maintained at 70°C for 1.5 hours under reduced pressure, and isopropanol, methyl ethyl ketone, and distilled water were distilled off in an amount of 287.0 g in total. 0.278 g of PROXEL GXL(S) (manufactured by Arch Chemicals Japan, Inc.) (440 ppm in terms of benzoisothiazolin-3-one with respect to the resin solid content) was added thereto. Thereafter, filtration was performed using a 1-μm filter, the filtrate was collected, and thus an aqueous dispersion of self-dispersing resin particles B at a solid content concentration of 26.5% was obtained.

<Preparation of Ink for Inkjet Recording>

A black ink was prepared as an ink for inkjet recording used for image formation. The details are described below.

[Example 1]

(Preparation of Pigment Dispersion 1)

10.0 parts of a carbon black pigment (FW182, manufactured by Orion Engineered Carbons, Inc.), 4.8 parts of the polymeric dispersant P-1, 18 parts of methyl ethyl ketone, 16.8 parts of a 1 mol/L aqueous solution of NaOH, and 59.4 parts of ion-exchanged water were mixed, and the mixture was dispersed for 3 hours in a bead mill using 0.1-mmϕ zirconia beads.
The dispersion thus obtained was subjected to removal of methyl ethyl ketone at 55°C under reduced pressure, and a portion of water was removed therefrom. Subsequently, the dispersion was subjected to a centrifugation treatment using a high speed centrifuge cooler 7550 (manufactured by Kubota Corp.) and using a 50-mL centrifuge tube, at 8000 rpm for 30 minutes, and thus a supernatant excluding the precipitate was collected. Thereafter, the pigment concentration was determined from an absorbance spectrum, and thus a pigment dispersion 1 (resin:pigment = 1:2) was obtained as a dispersion of pigment particles coated with a resin (encapsulated pigment) (solid content: 15%), which had a carbon black concentration of 12.0% by mass.
The volume average particle diameter was measured by a dynamic light scattering method, using a NanoTrac

particle size distribution analyzer, UPA-EX150 (manufactured by Nikkiso Co., Ltd.), and the volume average particle diameter was 92 nm.

(Synthesis of Polymerizable Compound (V)-1)

Polymerizable compound (V)-1, which is an exemplary compound described above, was synthesized according to the method described in paragraphs 0123 to 0128 of JP-A No. 2013-18846.

(Preparation of Ink Composition 1)

Pigment dispersion 1, a polymerizable compound, resin particles A, water-soluble organic solvents having an SP value of less than 28, other solvents, a polymerization initiator, and colloidal silica (SNOWTEX XS, average particle diameter: 5 nm, manufactured by Nissan Chemical Industries, Ltd.) were used, and the components were mixed so as to obtain an ink composition as described below. This mixture was filled in a plastic disposable syringe and filtered through a 5-μm PVDF filter (MILLEX-SV, diameter: 25 mm, manufactured by Millipore Corp.), and thus an ink composition 1 was prepared.

- Ink Composition -

- Pigment dispersion 1 15.8%
- HEAA (polymerizable compound) [manufactured by Kohjin Co., Ltd.] 1.0%
- Polymerizable compound (V)-1 2.0%
- Resin particles A 5.0%
- TPGmME (water-soluble organic solvent having SP value of less than 28) 2.0%
- PG (water-soluble organic solvent having SP value of less than 28) 10.0%
- Urea (other solvent) 4.0%
- EQUAMIDE B100 (water-soluble organic solvent) 5.2% (amide-based organic solvent) (manufactured by Idemitsu Kosan Co., Ltd.)
- Colloidal silica (solid content) 0.05% (SNOWTEX XS, solid content concentration: 20%, manufactured by Nissan Chemical Industries, Ltd.)
- ORFINE E1010 (nonionic surfactant) 1.0% (manufactured by Nissin Chemical Industry Co., Ltd.)
- IRGACURE 2959 (polymerization initiator) 2.7% (manufactured by BASF Japan, Ltd.)
- Ion-exchanged water Amount to make up 100% by mass in total (%)

[Example 2 to Example 14, and Comparative Example 1 to Comparative Example 8] (Preparation of ink compositions 2 to 22)

Ink composition 2 to ink composition 22 were prepared in the same manner as in the preparation of the pigment dispersion 1 and the ink composition 1, except that the components were changed to the compositions indicated in Table 1.

Table 1

| | Ink composition | | | | | | | | | | | | |
|---|---|---|---|---|---|---|---|---|---|---|---|---|---|
| | Ink composition | Pigment dispersion | | | Resin particles (solid content, mass%) | Solvent having SP value of less than 28 | | Other solvent | Initiator | Polymerizable compound | | Resin particles Tg (°C) | Product of TEA adsorption capacity and Tg (°C·meq/g) |
| | | Pigment dispersion | Carbon black pigment | TEA adsorption capacity (meq/g) | | Kind | Content (mass%) | | | | | | |
| Ex 1 | IC 1 | PD 1 | FW182 | 0.72 | RPA(5%) | TPGmME (2%) / PG (10%) | 12 (%) | Urea (4%) Urea (4%) | Irg 2959 (0.5%) | HEAA (1%) | (V)-1 (2%) | 170 | 122 |
| Ex 2 | IC 2 | PD 2 | FW182 | 0.72 | RP B (5%) | TPGmME (2%) / PG (10%) | 12 (%) | Urea (4%) | Irg 2959 (0.5%) | HEAA (1%) | (V)-1 (2%) | 150 | 108 |
| Ex 3 | IC 3 | PD 3 | FW182 | 0.72 | RP C (5%), JONCRYL 631 | TPGmME (2%) / PG (10%) | 12 (%) | Urea (4%) | Irg 2959 (0.5%) | HEAA (1%) | (V)-1 (2%) | 87 | 63 |
| Ex 4 | IC 4 | PD 4 | FW182 | 0.72 | RP D (5%), JONCRYL 538 | TPGmME (2%) / PG (10%) | 12 (%) | Urea (4%) | Irg 2959 (0.5%) | HEAA (1%) | (V)-1 (2%) | 66 | 48 |
| Ex 5 | IC 5 | PD 5 | Special Black 6 | 0.55 | RPA(5%) | TPGmME (2%) / PG (10%) | 12 (%) | Urea (4%) | Irg 2959 (0.5%) | HEAA (1%) | (V)-1 (2%) | 170 | 94 |
| Ex 6 | IC 6 | PD 6 | Special Black 6 | 0.55 | RP B (5%) | TPGmME (2%) / PG (10%) | 12 (%) | Urea (4%) | Irg 2959 (0.5%) | HEAA (1%) | (V)-1 (2%) | 150 | 83 |
| Ex 7 | IC 7 | PD 7 | Special Black 6 | 0.55 | RP C (5%), JONCRYL 631 | TPGmME (2%) / PG (10%) | 12 (%) | Urea (4%) | Irg 2959 (0.5%) | HEAA (1%) | (V)-1 (2%) | 87 | 48 |
| C Ex 1 | IC 8 | PD 8 | Special Black 6 | 0.55 | RP D (5%), JONCRYL 538 | TPGmME (2%) / PG (10%) | 12 (%) | Urea (4%) | Irg 2959 (0.5%) | HEAA (1%) | (V)-1 (2%) | 66 | 36 |
| C Ex 2 | IC 9 | PD 9 | Nipex170 | 0.09 | RPA(5%) | TPGmME (2%) / PG (10%) | 12 (%) | Urea (4%) | Irg 2959 (0.5%) | HEAA (1%) | (V)-1 (2%) | 170 | 15 |

(continued)

| | Ink composition | | | | | | | | | | | | |
|---|---|---|---|---|---|---|---|---|---|---|---|---|---|
| | Ink composition | Pigment dispersion | | | Resin particles (solid content, mass%) | Solvent having SP value of less than 28 | | Other solvent | Initiator | Polymerizable compound | | Resin particles Tg (°C) | Product of TEA adsorption capacity and Tg (°C·meq/g) |
| | | Pigment dispersion | Carbon black pigment | TEA adsorption capacity (meq/g) | | Kind | Content (mass%) | | | | | | |
| C Ex 3 | IC 10 | PD 10 | #950 | 0.03 | RPA(5%) | TPGmME (2%) / PG | 12 (%) | Urea (4%) Urea (4%) | Irg 2959 (0.5%) | HEAA (1%) | (V)-1 (2%) | 170 | 5 |
| C Ex 4 | IC 11 | PD 11 | FW182 | 0.72 | None | TPGmME (2%) / PG (10%) | 12 (%) | Urea (4%) | Irg 2959 (0.5%) | HEAA (1%) | (V)-1 (2%) | 170 | 122 |
| C Ex 5 | IC 12 | PD 12 | FW182 | 0.72 | RPA(5%) | None | 0(%) | Urea (4%) | Irg 2959 (0.5%) | HEAA (1%) | (V)-1 (2%) | 170 | 122 |
| Ex 8 | IC 13 | PD 13 | FW182 | 0.72 | RP C (5%), JONCRYL 631 | TPGmME (2%) / PG (12%) | 14 (%) | Urea (4%) | Irg 2959 (0.5%) | HEAA (1%) | (V)-1 (2%) | 87 | 63 |
| Ex 9 | IC 14 | PD 14 | FW182 | 0.72 | RP C (5%), JONCRYL 631 | TPGmME (2%) / PG (5%) | 7 (%) | Urea (4%) | Irg 2959 (0.5%) | HEAA (1%) | (V)-1 (2%) | 87 | 63 |
| Ex 10 | IC 15 | PD 15 | FW182 | 0.72 | RP C (5%), JONCRYL 631 | TPGmME (2%) / PG (2%) | 4 (%) | Urea (4%) | Irg 2959 (0.5%) | HEAA (1%) | (V)-1 (2%) | 87 | 63 |
| Ex 11 | IC 16 | PD 16 | FW182 | 0.72 | RP C (5%), JONCRYL 631 | TPGmME (2%) / DPG (10%) | 12 (%) | Urea (4%) | Irg 2959 (0.5%) | HEAA (1%) | (V)-1 (2%) | 87 | 63 |
| Ex 12 | IC 17 | PD 17 | FW182 | 0.72 | RP C (5%), JONCRYL 631 | GP-250 (12%) | 12 (%) | Urea (4%) | Irg 2959 (0.5%) | HEAA (1%) | (V)-1 (2%) | 87 | 63 |
| Ex 13 | IC 18 | PD 18 | FW182 | 0.72 | RP C (5%), JONCRYL 631 | TEGmBE (12%) | 12 (%) | Urea (4%) | Irg 2959 (0.5%) | HEAA (1%) | (V)-1 (2%) | 87 | 63 |

(continued)

| | Ink composition | | | | | | | | | | | | |
|---|---|---|---|---|---|---|---|---|---|---|---|---|---|
| | Ink composition | Pigment dispersion | | | Resin particles (solid content, mass%) | Solvent having SP value of less than 28 | | Other solvent | Initiator | Polymerizable compound | | Resin particles Tg (°C) | Product of TEA adsorption capacity and Tg (°C·meq/g) |
| | | Pigment dispersion | Carbon black pigment | TEA adsorption capacity (meq/g) | | Kind | Content (mass%) | | | | | | |
| Ex 14 | IC 19 | PD 19 | FW182 | 0.72 | RP C (5%), JONCRYL 631 | TPGmME (2%) / DPG (5%) | 7 (%) | Glycerin (5%), urea (4%) | Irg 2959 (0.5%) | HEAA (1%) | (V)-1 (2%) | 87 | 63 |
| C Ex 6 | IC 20 | PD 20 | FW182 | 0.72 | RP A (5 %) | TPGmME (1%) | 1 (%) | Urea (4%) | Irg 2959 (0.5%) | HEAA (1%) | (V)-1 (2%) | 170 | 122 |
| C Ex 7 | IC 21 | PD 21 | FW182 | 0.72 | RP C (5%), RP C (5%), JONCRYL 631 | TPGmME (1%) | 1 (%) | Glycerin (10%), urea (4%) | Irg 2959 (0.5%) | HEAA (1%) | (V)-1 (2%) | 87 | 63 |
| C Ex 8 | IC 22 | PD 22 | FW182 | 0.72 | RP C (5%), JONCRYL 631 | None | 0 (%) | Glycerin (10%), urea (4%) | Irg 2959 (0.5%) | HEAA (1%) | (V)-1 (2%) | 87 | 63 |

The various abbreviations in Table 1 will be explained below.

- TPGmME: Tripropylene glycol monomethyl ether
- PG: Propylene glycol
- DPG: Dipropyelne glycol
- GP-250: POP(3) glyceryl ether (manufactured by Sanyo Chemical Industries, Ltd.)
- TEGmBE: Triethylene glycol monobutyl ether
- Irg2959: IRGACURE 2959 (manufactured by BASF Japan, Ltd.)
- HEAA: Hydroxyethyl acrylamide

Further, in Table 1, "Ex 1" to "Ex 14" respectively mean Examples 1 to Example 14, C Ex1 to C Ex8 respectively mean Comparative Examples 1 to 8, CI 1 to CI 22 respectively mean Ink Composition 1 to Ink Composition 22, and PD 1 to 22 respectively mean Pigment Dispersion 1 to Pigment Dispersion 22, and RP A to RP respectively mean resin particles A to resin particles C.

<Image Forming>

(Preparation of Treatment Liquid 1)

Components of the composition described below were mixed, and thus a treatment liquid 1 was prepared. The viscosity, surface tension and pH (25°C) of the treatment liquid 1 were as follows.

Viscosity: 2.5 mPa·s
Surface tension: 40 mN/m
pH: 1.0.

The surface tension was measured using a fully automated surface tensiometer, CBVP-Z, manufactured by Kyowa Interface Science Co., Ltd., and the viscosity was measured using a DV-III ULTRA CP, manufactured by Brookfield Engineering Laboratories, Inc. The pH was measured using a pH meter, HM-30R, manufactured by DKK-Toa Corp.
Furthermore, the components of the composition of a maintenance liquid 1 described below were mixed, and thus a maintenance liquid 1 was prepared.
**[0414]** - Composition of Treatment Liquid 1 -

- Malonic acid (manufactured by Wako Pure Chemical Industries, Ltd.) 25.0%
- Diethylene glycol monomethyl ether 20.0% (manufactured by Wako Pure Chemical Industries, Ltd.)
- EMULGEN P109 (manufactured by Kao Corp., nonionic surfactant) 1.0%
- Ion-exchanged water 54.0%

(Preparation of Maintenance Liquid)

Components of the composition described below were mixed, and thus a maintenance liquid was prepared. The maintenance liquid had a viscosity of 3.1 mPa·s (25°C), and the pH was adjusted to pH 8.5 (25°C) with nitric acid. The viscosity was measured at 25°C using a Viscometer TV-22 (manufactured by Toki Sangyo Co., Ltd.).

- Composition of Maintenance Liquid -

- DEGmBE 6.0% by mass (Exemplary compound of Formula (III) of the invention)
- DEG (moisture retaining agent) 24.0% by mass
- Imidazole (pKa = 7.0, basic compound) 0.5% by mass
- SNOWTEX XS 0.2% by mass (manufactured by Nissan Chemical Industries, Ltd., colloidal silica)
- BYK-024 (manufactured by BYK Chemie Japan K.K., defoamant) 0.01% by mass
- Surfactant (II)-8 3.0% by mass (Exemplary compound of Formula (II) of the invention)
- Ion-exchanged water Balance to make up 100% by mass in total

An inkjet head equipped with a silicon nozzle plate was prepared, and the ink compositions 1 to 22 obtained as described above were sequentially refilled in storage tanks connected to this inkjet head. The silicon nozzle plate

was provided in advance with a liquid repellent film using a fluorinated alkylsilane compound [(heptadecafluoro-1,1,2,2-tetrahydrodecyl)trichlorosilane]. As a recording medium, "OK TOPCOAT +" (basis weight: 104.7 g/$m^2$) manufactured by Oji Paper Co., Ltd. was cut to A5 size, the paper was fixed on a stage that was movable in a predetermined straight direction at 500 mm/second, and the stage temperature was maintained at 30°C. The treatment liquid 1 obtained as described above was applied thereon using a bar coater to obtain a thickness of about 1.2 μm, and the treatment liquid was dried for 2 seconds at 50°C immediately after application.

Thereafter, the inkjet head was disposed and fixed such that the direction of a line head in which nozzles were aligned would be inclined 75.7° with respect to a direction perpendicular to the direction of movement of the stage. Further, while the recording medium was moved at a constant speed in a sub-scan direction, ink was ejected over the entire surface of the recording medium in a line mode under the ejection conditions of an ink droplet amount of 2.8 p1, an ejection frequency of 25.5 kHz, and a resolution of 1200 dpi (dot per inch) x 1200 dpi, to thereby obtain a solid image. After the image was recorded, while the recording medium was heated with an infrared heater through the reverse side (back side) of the ink-ejected surface, the recorded surface was dried by blowing warm air at 120°C at a rate of 5 m/sec for 15 seconds using an air blower. After the drying of image, the image was cured by irradiating with UV light (metal halide lamp manufactured by Eye Graphics Co., Ltd., maximum irradiation wavelength: 365 nm) at a cumulative irradiation amount of 3 J/$cm^2$, and thus a print sample was obtained.

<Evaluation>

The ink compositions thus obtained were subjected to the following evaluations. The evaluation results are presented in Table 2.

[Scratch resistance of image]

For the evaluation samples obtained as described above, an unprinted TOKUBISHI ART DOUBLE-SIDED N (manufactured by Mitsubishi Paper Mills, Ltd.) was superimposed on the printed surface immediately after printing, a load of 150 kg/$m^2$ was applied thereon, and the evaluation sample was rubbed back and forth 10 times. Scratches produced on the printed image, and the degree of transfer of ink to the white background part of the unprinted recording medium (unused sample), were observed by visual inspection, and the samples were evaluated according to the following evaluation criteria. The evaluation results are presented in Table 2.

Grade C is a level with problems for practical use.

- Evaluation criteria -

AA: No scratches are recognized on the printed image, and there is no transfer of ink.
A: Slight scratches are recognized on the printed image, but there is almost no transfer of ink.
B: Some scratches are recognized on the printed image, and/or transfer of ink is recognized.
C: Noticeable scratches are recognized on the printed image, and/or noticeable transfer of ink is recognized.
D: Noticeable scratches are recognized on the printed image, and/or transfer of ink is observed by one reciprocating movement.

[Maintenance Characteristics]

The maintenance characteristics are evaluated by the following method.

A cloth for maintenance (TORAYSEE manufactured by Toray Co., Ltd.) was wound on a roller made of silicone rubber and having a rotating mechanism of ϕ 40 mm, and the contact pressure between the roller and the liquid repellent film head was adjusted to be 40 kPa. The head was rubbed at a speed of rotation of 60 rpm with a cloth soaked with each of the ink compositions 1 to 22 diluted with the maintenance liquid 1 [maintenance liquid 97.0%/ink 3.0%], and an evaluation was carried out based on the number of wipeouts required for wiping out ink contamination.

Rubbing for 60 seconds was considered one time (one rubbing).

[Evaluation of Streaks]

The head was rubbed once (for 60 seconds) under the same conditions as the conditions for the evaluation of maintenance characteristic, a printing test was carried out using the head after being rubbed, and an evaluation of streaks on the images thus formed was carried out. The evaluation results are presented in Table 2.

Grade C is a level with problems for practical use.
- Evaluation Criteria -
AA: There were no visible streaks on the outputted image.
A: The total number of white streaks and black streaks is 2 or less.
AB: The total number of white streaks and black streaks is 3.
B: The total number of white streaks and black streaks is 4.
C: The total number of white streaks and black streaks is in a range of from 5 to 8.
D: The total number of white streaks and black streaks is 9 or more.

[Evaluation of Streaks upon Actual Use]

The maintenance time was determined based on the evaluation results for maintenance performance, and the head was rubbed under the same conditions as the conditions for the evaluation of maintenance characteristics, for a predetermined maintenance time. Subsequently, a printing test was carried out using the head, and an evaluation of streaks on the images thus formed was carried out. For the evaluation criteria, the same criteria as those for the evaluation of streaks were used. The evaluation results are presented in Table 2.

Table 2

| | Evaluation results | | | | |
|---|---|---|---|---|---|
| | Scratch resistance of image | Maintenance characteristics (number of wipeouts required for wiping ink contamination) | Evaluation of streaks (contact pressure 40 kPa, maintenance for 60 seconds at all levels) | Maintenance time for evaluation of streaks upon actual use | Evaluation of streaks upon actual use (after maintenance at contact pressure of 40 kPa), Maintenance time means time period corresponding to maintenance performance |
| Ex 1 | A | 2.0 times | AA | 120 seconds | AA |
| Ex 2 | A | 2.0 times | AA | 120 seconds | AA |
| Ex 3 | AA | 3.0 times | AA | 180 seconds | A |
| Ex 4 | B | 4.5 times | AA | 270 seconds | B |
| Ex 5 | B | 2.2 times | A | 132 seconds | A |
| Ex 6 | A | 2.3 times | A | 138 seconds | AB |
| Ex 7 | A | 3.1 times | A | 186 seconds | B |
| C Ex 1 | B | 5.2 times | A | 312 seconds | C |
| C Ex 2 | B | 2.5 times | D | 150 seconds | D |
| C Ex 3 | B | 2.5 times | D | 150 seconds | D |
| C Ex 4 | D | 1.0 times | A | 60 seconds | A |
| CEx5 | C | 1.5 times | AA | 90 seconds | AA |
| Ex 8 | A | 3.2 times | AA | 192 seconds | A |
| Ex 9 | A | 2.8 times | AA | 168 seconds | AA |
| Ex 10 | B | 2.7 times | AA | 162 seconds | AA |
| Ex 11 | AA | 3.1 times | AA | 186 seconds | A |
| Ex 12 | A | 3.1 times | AA | 186 seconds | A |
| Ex 13 | AA | 3.3 times | AA | 198 seconds | A |
| Ex 14 | B | 2.5 times | AA | 150 seconds | AA |
| CEx6 | C | 1.6 times | AA | 96 seconds | AA |
| CEx7 | D | 1.5 times | AA | 90 seconds | AA |

(continued)

| | Evaluation results | | | | |
|---|---|---|---|---|---|
| | Scratch resistance of image | Maintenance characteristics (number of wipeouts required for wiping ink contamination) | Evaluation of streaks (contact pressure 40 kPa, maintenance for 60 seconds at all levels) | Maintenance time for evaluation of streaks upon actual use | Evaluation of streaks upon actual use (after maintenance at contact pressure of 40 kPa), Maintenance time means time period corresponding to maintenance performance |
| CEx8 | D | 1.4 times | AA | 84 seconds | AA |

As shown below Table 2, the inks for inkjet recording of Examples, each of which contains a carbon black pigment having a TEA adsorption capacity of 0.5 meq/g or more, has a product of the TEA adsorption capacity of the carbon black and the Tg of the resin particles is 40 °C·meq/g or more, and contains a water-soluble organic solvent having an SP value of less than 28 at a content of 2% by mass or more, exhibited excellent scratch resistance of image and excellent ink maintenance performance, and favorable results were obtained for the evaluation of streaks and the evaluation of streaks upon actual use.

The printed samples obtained by using the ink compositions of Examples all had high resolution images formed thereon. It is speculated that since the ink compositions of Examples make the liquid repellent film not easily deteriorated as shown in Table 2, ejection of the ink composition from the nozzle plate is stabilized.

Exemplary embodiments of the invention include, but not limited to, the following.

<1> An ink for inkjet recording, the ink comprising:

water,
a coated carbon black pigment that includes a carbon black pigment having a TEA adsorption capacity of 0.5 meq/g or more and a resin that coats the carbon black pigment,
resin particles, and
a water-soluble organic solvent having an SP value of less than 28 at a content of 2% by mass or more with respect to a total mass of the ink for inkjet recording,
wherein a product of a glass transition temperature (Tg) of the resin particles and the TEA adsorption capacity of the carbon black pigment is 40 °C·meq/g or more.

<2> The ink for inkjet recording according to <1>, wherein the carbon black pigment in the coated carbon black pigment has an average primary particle diameter of from 12 nm to 25 nm.
<3> The ink for inkjet recording according to <1> or <2>, wherein the coated carbon black pigment is an encapsulated pigment in which a mass ratio of the resin coating the carbon black pigment and the carbon black pigment (resin:pigment) is from 1:5 to 1:1.
<4> The ink for inkjet recording according to any one of <1> to <3>, wherein the resin coating the carbon black pigment includes at least a structural unit derived from benzyl methacrylate and a structural unit derived from methyl methacrylate.
<5> The ink for inkjet recording according to any one of <1> to <4>, comprising the coated carbon black pigment in an amount of from 1.0% by mass to 4.0% by mass with respect to the total mass of the ink for inkjet recording.
<6> The ink for inkjet recording according to any one of <1> to <5>, wherein a content mass ratio of the resin particles with respect to the coated carbon black pigment is from 0.5 to 10.0.
<7> The ink for inkjet recording according to any one of <1> to <6>, further comprising a polymerizable compound and a polymerization initiator.
<8> An ink set comprising the ink for inkjet recording according to any one of <1> to <7>, and a maintenance liquid comprising an organic solvent and water.
<9> The ink set according to <8>, further comprising a treatment liquid.
<10> An image forming method, comprising ejecting the ink for inkjet recording according to any one of <1> to <7> onto a recording medium using an inkjet head having a liquid repellent film.
<11> The image forming method according to <10>, wherein the liquid repellent film includes a fluorinated alkyl-based compound.
<12> The image forming method according to <10> or <11>, further comprising applying a maintenance liquid that

includes an organic solvent and water.
<13> The image forming method according to any one of <10> to <12>, further comprising applying a treatment liquid.
<14> A maintenance method, comprising ejecting the ink for inkjet recording according to any one of <1> to <7> using an inkjet head having a liquid repellent film, and then wiping the ink remaining on the liquid repellent film.

According to the invention, an ink for inkjet recording and an ink set are provided with which excellent maintenance performance can be exhibited while scratch resistance of images can be favorably maintained, and deterioration of a liquid repellent film provided on the surface of an inkjet head can be stably suppressed. Furthermore, according to the invention, an image forming method with which images with fewer defects such as streaks can be stably formed using the ink for inkjet recording, and a maintenance method are provided.

All publications, patent applications, and technical standards mentioned in this specification are herein incorporated by reference to the same extent as if such individual publication, patent application, or technical standard was specifically and individually indicated to be incorporated by reference. It will be obvious to those having skill in the art that many changes may be made in the above-described details of the preferred embodiments of the invention. It is intended that the scope of the invention be defined by the following claims and their equivalents.

## Claims

1. An ink for inkjet recording, the ink comprising:

   water,
   a coated carbon black pigment that includes a carbon black pigment having a TEA adsorption capacity of 0.5 meq/g or more and a resin that coats the carbon black pigment,
   resin particles, and
   a water-soluble organic solvent having an SP value of less than 28 at a content of 2% by mass or more with respect to a total mass of the ink for inkjet recording,
   wherein a product of a glass transition temperature of the resin particles and the TEA adsorption capacity of the carbon black pigment is 40 °C·meq/g or more.

2. The ink for inkjet recording according to claim 1, wherein the carbon black pigment in the coated carbon black pigment has an average primary particle diameter of from 12 nm to 25 nm.

3. The ink for inkjet recording according to claim 1 or 2, wherein the coated carbon black pigment is an encapsulated pigment in which a mass ratio of the resin coating the carbon black pigment and the carbon black pigment (resin:pigment) is from 1:5 to 1:1.

4. The ink for inkjet recording according to any one of claims 1 to 3, wherein the resin coating the carbon black pigment includes at least a structural unit derived from benzyl methacrylate and a structural unit derived from methyl methacrylate.

5. The ink for inkjet recording according to any one of claims 1 to 4, comprising the coated carbon black pigment in an amount of from 1.0% by mass to 4.0% by mass with respect to the total mass of the ink for inkjet recording.

6. The ink for inkjet recording according to any one of claims 1 to 5, wherein a content mass ratio of the resin particles with respect to the coated carbon black pigment is from 0.5 to 10.0.

7. The ink for inkjet recording according to any one of claims 1 to 6, further comprising a polymerizable compound and a polymerization initiator.

8. An ink set comprising the ink for inkjet recording according to any one of claims 1 to 7, and a maintenance liquid comprising an organic solvent and water.

9. The ink set according to claim 8, further comprising a treatment liquid.

10. An image forming method, comprising ejecting the ink for inkjet recording according to any one of claims 1 to 7 onto a recording medium using an inkjet head having a liquid repellent film.

**11.** The image forming method according to claim 10, wherein the liquid repellent film includes a fluorinated alkyl-based compound.

**12.** The image forming method according to claim 10 or 11, further comprising applying a maintenance liquid that includes an organic solvent and water.

**13.** The image forming method according to any one of claims 10 to 12, further comprising applying a treatment liquid.

**14.** A maintenance method, comprising ejecting the ink for inkjet recording according to any one of claims 1 to 7using an inkjet head having a liquid repellent film, and then wiping the ink remaining on the liquid repellent film.

FIG.1

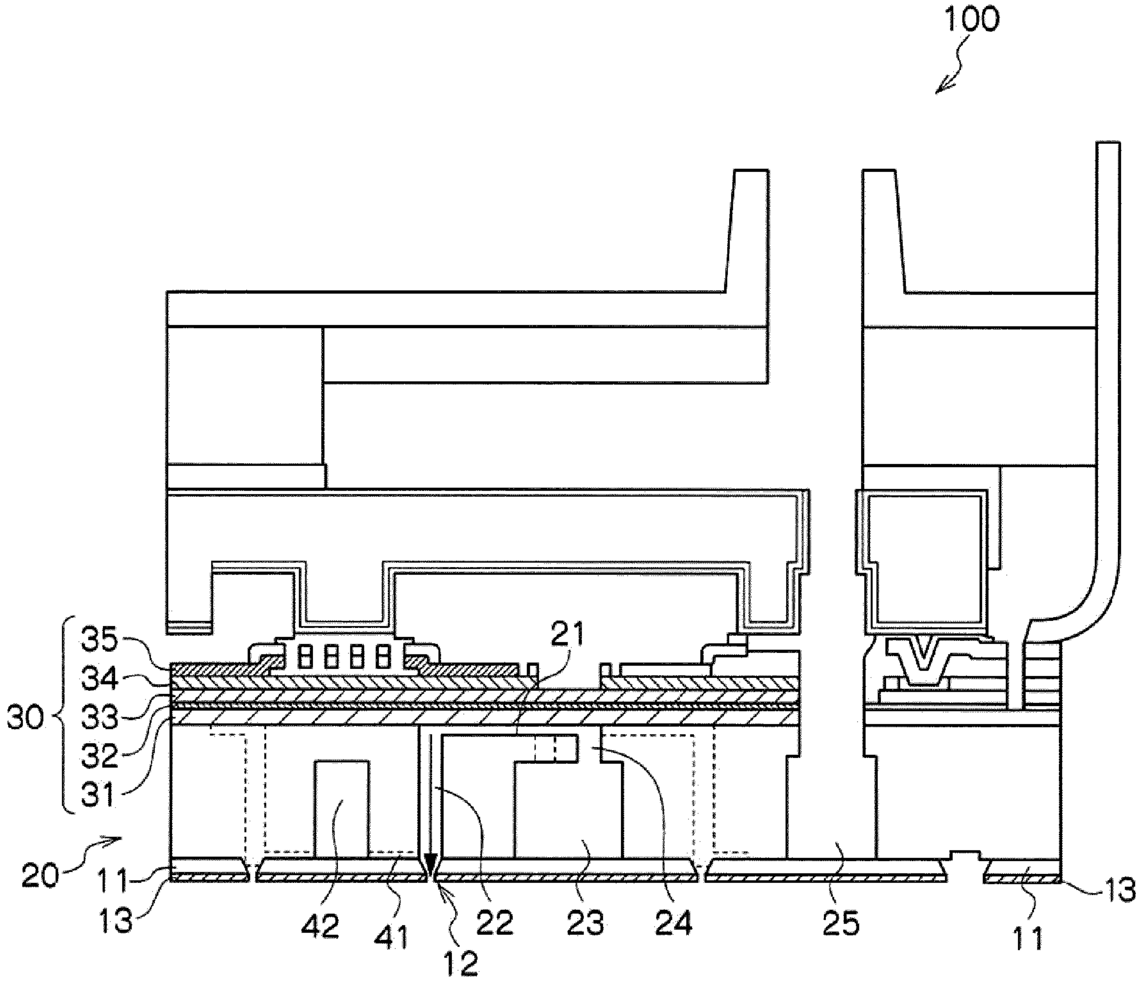

FIG.2

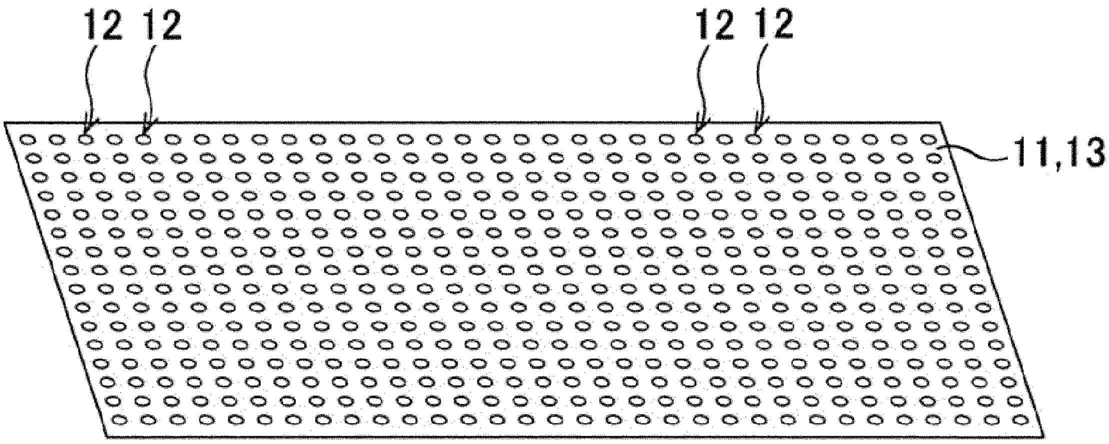

Europäisches Patentamt
European Patent Office
Office européen des brevets

# EUROPEAN SEARCH REPORT

Application Number
EP 14 18 2413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 412 537 A1 (FUJIFILM CORP [JP]) 1 February 2012 (2012-02-01) * claim 1 * * page 11, paragraphs 93,94,97; example 1 * * page 6, paragraphs 43,44,49 * * page 12, paragraph 98 * ----- | 1-6,8-14 | INV. C09D11/037 C09D11/10 C09D11/324 C09D11/54 |
| X | EP 2 228 223 A1 (FUJIFILM CORP [JP]) 15 September 2010 (2010-09-15) * page 17, paragraph 165 - page 18, paragraphs 166, 167, 168, 171 * * page 20, paragraph 183 * * page 21, paragraph 188-190 * * page 10, paragraph 90-93 * ----- | 1-14 | |
| X | EP 2 484 728 A1 (FUJIFILM CORP [JP]) 8 August 2012 (2012-08-08) * claim 1 * * page 46, paragraph 529-538; example 1 * * page 43, paragraph 482 * * page 17, paragraph 176-178 * ----- | 1-14 | TECHNICAL FIELDS SEARCHED (IPC) |
| X,D | JP 2009 190379 A (FUJIFILM CORP) 27 August 2009 (2009-08-27) * paragraphs [0021], [0022], [0028] - [0032], [0035], [0042], [0075] * * claims 1,2 * * examples * ----- | 1-3,5,6,8 | C09D |
| X,D | JP 2010 126602 A (KAO CORP) 10 June 2010 (2010-06-10) * claim 1 * * paragraph [0049]; example 1 * * paragraphs [0011] - [0022], [0034], [0042] * * paragraphs [0043] - [0044], [0051] - [0052] * ----- -/-- | 1-14 | |

The present search report has been drawn up for all claims

1

| Place of search | Date of completion of the search | Examiner |
|---|---|---|
| Munich | 14 October 2014 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 14 18 2413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 109733 A (DAINIPPON INK & CHEMICALS) 18 April 2000 (2000-04-18)<br>* paragraphs [0098] - [0101]; example 1 *<br>* paragraphs [0083] - [0087], [0109], [0110] *<br>----- | 1-3,5-8, 10-14 | |
| X | WO 2012/176915 A1 (FUJIFILM CORP [JP]; SHIMOHARA NORIHIDE [JP])<br>27 December 2012 (2012-12-27)<br>* page 38, paragraph 218-222 *<br>* page 40, paragraph 229-237 *<br>* pages 43,44; examples 9,14; table 2 *<br>----- | 1-3,6-8, 10-14 | |
| X | US 2012/141679 A1 (KAMADA TOSHIHIRO [JP] ET AL) 7 June 2012 (2012-06-07)<br>* page 18; example 10; table 1 *<br>* page 12, paragraph 177-183 *<br>----- | 1-3,5-14 | |
| X | EP 2 489 707 A1 (FUJIFILM CORP [JP])<br>22 August 2012 (2012-08-22)<br>* page 33, paragraph 201 *<br>* table 1 *<br>* page 31, paragraph 192 *<br>* page 32, paragraph 198 *<br>* page 41, paragraph 205-208 *<br>* page 42, paragraph 211 *<br>* page 44, paragraph 222 *<br>* page 41, paragraph 209 - page 42 *<br>----- | 1-14 | TECHNICAL FIELDS SEARCHED (IPC) |

1

The present search report has been drawn up for all claims

| Place of search | Date of completion of the search | Examiner |
|---|---|---|
| Munich | 14 October 2014 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 18 2413

This annex lists the patent family members relating to the patent documents cited in the above-mentioned European search report. The members are as contained in the European Patent Office EDP file on
The European Patent Office is in no way liable for these particulars which are merely given for the purpose of information.

14-10-2014

| Patent document cited in search report | Publication date | Patent family member(s) | Publication date |
|---|---|---|---|
| EP 2412537 A1 | 01-02-2012 | CN 102343716 A | 08-02-2012 |
| | | EP 2412537 A1 | 01-02-2012 |
| | | JP 2012030534 A | 16-02-2012 |
| | | KR 20120024389 A | 14-03-2012 |
| | | US 2012026264 A1 | 02-02-2012 |
| EP 2228223 A1 | 15-09-2010 | AT 548197 T | 15-03-2012 |
| | | EP 2228223 A1 | 15-09-2010 |
| | | JP 5191420 B2 | 08-05-2013 |
| | | JP 2010208108 A | 24-09-2010 |
| | | US 2010225697 A1 | 09-09-2010 |
| EP 2484728 A1 | 08-08-2012 | NONE | |
| JP 2009190379 A | 27-08-2009 | JP 4964165 B2 | 27-06-2012 |
| | | JP 2009190379 A | 27-08-2009 |
| JP 2010126602 A | 10-06-2010 | JP 5330814 B2 | 30-10-2013 |
| | | JP 2010126602 A | 10-06-2010 |
| JP 2000109733 A | 18-04-2000 | JP 4501038 B2 | 14-07-2010 |
| | | JP 2000109733 A | 18-04-2000 |
| WO 2012176915 A1 | 27-12-2012 | CN 103619973 A | 05-03-2014 |
| | | EP 2723823 A1 | 30-04-2014 |
| | | JP 2013006968 A | 10-01-2013 |
| | | US 2014104357 A1 | 17-04-2014 |
| | | WO 2012176915 A1 | 27-12-2012 |
| US 2012141679 A1 | 07-06-2012 | JP 5241810 B2 | 17-07-2013 |
| | | JP 2012117015 A | 21-06-2012 |
| | | US 2012141679 A1 | 07-06-2012 |
| EP 2489707 A1 | 22-08-2012 | CN 102643568 A | 22-08-2012 |
| | | EP 2489707 A1 | 22-08-2012 |
| | | JP 2012171987 A | 10-09-2012 |
| | | KR 20120101298 A | 13-09-2012 |
| | | US 2012212536 A1 | 23-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1060328 JP
- JP 2010126602 A
- JP 2005041994 A
- JP 2006273891 A
- JP 2009084494 A
- JP 2009191134 A
- JP 2009190379 A
- JP H10140065 A
- JP 2005307198 A
- JP 2011063777 A
- JP H08169172 A
- JP H0827693 A
- JP H02276670 A
- JP H07276789 A
- JP H09323475 A
- JP S62238783 A
- JP H10153989 A
- JP H10217473 A
- JP H10235995 A
- JP H10217597 A
- JP H10337947 A
- JP 2003306623 A
- JP 2011073295 A
- JP 2011073339 A
- JP 2011111527 A
- JP 2500816 B
- JP 2525536 B
- JP 2000282240 A
- JP 2687060 B
- JP 2874391 B
- JP 2729714 B
- JP 2555797 B
- JP 2013018846 A


### Non-patent literature cited in the description


- Solubility Parameter Values. Polymer Handbook
- **R.F. FEDORS.** *Polymer Engineering Science,* 1974, vol. 14, 147-154
- *Seni to Kogyo,* 2004, vol. 60 (7), 376
- **R.F. FEDORS.** *Polymer Engineering Science,* 1967, vol. 14, 147-154